# EUROPEAN PATENT APPLICATION

(11) **EP 4 838 986 A1**
(43) Date of publication of application: **11.11.2026**
(21) Application number: 24914673.9
(22) Date of filing: 05.01.2024
(51) Int. Cl.: H04W 72/21

(54) **COMMUNICATION METHOD, APPARATUS AND DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: Penza, Giancarlo
(86) International application number: PCT/CN2024/070915
(87) International publication number: WO 2025/145444

(57) **Abstract**

Embodiments of the present application provide a communication method, applied to a first terminal device. The method comprises: receiving first information from a network device, wherein the first information is used for the first terminal device to send first sending content to an Ambient Internet of Things (A-IoT) device, and the first sending content comprises one or more of the following: a carrier, data, and a signal. In the method, the first terminal device may send said one or more of the carrier, data, and signal to the A-IoT device on the basis of the first information from the network device. That is to say, the network device can schedule/control the communication between the first terminal device and the A-IoT device by sending the first information to the first terminal device.

## Description

### TECHNICAL FIELD

Embodiments of the disclosure relate to the technical field of communications, and particularly to, a communication method, apparatus and device, a chip, and a storage medium.

### BACKGROUND

At present, a terminal device can perform uplink or sidelink transmission according to scheduling by a network device (such as base station). But in a low-power Internet of Things (IoT) communication scenario, the terminal device needs to send a signal to an Ambient IoT (A-IoT) device or receive a signal reflected by the A-IoT device. Since a link (i.e., A-IoT link) between the terminal device and the A-IoT device does not belong to an uplink or sidelink, it is an unsolved problem how the network device should schedule/control the terminal device to communicate with the A-IoT device in the low-power IoT communication scenario.

### SUMMARY

Embodiments of the disclosure provide a communication method, apparatus and device, a chip, and a storage medium.

In a first aspect, embodiments of the disclosure provide a communication method, applied to a first terminal device. The method includes: first information is received from a network device. The first information is used by the first terminal device to transmit a first transmission content to an Ambient Internet of Things (A-IoT) device, the first transmission content including one or more of: a carrier, data, and a signal.

In a second aspect, embodiments of the disclosure provide a communication method, applied to a network device. The method includes: first information is transmitted to a first terminal device. The first information is used by the first terminal device to transmit a first transmission content to an A-IoT device, the first transmission content including one or more of: a carrier, data, and a signal.

In a third aspect, embodiments of the disclosure provide a communication method, applied to a second terminal device. The method includes: second information is received from a network device. The second information is used by the second terminal device to receive a reflection signal from an A-IoT device.

In a fourth aspect, embodiments of the disclosure provide a communication method, applied to a network device. The method includes: second information is transmitted to a second terminal device. The second information is used by the second terminal device to receive a reflection signal from an A-IoT device.

In a fifth aspect, embodiments of the disclosure provide a communication apparatus. The apparatus includes a first receiving unit configured to receive first information from a network device. The first information is used by the apparatus to transmit a first transmission content to an A-IoT device, the first transmission content including one or more of: a carrier, data, and a signal.

In a sixth aspect, embodiments of the disclosure provide a communication apparatus. The apparatus includes a first transmitting unit configured to transmit first information to a first terminal device. The first information is used by the first terminal device to transmit a first transmission content to an A-IoT device, the first transmission content including one or more of: a carrier, data, and a signal.

In a seventh aspect, embodiments of the disclosure provide a communication apparatus. The apparatus includes a second receiving unit configured to receive second information from a network device. The second information is used by the apparatus to receive a reflection signal from an A-IoT device.

In an eighth aspect, embodiments of the disclosure provide a communication apparatus. The apparatus includes a second transmitting unit configured to transmit second information to a second terminal device. The second information is used by the second terminal device to receive a reflection signal from an A-IoT device.

In a ninth aspect, embodiments of the disclosure provide a communication device. The device includes: a memory configured to store a computer program; a processor, connected to the memory, configured to invoke and execute the computer program from the memory to perform the method described in any one of the first to fourth aspects; and a transceiver configured to receive and send signals in the process of sending and receiving information to or from another device.

In a tenth aspect, embodiments of the disclosure provide a chip. The chip includes a processor configured to invoke and execute a computer program from a memory, to cause a device mounted with the chip to perform the method described in any one of the first to fourth aspects; and a transceiver configured to receive and send signals in the process of sending and receiving information to or from the device or chip.

In an eleventh aspect, embodiments of the disclosure provide a computer-readable storage medium for storing a computer program that causes a computer to perform the method described in any one of the first to fourth aspects.

According to the technical solutions above, the first terminal device may transmit one or more of a carrier, data and a signal to the A-IoT device based on the first information from the network device. That is, the network device may implement scheduling/control of communication between the first terminal device and the A-IoT device by transmitting the first information to the first terminal device.

### BRIEF DESCRIPTION OF THE DRAWINGS

The accompanying drawings described herein are intended to provide a further understanding of the disclosure, and constitute a part of the disclosure, and the schematic embodiments of the disclosure and the description thereof are intended to explain the disclosure, and do not constitute an undue limitation of the disclosure. In the drawings:
FIG. 1 is a schematic diagram showing an application scenario according to an embodiment of the disclosure.
FIG. 2 is a first schematic diagram of a communication scenario applicable to embodiments of the disclosure.
FIG. 3 is a second schematic diagram of a communication scenario applicable to embodiments of the disclosure.
FIG. 4 is a first schematic flowchart of a communication method according to an embodiment of the disclosure.
FIG. 5 is a second schematic flowchart of a communication method according to an embodiment of the disclosure.
FIG. 6 is a first schematic structural diagram of a communication apparatus according to an embodiment of the disclosure.
FIG. 7 is a second schematic structural diagram of a communication apparatus according to an embodiment of the disclosure.
FIG. 8 is a third schematic structural diagram of a communication apparatus according to an embodiment of the disclosure.
FIG. 9 is a fourth schematic structural diagram of a communication apparatus according to an embodiment of the disclosure.
FIG. 10 is a schematic structural diagram of a communication device according to an embodiment of the disclosure.
FIG. 11 is a schematic structural diagram of a chip according to an embodiment of the disclosure.
FIG. 12 is a schematic block diagram of a communication system according to an embodiment of the disclosure.

### DETAILED DESCRIPTION

Hereinafter, the technical solutions in the embodiments of the disclosure will be described with reference to the accompanying drawings in the embodiments of the disclosure, and it is apparent that the described embodiments are part of the embodiments of the disclosure, but not all the embodiments. Based on the embodiments in the disclosure, all other embodiments obtained by those skilled in the art without creative efforts fall within the scope of protection of the disclosure.

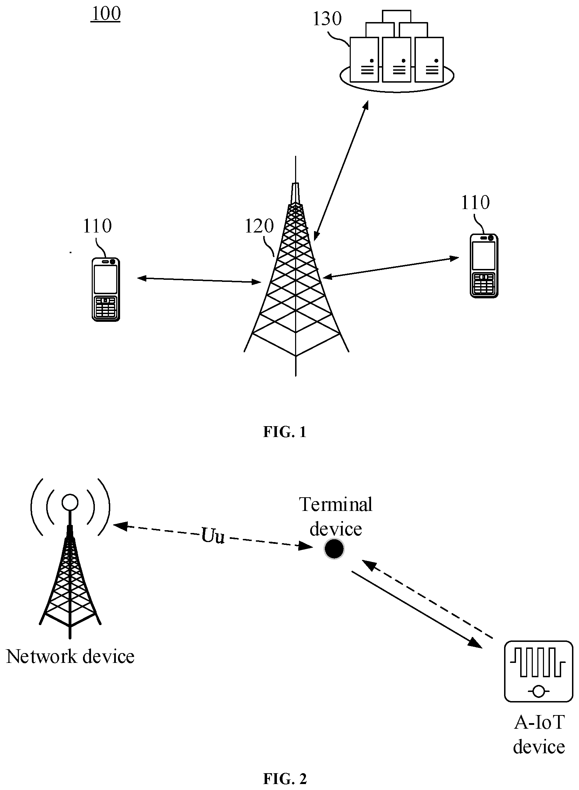

FIG. 1 is a schematic diagram showing an application scenario according to an embodiment of the disclosure.

As shown in FIG. 1, the communication system 100 includes a terminal device 110 and a network device 120. The network device 120 may communicate with the terminal device 110 through an air interface. Multi-service transmission is supported between the terminal device 110 and the network device 120.

It is to be understood that the embodiments of the disclosure are illustrative only with the communication system 100 but are not limited thereto. That is, the technical solutions of the embodiments of the disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), a 6G communication system, or a future communication system, etc.

In the communication system 100 illustrated in FIG. 1, the network devices 120 may be an access network device communicating with the terminal device 110. The access network device may provide communication coverage for a particular geographic area and may communicate with the terminal device 110 (e.g. UE) located within a coverage area.

The network device 120 may be an Evolutionary Node B (eNB or eNodeB) in a Long Term Evolution (LTE) system, or a Next Generation Radio Access Network (NG RAN) device, or a base station (gNB) in an NR system, or a base station in a 6G system, or a wireless controller in a Cloud Radio Access Network (CRAN); or the network device 120 may be a relay station, an access point, an in-vehicle device, a wearable device, a hub, a switch, a bridge, a router, or a network device in a future evolving Public Land Mobile Network (PLMN).

The terminal device 110 may be any terminal device including but not limited to a terminal device in wired or wireless connection with the network device 120 or other terminal devices.

For example, the terminal device 110 may refer to an access terminal, a User Equipment (UE), a user unit, a user station, a mobile station, a remote station, a remote terminal, a mobile device, a user terminal, a terminal device, a wireless communication device, a user agent or a user apparatus. The access terminal may be a cellular telephone, a cordless telephone, a Session Initiation Protocol (SIP) telephone, an Internet of Things (IoT) device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network, a terminal device in a 6G network or a terminal device in a future evolution network, etc.

The terminal device may be used for Device to Device (D2D) communication.

The wireless communication system 100 may also include a core network device 130 that communicates with the network device 120. The core network device may be a 5G Core (5GC) device, for example, an Access and Mobility Management Function (AMF), for another example, an Authentication Server Function (AUSF), for another example, a User Plane Function (UPF), and for another example, a Session Management Function (SMF). In some embodiments, the core network device 130 may also be an Evolved Packet Core (EPC) device of the LTE network, for example, a Session Management Function + Core Packet Gateway (SMF+PGW-C) device. It is to be understood that SMF+PGW-C can achieve the same functions as SMF and PGW-C simultaneously. In the process of network evolution, the above core network device may also be called by other names, or a new network entity may be formed by dividing the functions of the core network, which is not limited in the embodiments of the disclosure.

Various functional units in the communication system 100 may also establish connections therebetween through a next generation (NG) interface to realize communication.

For example, the terminal device establishes an air interface connection with the access network device through an NR interface for transmitting user plane data and control plane signaling. The terminal device may establish a control plane signaling connection with an AMF through NG interface 1 (abbreviated as N1). The access network device such as a next generation radio access base station (gNB) may establish a user plane data connection with a UPF through an NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may interact user plane data with a data network through NG interface 6 (abbreviated as N6). The AMF may establish control plane signaling connection with the SMF through NG interface 11 (abbreviated as N11). The SMF may establish a control plane signaling connection with a PCF through NG interface 7 (abbreviated as N7).

FIG. 1 exemplarily illustrates one network device, one core network device and two terminal devices. Optionally, the communication system 100 may include multiple network devices, and other numbers of terminal devices may be included within the coverage of each network device, which is not limited by the embodiments of the disclosure. Optionally, the communication system 100 may also include other devices, such as an A-IoT device, or the like.

It is to be noted that FIG. 1 is only illustrative of the system to which the disclosure is applied, and of course, the method illustrated in the embodiments of the disclosure can also be applied to other systems. In addition, the terms "system" and "network" are often used interchangeably herein. The term "and/or" herein is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or". It should be further understood that the "indication" mentioned in the embodiments of the disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should be further understood that the term "correspond" mentioned in the embodiments of the disclosure may mean that there is a direct correspondence or an indirect correspondence between two items, may also mean that there is an association relationship between the two items, and may also be a relationship such as indication and being indicated, configuration and being configured, etc. It should be further understood that the "predefined" or "predefined rule" mentioned in the embodiments of the disclosure may be achieved by pre-storing corresponding codes, tables or other means used for indicating relevant information in devices (e.g., including terminal devices and network devices), and the specific implementation thereof is not limited in the disclosure. For example, "predefined" may refer to what is defined in a protocol. It should be further understood that in the embodiments of the disclosure, the "protocol" may be a standard protocol in the communication field. For example, the protocol may include an LTE protocol, an NR protocol, and related protocols applied in future communication systems, which are not limited in the disclosure.

In order to facilitate understanding of the technical solutions of the embodiments of the disclosure, the related technologies of the embodiments of the disclosure will be described below, and the related technologies below, as optional solutions, can be arbitrarily combined with the technical solutions of the embodiments of the disclosure, and all combinations thereof belong to the scope of protection of the embodiments of the disclosure.

### 1. Classification of zero-power terminals

Based on the energy source and usage mode of zero-power terminals, zero-power terminals can be divided into types as follows.

### 1) Passive zero-power terminal

Zero-power terminals do not require internal batteries. When a zero-power terminal is in proximity to a network device (such as an interrogator in a Radio Frequency Identification (RFID) system), it operates within a near-field range formed by radiation from an antenna of the network device. Therefore, the antenna of the zero-power terminal generates an induced current through electromagnetic induction, and the induced current drives a low-power chip circuit of the zero-power terminal to implement demodulation of a forward link signal and modulation of a backward link signal. For a backscattering link, zero-power terminals can perform signal transmission using backscattering methods.

As can be seen, passive zero-power terminals do not need built-in batteries to drive forward links or backward links, and are truly zero-power terminals.

Passive zero-power terminals do not require batteries, and radio frequency circuits and baseband circuits thereof are very simple. For example, they do not require Low Noise Amplifier (LNA), Power Amplifier (PA), crystal oscillators, Analog-to-Digital Converters (ADCs) and other devices. They are small in size, light in weight, and very cheap, have long service life and many other advantages.

### 2) Semi-passive zero-power terminal

The semi-passive zero-power terminal itself is not equipped with a conventional battery, but can use a radio frequency energy harvesting module to harvest radio wave energy, and at the same time store the harvested energy in an energy storage unit (for example, a capacitor). After obtaining the energy, the energy storage unit can drive a low-power chip circuit of the the zero-power terminal. In this way, the demodulation of forward link signals and the modulation of backward link signals are implemented. For a backscattering link, zero-power terminals can perform signal transmission using backscattering.

As can be seen, the semi-passive zero-power terminal does not need a built-in battery to drive either a forward link or a backward link. The energy stored by the capacitor is used in its operation, but the energy comes from the radio energy collected by the radio frequency energy harvesting module, and thus the semi-passive zero-power device is a real zero-power device.

The semi-passive zero-power terminal inherits many advantages of the passive zero-power terminal, thus it has advantages such as small size, light weight, very cheap price, and long service life.

### 3) Active zero-power terminal

Zero-power terminals used in some scenarios can also be active zero-power terminals, and such zero-power terminals can have built-in batteries. The battery is used to drive a low-power chip circuit of the zero-power terminal. In this way, the demodulation of forward link signals and the modulation of backward link signals are implemented. However, for backscatter links, zero-power devices can use backscattering to transmit signals. Therefore, the zero power consumption of such a terminal devices is mainly reflected in the fact that the signal transmission of the backward link does not need to consume the power of the terminal itself, but uses backscattering.

The active zero-power terminal is powered by a built-in battery to increase the communication distance of the zero-power terminal and improve the reliability of communication. Therefore, it can be applied in some scenarios that have relatively high requirements on communication distance, reading delay, etc.

### 2. Cellular passive Internet of Things (IoT)

As 5th Generation (5G) industry applications expand, the variety of connected devices and use cases continues to grow, driving stricter requirements for communication terminal costs and power consumption. Battery-free, low-cost passive IoT devices have emerged as a key technology for cellular IoT, enriching the types and quantity of terminals connected to 5G networks and enabling true ubiquitous connectivity Passive IoT devices can be based on existing zero-power devices and extend on this basis to be suitable for cellular IoT.

### 3. Device based on ambient energy

In NR systems and WiFi systems, battery-free and low cost of devices can support low-cost mass deployment and maintenance-free operation of IoT devices. Currently, research is underway to enable support for Internet of Things (IoT) devices powered by ambient energy in both New Radio (NR) systems and Wi-Fi networks. These devices are referred to as Ambient IoT (A-IoT) devices. The energy required for their operation comes from environmental energy collection. The environmental energy sources can be wireless signals, solar energy, thermal energy etc. Such devices are similar to passive or semi-passive devices in zero power communication. The A-IoT device collects ambient energy and stores it in an energy storage unit. After the energy storage unit obtains enough energy, it can drive the low-power circuit to operate for signal demodulation in the forward link and signal modulation and transmission in the backward link.

In the 3GPP Radio Access Network (RAN), research projects on Ambient IoT (A-IoT) devices have been initiated, categorizing A-IoT devices into three primary types-Device A, Device B, and Device C-each with distinct levels of complexity and communication capabilities.

Device A: a device that does not have energy storage capabilities and cannot independently transmit signals, that is, it adopts backscattering transmission mode.

Device B: a device that has energy storage capabilities and cannot independently transmit signals, that is, the backscatter signal can be amplified by using the stored energy in the backscattering transmission mode.

Device C: a device that has energy storage capabilities and can independently transmit signals, that is, it has active transmission capabilities.

The device A has the lowest complexity and power consumption, and the power consumption can be as low as 1µW, but its communication distance is limited, generally only a few meters. The device A requires the network device to provide carrier signals for backscattering transmission. The device C generally has a large-capacity capacitor to store energy from the environment. The power consumption can support several hundred µW, active signal transmission is supported, and the device C has a large communication distance. Because the device C can actively transmit, it does not need the network device to provide a carrier signal. The complexity and power consumption of device B fall between those of the device A and the device C.

### 4. Uplink and Sidelink Scheduling in NR System

In the NR, the terminal may transmit an uplink data channel according to the scheduling of the base station, uplink scheduling information is carried by Downlink Control Information (DCI), and the uplink DCI indicates information such as time-frequency resources of uplink transmission, Modulation and Coding Scheme (MCS), Hybrid Automatic Repeat reQuest (HARQ) process, redundant version, and the like. The terminal transmits the uplink data channel on indicated time-frequency resources in a indicated manner according to the information in the DCI.

NR V2X supports sidelink transmission scheduled by a base station, i.e., resource allocation mode 1. The resource allocation mode 1 includes dynamic resource allocation and sidelink configured grants (CGs). The sidelink configured grants further include Type-1 sidelink configured grant and Type-2 sidelink configured grant. In Type-1 sidelink configured grant, the network device configures transmission resources and transmission parameters for a terminal device via Radio Resource Control (RRC) signaling. In Type-2 sidelink configured grant, the network device configures a part of the transmission parameters via RRC signaling and activates the sidelink configured grant via Downlink Control Information (DCI) signaling, wherein the DCI is further used to configure the sidelink transmission resources.

The dynamic resource allocation mode is a resource allocation mode in which the network dynamically allocates sidelink transmission resources to the terminal through DCI. In the dynamic resource allocation mode, the network allocates sidelink transmission resources to the terminal through DCI, and indicates at most three sidelink transmission resources in one DCI scheduling, and the three sidelink transmission resources are used to transmit the same Transport Block (TB). In addition, the NR-V2X system introduces a Physical Sidelink Feedback Channel (PSFCH) to improve the reliability of Sidelink transmission. In the NR-V2X dynamic scheduling resource allocation, the base station allocates sidelink transmission resources to the transmitting terminal, the transmitting terminal transmits a Physical Sidelink Control Channel (PSCCH) /Physical Sidelink Shared Channel (PSSCH) to the receiving terminal on the sidelink transmission resources allocated by the network, and the receiving terminal transmits a PSFCH to the transmitting terminal according to a detection result, which is used to indicate whether the PSSCH is correctly received.

To support dynamic resource allocation, a new DCI format, namely DCI format 3_0, is introduced in NR-V2X. When used for dynamic resource allocation, the DCI is scrambled with a Sidelink-Radio Network Temporary Identifier (SL-RNTI). In addition, the DCI format may also be used for activation or deactivation of sidelink configured grants, in which case the DCI is scrambled with a Sidelink-Configured Scheduling-Radio Network Temporary Identifier (SL-CS-RNTI).

The DCI format 3_0 mainly includes information as follows.

### 1) Resource pool index

In NR-V2X, it is supported that a plurality of Mode 1 resource pools are configured by a network. When sidelink transmission resources are scheduled through the DCI, it is necessary to indicate resource pool index information in the DCI, and the terminal determines which resource pool the sidelink transmission resources scheduled by the DCI belong to according to the resource pool index information.

### 2) Sidelink transmission resource indication information

The network may assign *N* sidelink transmission resources to a terminal for transmitting PSCCH and PSSCH. Herein, 1 ≤ *N* ≤ *Nₘₐₓ*, and *Nₘₐₓ* is 2 or 3, where *Nₘₐₓ* is a pre-configured parameter or a parameter configured by the network. The network device indicates, in the DCI, time-domain and frequency-domain information of the *N* sidelink transmission resources. Specifically, the DCI indicates time-frequency resource information of the *N* sidelink transmission resources through information as follows.

### a) Time gap

It is information used for indicating a time slot gap between a first one of sidelink transmission resources and a time slot where the DCI is located, and a time-domain position of the first sidelink transmission resource can be determined according to this information and the time-domain position where the terminal receives the DCI. The network configures a time-gap table via higher-layer signaling *sl-DCI-ToSL-Trans*, where the element in the table represents the number of sidelink slots. The parameter carried in the DCI is an index value, and a specific size of a time gap can be determined according to the index value and the time-gap table. The slot where the first sidelink transmission resource is located is the first slot not earlier than the moment ${T}_{DL} - \frac{{T}_{TA}}{2} + {K}_{SL} \times {T}_{slot}$ and located in the resource pool. Here, *T*_{DL} is a moment corresponding to the start position of the downlink slot where the DCI is located, *T*_{TA} is the current time advance of the scheduled UE, *K_{SL}* is a number of slots corresponding to the time gap determined by the information field *Time gap* in the DCI, and *T*ₛₗₒₜ represents the duration of the slot.

### 3) Time resource assignment

This information field indicates time-domain resources in the same manner as SCI Format 1-A. The parameter is represented by the Time Resource Indication Value (TRIV), which determines slot offsets of the remaining *N*-1 sidelink transmission resources relative to the first sidelink transmission resource. According to the determined time-domain position of the first transmission resource, the time-domain positions of the remaining *N*-1 transmission resources can be derived in conjunction with this information.

### c) Lowest index of the subchannel allocation to the initial transmission

It is used to indicate the lowest index of the sub-channel occupied by the first sidelink transmission resource. The frequency-domain start positions of PSCCH and PSSCH are aligned. Therefore, the frequency-domain start positions of the PSCCH and the PSSCH can be determined from this information.

### d) Frequency resource assignment

This information field indicates frequency-domain resources in the same manner as SCI Format 1-A. The parameter is represented by the Frequency Resource Indicator Value (FRIV), which determines: the size of frequency-domain resources for sidelink transmission (i.e., the number of subchannels), and the frequency-domain start positions of the remaining *N*-1 sidelink transmission resources other than the first sidelink transmission resource.

### 3) PUCCH transmission resource indication information

This information is used to indicate transmission resources of Physical Uplink Control Channel (PUCCH) for the terminal to report sidelink HARQ feedback to the network. In DCI Format 3-0, the PUCCH transmission resources are indicated via two information fields.

### 4) HARQ process number

This information indicates the HARQ process ID(s) corresponding to the sidelink transmission resources allocated by the network to the terminal.

### 5) New Data Indicator (NDI)

When the sidelink transmission resources scheduled by DCI Format 3-0 are used for new data transmission, the NDI is toggled; otherwise, it remains unchanged.

### 6) Configuration Index

When the terminal is configured with an SL-CS-RNTI, DCI Format 3_0 can be used to activate or deactivate the Type-2 sidelink configured grant. The network may configure multiple parallel Type-2 sidelink configured grants, and this index indicates which sidelink configured grant is activated or deactivated by the DCI. When the terminal is not configured with SL-CS-RNTI, the information field has 0 bit.

### 7) Counter sidelink assignment index

This information indicates the cumulative count of DCI sent by the network for scheduling sidelink transmission resources. When the terminal reports sidelink HARQ feedback information to the base station, this information is used to determine the number of information bits contained in the generated HARQ-ACK codebook.

The technologies/terms related to the embodiments of the disclosure have been briefly described above, which will not be repeatedly described in the following embodiments.

At present, a terminal device can perform uplink or sidelink transmission according to scheduling by a network device (such as base station). But in a low-power IoT communication scenario, the terminal device needs to send a signal to an A-IoT device or receive a signal reflected by the A-IoT device. Since a link (i.e., A-IoT link) between the terminal device and the A-IoT device does not belong to an uplink or sidelink, it is an unsolved problem how the network device should schedule/control the terminal device to communicate with the A-IoT device in the low-power IoT communication scenario.

In view of the above, the disclosure provides a communication method, apparatus and device, a chip and a storage medium. According to the method, the first terminal device may transmit one or more of a carrier, data and a signal to the A-IoT device based on the first information from the network device. That is, the network device may implement scheduling/control of communication between the first terminal device and the A-IoT device by transmitting the first information to the first terminal device.

FIG. 2 is a first schematic diagram of a communication scenario applicable to embodiments of the disclosure. In FIG. 2, the terminal device may be located between the network device and the A-IoT device as an intermediate node. Here, the terminal device may transmit one or more of a carrier, data and a signal to the A-IoT device. In some scenarios, the A-IoT device may transmit a reflection signal to the terminal device based on a carrier transmitted (provided) by the terminal device, and accordingly, the terminal device may receive a signal reflected by the A-IoT device (that is, a reflection signal transmitted by the A-IoT device). The reflection signal may, for example, carry data/signal from the A-IoT device, or the reflection signal may not carry the data/signal from the A-IoT device.

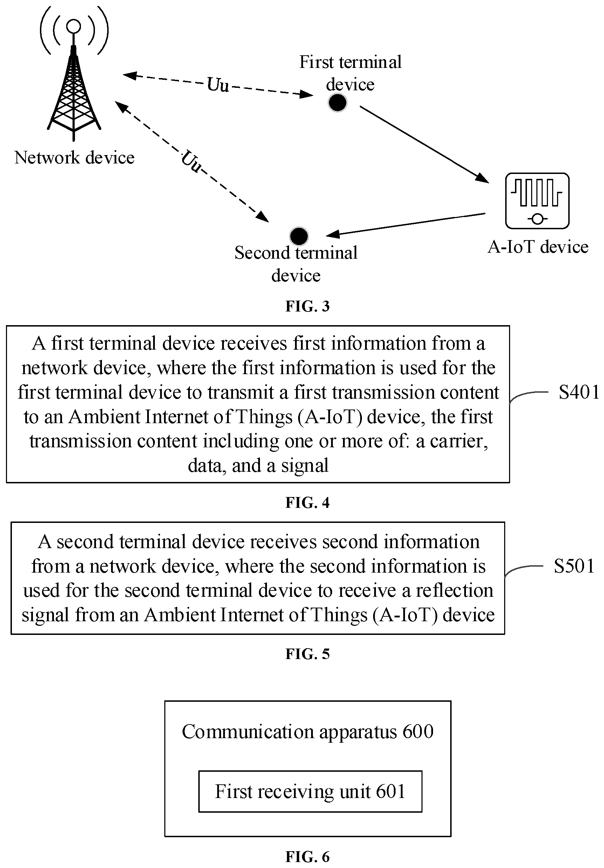

FIG. 3 is a second schematic diagram of a communication scenario applicable to embodiments of the disclosure. In FIG. 3, the terminal devices (intermediate nodes) may be plural in number. For example, in the communication scenario shown in FIG. 3, the terminal devices may include a first terminal device and a second terminal device. Here, the first terminal device may transmit one or more of a carrier, data and a signal to the A-IoT device. In some scenarios, the A-IoT device may transmit a reflection signal to the second terminal device based on a carrier transmitted (provided) by the first terminal device, and accordingly, the second terminal device may receive a signal reflected by the A-IoT device (that is, a reflection signal transmitted by the A-IoT device). The reflection signal may, for example, carry data/signal of the A-IoT device, or the reflection signal may not carry the data/signal of the A-IoT device.

It is to be noted that the number of terminal devices in FIG. 3 is merely exemplary. For example, in some other scenarios, the first terminal devices and/or the second terminal devices may be plural in number, and the embodiment of the disclosure is not limited thereto.

In order to facilitate understanding of the technical solutions of the embodiments of the disclosure, the technical solutions of the disclosure will be described in detail below with reference to specific examples. As optional solutions, the above related technologies can be arbitrarily combined with the technical solutions of the embodiments of the disclosure, and all combinations thereof belong to the scope of protection of the embodiments of the disclosure. Embodiments of the disclosure include at least some of the following contents.

FIG. 4 is a first schematic flowchart of a communication method according to an embodiment of the disclosure. As shown in FIG. 4, the method may include the following operation.

In operation S401, first information is received from a network device, wherein the first information is used by the first terminal device to transmit a first transmission content to an A-IoT device, the first transmission content including one or more of: a carrier, data, and a signal.

In the embodiment, the network device may transmit the first information to the first terminal device, and accordingly, the first terminal device may receive the first information. The first information may be used by the first terminal device to transmit the first transmission content to the A-IoT device, or in other words, the first terminal device may transmit the first transmission content to the A-IoT device based on the first information.

In some embodiments, the method may be applicable to the communication scenario shown in FIG. 2. In this communication scenario, the first terminal device may be the terminal device in FIG. 2, the network device may transmit the first information to the terminal device (first terminal device) through a Uu link, and the terminal device may transmit the first transmission content to the A-IoT device based on the first information from the network device.

In some embodiments, the method may be applicable to the communication scenario shown in FIG. 3. In this communication scenario, the network device may transmit the first information to the first terminal device through a Uu link with the first terminal device, and the first terminal device may transmit the first transmission content to the A-IoT device based on the first information from the network device.

In some embodiments, the first transmission content may include a carrier, that is, the first information may be used by the first terminal device to transmit the carrier to the A-IoT device. Here, transmitting a carrier can also be understood as transmitting a sinusoidal electromagnetic wave having a certain frequency but not carrying data and signal(s). In this case, the first information may include one or more of:
first indication information for indicating a frequency for transmitting the carrier, or in other words, the first indication information may be used by the first terminal device to determine a frequency at which to transmit the carrier to the A-IoT device;
second indication information for indicating a time for transmitting the carrier, or in other words, the second indication information may be used by the first terminal device to determine a time at which to transmit the carrier to the A-IoT device;
third indication information for indicating a power for transmitting the carrier, or in other words, the third indication information may be used by the first terminal device to determine the power for transmitting the carrier to the A-IoT device.

That is, the first information may be used to indicate to the first terminal device one or more of the frequency, the time and the power for transmitting the carrier, so that the first terminal device may transmit the carrier to the A-IoT device according to the indication of the first information.

In some embodiments, the first indication information may include (or indicate) one or more of: one or more frequencies for transmitting the carrier; and/or, one or more indexes corresponding to the one or more frequencies for transmitting the carrier.

In an example, the first indication information may include one or more frequencies for transmitting the carrier.

For example, the first indication information may include one frequency for transmitting the carrier, and in this case, the first terminal device may transmit the carrier to the A-IoT device using the frequency; or in other words, the first terminal device may transmit, at the frequency, the carrier to the A-IoT device; or in other words, the first terminal device may transmit the carrier of the frequency to the A-IoT device.

For another example, the first indication information may include a plurality of frequencies for transmitting the carrier, and in this case, the first terminal device may transmit the carrier to the A-IoT device using the plurality of frequencies; or in other words, the first terminal device may transmit, on the plurality of frequencies, the carrier to the A-IoT device; or in other words, the first terminal device may transmit carriers of the plurality of different frequencies to the A-IoT device.

In an example, the first indication information may include one or more indexes corresponding to the one or more frequencies for transmitting the carrier.

For example, the first indication information may include an index corresponding to one frequency for transmitting the carrier, and in this case, the first terminal device may determine, based on the index, one frequency for transmitting the carrier, and may transmit the carrier to the A-IoT device using the frequency.

For another example, the first indication information may include indexes corresponding to a plurality of frequencies for transmitting the carrier. The plurality of frequencies may correspond to a same index, or the plurality of frequencies may be in one-to-one correspondence with the plurality of indexes. In this case, the first terminal device may determine a plurality of frequencies for transmitting the carrier based on the indexes corresponding to the plurality of frequencies, and then transmit the carrier to the A-IoT device using the plurality of frequencies.

In some embodiments, correspondences between the one or more frequencies for transmitting the carrier and the one or more indexes may be indicated by Radio Resource Control (RRC) signaling transmitted by the network device.

In some embodiments, a number of frequencies for transmitting the carrier, which is indicated by the first indication information, is related to the capability of the first terminal device. For example, the network device may determine/decide, according to a capability report of the terminal device, the number of frequencies for transmitting the carrier, which is indicated by the first indication information.

According to the method of the present embodiment, the first terminal device may determine one or more frequencies for transmitting the carrier based on the first indication information, and then transmit the carrier to the A-IoT device using the one or more frequencies.

In some embodiments, the second indication information may include indication information for indicating one or more of the following, or in other words, the second indication information may indicate one or more of the following:
a moment to start transmitting the carrier;
an index (for example, referred to as a first index) corresponding to the moment to start transmitting the carrier;
a duration for transmission of the carrier;
a time-domain position of a first one of resources for transmitting the carrier (namely, a time-domain position of a first one of resources used for transmitting the carrier); and
a number of the resources for transmitting the carrier (namely, a number of the resources used for transmitting the carrier).

In some embodiments, the moment to start transmitting the carrier is related to a second time gap and a time slot where the first information is located. For example, the second time gap is a time gap between the moment to start transmitting the carrier and a start point or an end point of the time slot where the first information is located. Herein, the second time gap may be included in the second indication information, so that the first terminal device may determine the moment to start transmitting the carrier based on the second time gap and the time slot where the first information is located. That is, the network device may indicate to the first terminal device the moment to start transmitting the carrier, by indicating the second time gap to the first terminal device.

Exemplarily, the moment to start transmitting the carrier may be, for example, a start point of a certain time slot, or a start point of a certain Orthogonal Frequency Division Multiplexing (OFDM) symbol, or a start point of a certain subframe, and accordingly, a granularity of the second time gap may be a slot, an OFDM symbol, or a subframe.

In some embodiments, the correspondence between the moment to start transmitting the carrier and the first index may be indicated by RRC signaling transmitted by the network device.

In some embodiments, the duration for transmission of the carrier may be represented by, for example, a number of consecutive uplink slots, or a number of consecutive uplink OFDM symbols, or a number of consecutive uplink subframes.

In some embodiments, the second indication information may include indication information for indicating: the moment to start transmitting the carrier, and the duration for transmission of the carrier. In this case, the moment to start transmitting the carrier and the duration for transmission of the carrier may be indicated by joint coding. For example, the second indication information may include a Start and Length Indicator Value (SLIV), or the second indication information may be an SLIV. The SLIV may be used to jointly indicate the moment to start transmitting the carrier and the duration for transmission of the carrier, and may uniquely correspond to one start value (the moment to start transmitting the carrier) and one length value (the duration for transmission of the carrier).

In some embodiments, the second indication information may include indication information for indicating: the time-domain position of the first one of resources for transmitting the carrier (such as a start position of the first resource in the time domain), and the number of the resources for transmitting the carrier. In this case, the time-domain position of the first one of resources for transmitting the carrier and the number of the resources for transmitting the carrier may be indicated by joint coding. For example, the second indication information may include an SLIV, or the second indication information may be an SLIV. The SLIV may be used to jointly indicate the time-domain position of the first one of resources for transmitting the carrier and the number of the resources for transmitting the carrier, and may uniquely correspond to a start value (the time-domain position of the first one of resources for transmitting the carrier) and a length value (the number of the resources for transmitting the carrier).

In the present embodiment, one resource may be a time unit, which may be, for example, a time range corresponding to one or more consecutive OFDM symbols, or may be one or more consecutive time slots, or may be one or more consecutive subframes.

In some embodiments, the second indication information may not include indication information for indicating the duration for transmission of the carrier, or in other words, the second indication information may not indicate the duration for transmission of the carrier. In some embodiments, the duration for transmission of the carrier may, for example, be configured by the network device, or may be predefined (such as defined in a standard). In an implementation, the duration for transmission of the carrier, which is configured by the network device or predefined, may be, for example, a duration corresponding to one transmission resource. In this way, if the duration for transmission of the carrier is not indicated in the second indication information, the first terminal device may consider the duration for transmission of the carrier to be the duration corresponding to one transmission resource.

In some embodiments, the second indication information may not include indication information for indicating the number of the resources for transmitting the carrier, or in other words, the second indication information may not indicate the number of the resources for transmitting the carrier. In some embodiments, the number of the resources for transmitting the carrier may, for example, be configured by the network device, or may be predefined (such as defined in a standard). In an implementation, the number of the resources for transmitting the carrier, which is configured by the network device or predefined, may be, for example, one. In this way, if the number of the resources for transmitting the carrier is not indicated in the second indication information, the first terminal device may consider the number of the resources for transmitting the carrier to be one.

According to the method of the present embodiment, the first terminal device may determine the time for transmitting the carrier based on the second indication information, and then transmit the carrier to the A-IoT device at the time.

In some embodiments, the third indication information may include one or more of the following, or in other words, the third indication information may indicate one or more of the following:
the power for transmitting the carrier;
a power range for transmission of the carrier;
an index (for example, referred to as a second index) corresponding to the power for transmitting the carrier;
an index (for example, referred to as a third index) corresponding to the power range for transmission of the carrier; and
a first adjustment value relative to a reference transmission power, the power for transmitting the carrier being related to the first adjustment value.

In some embodiments, the correspondence between the power for transmitting the carrier and the second index may be indicated by RRC signaling transmitted by the network device. In some embodiments, the correspondence between the power range for transmission of the carrier and the third index may be indicated by RRC signaling transmitted by the network device.

In some embodiments, the reference transmission power may be, for example, a transmission power used by the first terminal device last time (e.g., the transmission power for transmitting the carrier, data or signal last time). In this way, the first terminal device may determine the power for transmitting the carrier this time based on the reference transmission power (such as the transmission power used last time) and the first adjustment value, and may transmit the carrier to the A-IoT device based on the power.

In some embodiments, the first information may not include the third indication information, or in other words, the first information may not indicate the power for transmitting the carrier. In some embodiments, in a case where the first information does not include the third indication information, the power for transmitting the carrier used by the first terminal device may be, for example, the same as a current uplink transmission power, or may be a maximum transmission power currently allowed.

According to the method of the embodiment, the first terminal device may determine the power for transmitting the carrier based on the third indication information, and then transmit the carrier to the A-IoT device based on the power.

In some embodiments, the first transmission content may include data or a signal, that is, the first information may be used by the first terminal device to transmit the data or the signal to the A-IoT device. In this case, the first information may include one or more of:
fourth indication information for indicating a frequency for transmitting the data or the signal, or in other words, the fourth indication information may be used by the first terminal device to determine a frequency at which to transmit the data or the signal to the A-IoT device;
fifth indication information for indicating a time for transmitting the data or the signal, or in other words, the fifth indication information may be used by the first terminal device to determine a time at which to transmit the data or the signal to the A-IoT device;
sixth indication information for indicating a power for transmitting the data or the signal, or in other words, the sixth indication information may be used by the first terminal device to determine the power for transmitting the data or the signal to the A-IoT device; and
   A- an identifier (ID) of the IoT device.

That is, the first information may be used to indicate to the first terminal device one or more of the frequency for transmitting the data or the signal, the time for transmitting the data or the signal, the power for transmitting the data or the signal and the ID of the A-IoT device, so that the first terminal device may transmit the data or the signal to the A-IoT device according to the indication of the first information. Here, the frequency for transmitting the data or the signal can also be understood as a frequency of a carrier for transmitting the data or the signal.

In some embodiments, a number of IDs of the A-IoT devices may be one or more. In a case where the first information includes an ID of one A-IoT device, the first terminal device may transmit the data or the signal to the A-IoT device based on the ID; and in a case where the first information includes IDs of a plurality of A-IoT devices, the first terminal device may transmit the data or the signal to the plurality of A-IoT devices based on the IDs of the plurality of A-IoT devices included in the first information. In some embodiments, the first information may not include the ID of the A-IoT device, and in this case, the first terminal device may determine to which A-IoT device or devices to transmit the data or the signal.

In some embodiments, the fourth indication information may include (or indicate): one or more frequencies for transmitting the data or the signal; and/or, one or more indexes corresponding to the one or more frequencies for transmitting the data or the signal.

In an example, the fourth indication information may include one or more frequencies for transmitting the data or the signal.

For example, the fourth indication information may include one frequency for transmitting the data or the signal, and in this case, the first terminal device may transmit the data or the signal to the A-IoT device using the frequency; or in other words, the first terminal device may transmit, at the frequency, the data or the signal to the A-IoT device.

For another example, the fourth indication information may include a plurality of frequencies for transmitting the data or the signal, and in this case, the first terminal device may transmit the data or the signal to the A-IoT device using the plurality of frequencies; or in other words, the first terminal device may transmit, on the plurality of frequencies, the data or the signal to the A-IoT device.

In an example, the fourth indication information may include one or more indexes corresponding to the one or more frequencies for transmitting the data or the signal.

For example, the fourth indication information may include an index corresponding to one frequency for transmitting the data or the signal, and in this case, the first terminal device may determine, based on the index, one frequency for transmitting the data or the signal, and then transmit the data or the signal to the A-IoT device using the frequency, or in other words, transmit, at the frequency, the data or the signal to the A-IoT device.

For another example, the fourth indication information may include indexes corresponding to a plurality of frequencies for transmitting the data or the signal. The plurality of frequencies may correspond to a same index, or the plurality of frequencies may be in one-to-one correspondence with the plurality of indexes. In this case, the first terminal device may determine, based on indexes corresponding to a plurality of frequencies, the plurality of frequencies for transmitting the data or the signal, and then transmit the data or the signal to the A-IoT device using the plurality of frequencies, or in other words, transmit, on the the plurality of frequencies, the data or the signal to the A-IoT device.

In some embodiments, the correspondences between the one or more frequencies for transmitting the data or the signal and the one or more indexes may be indicated by RRC signaling transmitted by the network device.

In some embodiments, a number of frequencies for transmitting the data or the signal, which is indicated by the fourth indication information, is related to the capability of the first terminal device. For example, the network device may determine/decide, according to a capability report of the terminal device, the number of frequencies for transmitting the data or the signal, which is indicated by the fourth indication information.

According to the method of the embodiment, the first terminal device may determine one or more frequencies for transmitting the data or the signal based on the fourth indication information, and then transmit the data or the signal to the A-IoT device using the one or more frequencies.

In some embodiments, the fifth indication information may include indication information for indicating one or more of the following, or in other words, the fifth indication information may indicate one or more of the following:
a moment to start transmitting the data or the signal;
an index (for example, referred to as a fourth index) corresponding to the moment to start transmitting the data or the signal;
a duration for transmission of the data or the signal;
a time-domain position of a first one of resources for transmitting the data or the signal (namely, a time-domain position of a first one of resources used for transmitting the data or the signal); and
a number of the resources for transmitting the data or the signal (namely, a number of the resources used for transmitting the data or the signal).

In some embodiments, the moment to start transmitting the data or the signal is related to a third time gap and a time slot where the first information is located. For example, the third time gap is a time gap between the moment to start transmitting the data or the signal and a start point or an end point of the time slot where the first information is located. Herein, the third time gap may be included in the fifth indication information, so that the first terminal device may determine the moment to start transmitting the data or the signal based on the third time gap and the time slot where the first information is located. That is, the network device may indicate to the first terminal device the moment to start transmitting the data or the signal, by indicating the third time gap to the first terminal device.

Exemplarily, the moment to start transmitting the data or the signal may be, for example, a start point of a certain time slot, or a start point of a certain OFDM symbol, or a start point of a certain subframe, and accordingly, a granularity of the third time gap may be a slot, an OFDM symbol, or a subframe.

In some embodiments, the correspondence between the moment to start transmitting the the data or the signal and the fourth index may be indicated by RRC signaling transmitted by the network device.

In some embodiments, the duration for transmission of the data or the signal may be represented by, for example, a number of consecutive uplink slots, or a number of consecutive uplink OFDM symbols, or a number of consecutive uplink subframes.

In some embodiments, the fifth indication information may include indication information for indicating: the moment to start transmitting the data or the signal, and the duration for transmission of the data or the signal. In this case, the moment to start transmitting the data or the signal and the duration for transmission of the data or the signal may be indicated by joint coding. For example, the fifth indication information may include an SLIV, or the fifth indication information may be an SLIV. The SLIV may be used to jointly indicate the moment to start transmitting the data or the signal and the duration for transmission of the data or the signal, and may uniquely correspond to one start value (the moment to start transmitting the data or the signal) and one length value (the duration for transmission of the data or the signal).

In some embodiments, the fifth indication information may include indication information for indicating: the time-domain position of the first one of resources for transmitting the data or the signal (such as a start position of the first resource in the time domain), and the number of the resources for transmitting the data or the signal. In this case, the time-domain position of the first one of resources for transmitting the data or the signal and the number of the resources for transmitting the data or the signal may be indicated by joint coding. For example, the fifth indication information may include an SLIV, or the fifth indication information may be an SLIV. The SLIV may be used to jointly indicate the time-domain position of the first one of resources for transmitting the data or the signal and the number of the resources for transmitting the data or the signal, and may uniquely correspond to a start value (the time-domain position of the first one of resources for transmitting the data or the signal) and a length value (the number of the resources for transmitting the data or the signal).

According to the method of the present embodiment, the first terminal device may determine the time for transmitting the data or the signal based on the fifth indication information, and then transmit the data or the signal to the A-IoT device at the time.

In some embodiments of the disclosure, the sixth indication information may include one or more of:
the power for transmitting the data or the signal;
a power range for transmission of the data or the signal;
an index (for example, referred to as a fifth index) corresponding to the power for transmitting the data or the signal;
an index (for example, referred to as a sixth index) corresponding to the power range for transmission of the data or the signal; and
a second adjustment value relative to a reference transmission power, the power for transmitting the data or the signal being related to the second adjustment value.

In some embodiments, the correspondence between the power for transmitting the data or the signal and the fifth index may be indicated by RRC signaling transmitted by the network device. In some embodiments, the correspondence between the power range for transmission of the data or the signal and the sixth index may be indicated by RRC signaling transmitted by the network device.

In some embodiments, the reference transmission power may be, for example, a transmission power used by the first terminal device last time (e.g., the transmission power for transmitting the carrier, data or signal last time). In this way, the first terminal device may determine the power for transmitting the data or the signal this time based on the reference transmission power (such as the transmission power used last time) and the second adjustment value, and may transmit the data or the signal to the A-IoT device based on the power.

In some embodiments, the first information may not include the sixth indication information, or in other words, the first information may not indicate the power for transmitting the data or the signal. In some embodiments, in a case where the first information does not include the sixth indication information, the power for transmitting the data or the signal used by the first terminal device may be, for example, the same as a current uplink transmission power, or may be a maximum transmission power currently allowed.

According to the method of the embodiment, the first terminal device may determine the power for transmitting the data or the signal based on the sixth indication information, and then transmit the data or the signal to the A-IoT device based on the power.

In some embodiments, the first transmission content may include data or a signal, and may further include the carrier, that is, the first information may be used by the first terminal device to transmit the data or the signal to the A-IoT device, and may further be used by the first terminal device to transmit the carrier to the A-IoT device. In this case, the first information may include one or more of the fourth indication information, the fifth indication information, the sixth indication information and the ID of the A-IoT device, and may further include one or more of the first indication information, the second indication information, and the third indication information.

In some embodiments, the time for transmitting the data or the signal is prior to a time for transmitting the carrier. That is, in chronological order, the first terminal device may first transmit the data or the signal to the A-IoT device, and then transmit the carrier to the A-IoT device. For this scenario, the following cases may exist.

In case 1, the first information includes the fourth indication information, and does not include the first indication information.

In this case, the frequency for transmitting the carrier is the same as the frequency for transmitting the data or the signal. That is, if the first information does not include the first indication information, or if the frequency for transmitting the carrier is not indicated in the first information, the first terminal device may use the frequency for transmitting the data or the signal indicated by the fourth indication information as the frequency for transmitting the carrier.

In case 2, the first information includes the fifth indication information, and does not include the second indication information.

In this case, a time gap between the time for transmitting the carrier and the time for transmitting the data or the signal is a first time gap, where the first time gap may be predefined, or configured by the network device. That is, if the first information does not include the second indication information, or if the time for transmitting the carrier is not indicated in the first information, then after transmitting the data or the signal, the first terminal device may send the carrier to the A-IoT device after the first time gap has elapsed; or in other words, the first terminal device may send the carrier to the A-IoT device following the first time gap after completing the transmission of the data or signal.

In case 3, the first information includes the sixth indication information, and does not include the third indication information.

In this case, the power for transmitting the carrier is the same as the power for transmitting the data or the signal. That is, if the first information does not include the third indication information, or if the power for transmitting the carrier is not indicated in the first information, the first terminal device may use the power for transmitting the data or the signal indicated by the sixth indication information as the power for transmitting the carrier.

In some embodiments, the first transmission content includes the data or signal, and further includes the carrier; and the time for transmitting the data or the signal is prior to a time for transmitting the carrier. In this case, the first information may include one or more of the fourth indication information, the fifth indication information, the sixth indication information and the ID of the A-IoT device.

In some embodiments, a frequency for transmitting the carrier is the same as the frequency for transmitting the data or the signal; a time gap between a time for transmitting the carrier and the time for transmitting the data or the signal is a first time gap, where first time gap may be predefined, or configured by the network device; a power for transmitting the carrier is the same as the power for transmitting the data or the signal.

That is, in a case where the first information includes the fourth indication information, or in a case where the first information indicates the frequency for transmitting the data or the signal, the first terminal device may use the frequency for transmitting the data or the signal as the frequency for transmitting the carrier. In a case where the first information includes the fifth indication information, or in a case where the first information indicates the time for transmitting the data or the signal, the first terminal device may transmit the carrier to the A-IoT device after the first time gap following completion of the transmission of the data or the signal. In a case where the first information includes the sixth indication information, or in a case where the first information indicates the power for transmitting the data or the signal, the first terminal device may use the power for transmitting the data or the signal as the power for transmitting the carrier.

According to the method of the present embodiment, one or more of the fourth indication information, the fifth indication information and the sixth indication information may be used as an indication for transmitting the data or the signal (or may be used for transmitting the data or the signal), and may also be used as an indication for transmitting the carrier (or may be used for transmitting the carrier), thereby facilitating reduction of signaling overheads.

In some embodiments, the frequency for transmitting the data or the signal is different from the frequency for transmitting the carrier. That is, the first terminal device may transmit the carrier and the data/signal to the A-IoT device at different frequencies. For this scenario, the following cases may exist.

In case 1, the first information includes the second indication information, and does not include the fifth indication information.

In this case, the time for transmitting the data or the signal is the same as the time for transmitting the carrier. That is, if the first information does not include the fifth indication information, or if the time for transmitting the data or the signal is not indicated in the first information, the first terminal device may use the time for transmitting the carrier indicated by the second indication information as the time for transmitting the data or the signal.

In case 2, the first information includes the fifth indication information, and does not include the second indication information.

In this case, the time for transmitting the carrier is the same as the time for transmitting the data or the signal. That is, if the first information does not include the second indication information, or if the time for transmitting the carrier is not indicated in the first information, the first terminal device may use the time for transmitting the data or the signal indicated by the fifth indication information as the time for transmitting the carrier.

In case 3, the first information includes the third indication information, and does not include the sixth indication information.

In this case, the power for transmitting the data or the signal is the same as the power for transmitting the carrier. That is, if the first information does not include the sixth indication information, or if the power for transmitting the data or the signal is not indicated in the first information, the first terminal device may use the power for transmitting the carrier indicated by the third indication information as the power for transmitting the data or the signal.

In case 4, the first information includes the sixth indication information, and does not include the third indication information.

In this case, the power for transmitting the carrier is the same as the power for transmitting the data or the signal. That is, if the first information does not include the third indication information, or if the power for transmitting the carrier is not indicated in the first information, the first terminal device may use the power for transmitting the data or the signal indicated by the sixth indication information as the power for transmitting the carrier.

In some embodiments, the first transmission content may be determined by the first terminal device. That is, after receiving the first information from the network device, the first terminal device may use the first information to transmit the first transmission content determined/decided by the first terminal device. For example, if the first transmission content determined by the first terminal device is a carrier, the first terminal device may use the first information to transmit the carrier; for another example, if the first transmission content determined by the first terminal device is data or a signal, the first terminal device may use the first information to transmit the data or the signal. In this case, the first information may include one or more of:
seventh indication information for indicating a frequency for transmitting the first transmission content, or in other words, the seventh indication information may be used by the first terminal device to determine a frequency at which to transmit the first transmission content to the A-IoT device;
eighth indication information for indicating a time for transmitting the first transmission content, or in other words, the eighth indication information may be used by the first terminal device to determine a time at which to transmit the first transmission content to the A-IoT device; and
ninth indication information for indicating a power for transmitting the first transmission content, or in other words, the ninth indication information may be used by the first terminal device to determine the power for transmitting the first transmission content to the A-IoT device.

In some embodiments, the seventh indication information may include (or indicate): one or more frequencies for transmitting the first transmission content; and/or, one or more indexes corresponding to the one or more frequencies for transmitting the first transmission content.

In an example, the seventh indication information may include: one or more frequencies for transmitting the first transmission content.

For example, the seventh indication information may include one frequency for transmitting the first transmission content, and in this case, the first terminal device may transmit the first transmission content to the A-IoT device using the frequency; or in other words, the first terminal device may transmit, at the frequency, the first transmission content to the A-IoT device.

For another example, the seventh indication information may include a plurality of frequencies for transmitting the first transmission content, and in this case, the first terminal device may transmit the first transmission content to the A-IoT device using the plurality of frequencies; or in other words, the first terminal device may transmit, on the plurality of frequencies, the first transmission content to the A-IoT device.

In an example, the seventh indication information may include one or more indexes corresponding to the one or more frequencies for transmitting the first transmission content.

For example, the seventh indication information may include an index corresponding to one frequency for transmitting the first transmission content, and in this case, the first terminal device may determine, based on the index, one frequency for transmitting the first transmission content, and may transmit the first transmission content to the A-IoT device using the frequency.

For another example, the seventh indication information may include indexes corresponding to a plurality of frequencies for transmitting the first transmission content. The plurality of frequencies may correspond to a same index, or the plurality of frequencies may be in one-to-one correspondence with the plurality of indexes. In this case, the first terminal device may determine a plurality of frequencies for transmitting the first transmission content based on the indexes corresponding to the plurality of frequencies, and then transmit the first transmission content to the A-IoT device using the plurality of frequencies.

In some embodiments, the correspondences between the one or more frequencies for transmitting the first transmission content and the one or more indexes may be indicated by RRC signaling transmitted by the network device.

In some embodiments, a number of frequencies for transmitting the first transmission content, which is indicated by the seventh indication information, is related to the capability of the first terminal device. For example, the network device may determine/decide, according to a capability report of the terminal device, the number of frequencies for transmitting the first transmission content, which is indicated by the seventh indication information.

According to the method of the present embodiment, the first terminal device may determine one or more frequencies for transmitting the first transmission content based on the seventh indication information, and then transmit the first transmission content determined by the first terminal device to the A-IoT device using the one or more frequencies.

In some embodiments, the eighth indication information may include indication information for indicating one or more of the following, or in other words, the eighth indication information may indicate one or more of the following:
a moment to start transmitting the first transmission content;
an index (for example, referred to as a seventh index) corresponding to the moment to start transmitting the first transmission content;
a duration for transmission of the first transmission content;
a time-domain position of a first one of resources for transmitting the first transmission content (namely, a time-domain position of a first one of resources used for transmitting the first transmission content); and
a number of the resources for transmitting the first transmission content (namely, a number of the resources used for transmitting the first transmission content).

In some embodiments, the moment to start transmitting the first transmission content is related to a fourth time gap and a time slot where the first information is located. For example, the fourth time gap is a time gap between the moment to start transmitting the first transmission content and a start point or an end point of the time slot where the first information is located. Herein, the fourth time gap may be included in the eighth indication information, so that the first terminal device may determine the moment to start transmitting the first transmission content based on the fourth time gap and the time slot where the first information is located. That is, the network device may indicate to the first terminal device the moment to start transmitting the first transmission content, by indicating the fourth time gap to the first terminal device.

Exemplarily, the moment to start transmitting the first transmission content may be, for example, a start point of a certain time slot, or a start point of a certain OFDM symbol, or a start point of a certain subframe, and accordingly, a granularity of the fourth time gap may be a slot, an OFDM symbol, or a subframe.

In some embodiments, the correspondence between the moment to start transmitting the first transmission content and the seventh index may be indicated by RRC signaling transmitted by the network device.

In some embodiments, the duration for transmission of the first transmission content may be represented by, for example, a number of consecutive uplink slots, or a number of consecutive uplink OFDM symbols, or a number of consecutive uplink subframes.

In some embodiments, the eighth indication information may include indication information for indicating: the moment to start transmitting the first transmission content, and the duration for transmission of the first transmission content. In this case, the moment to start transmitting the first transmission content and the duration for transmission of the first transmission content may be indicated by joint coding. For example, the eighth indication information may include an SLIV, or the eighth indication information may be an SLIV. The SLIV may be used to jointly indicate the moment to start transmitting the first transmission content and the duration for transmission of the first transmission content, and may uniquely correspond to one start value (the moment to start transmitting the first transmission content) and one length value (the duration for transmission of the first transmission content).

In some embodiments, the eighth indication information may include indication information for indicating: the time-domain position of the first one of resources for transmitting the first transmission content (such as a start position of the first resource in the time domain), and the number of the resources for transmitting the first transmission content. In this case, the time-domain position of the first one of resources for transmitting the first transmission content and the number of the resources for transmitting the first transmission content may be indicated by joint coding. For example, the eighth indication information may include an SLIV, or the eighth indication information may be an SLIV. The SLIV may be used to jointly indicate the time-domain position of the first one of resources for transmitting the first transmission content and the number of the resources for transmitting the first transmission content, and may uniquely correspond to a start value (the time-domain position of the first one of resources for transmitting the first transmission content) and a length value (the number of the resources for transmitting the first transmission content).

According to the method of the present embodiment, the first terminal device may determine the time for transmitting the first transmission content based on the eighth indication information, and then transmit the first transmission content determined by the first terminal device to the A-IoT device at the time.

In some embodiments, the ninth indication information may include one or more of:
the power for transmitting the first transmission content;
a power range for transmission of the first transmission content;
an index (for example, referred to as an eighth index) corresponding to the power for transmitting the first transmission content;
an index (for example, referred to as a ninth index) corresponding to the power range for transmission of the first transmission content; and
a third adjustment value relative to a reference transmission power, the power for transmitting the first transmission content being related to the third adjustment value.

In some embodiments, the correspondence between the power for transmitting the first transmission content and the eighth index may be indicated by RRC signaling transmitted by the network device. In some embodiments, the correspondence between the power range for transmission of the first transmission content and the ninth index may be indicated by RRC signaling transmitted by the network device.

In some embodiments, the reference transmission power may be, for example, a transmission power used by the first terminal device last time (e.g., the transmission power for transmitting the carrier, data or signal last time). In this way, the first terminal device may determine the power for transmitting the first transmission content this time based on the reference transmission power (such as the transmission power used last time) and the third adjustment value, and then transmit the first transmission content to the A-IoT device based on the power.

In some embodiments, the first information may not include the ninth indication information, or in other words, the first information may not indicate the power for transmitting the first transmission content. In some embodiments, in a case where the first information does not include the ninth indication information, the power for transmitting the first transmission content used by the first terminal device may be, for example, the same as a current uplink transmission power, or may be a maximum transmission power currently allowed.

According to the method of the present embodiment, the first terminal device may determine the power for transmitting the first transmission content based on the ninth indication information, and then transmit the first transmission content determined by the first terminal device to the A-IoT device based on the power.

In some embodiments, the first information may be a DCI (e.g., referred as a first DCI).

In some embodiments, a number of bits of the first DCI may be the same as a number of bits of second DCI currently configured for the first terminal device, and the first DCI and the second DCI are scrambled by different RNTIs. The second DCI may be, for example, uplink DCI, downlink DCI or sidelink DCI.

In some embodiments, the number of bits of the first DCI may be configured by the network device. If all bit fields in the first DCI contain fewer bits than the number of bits configured by the network device, zeros may be padded at the end of the first DCI.

In some embodiments, the first information may be configured grant.

In some embodiments, in a case where the first information is configured grant, the first information may further include tenth indication information, the tenth indication information being used to indicate a repetition period in the time domain of resources for transmitting the first transmission content. As such, the first terminal device may transmit the first transmission content to the A-IoT device based on the repetition period.

According to the method of the embodiment, the first terminal device may transmit the first transmission content (including one or more of a carrier, data, and a signal) to the A-IoT device based on the first information from the network device. That is, the network device may implement scheduling/control of communication between the first terminal device and the A-IoT device by transmitting the first information to the first terminal device.

FIG. 5 is a second schematic flowchart of a communication method according to an embodiment of the disclosure. As shown in FIG. 5, the method may include the following operation.

In operation S501, second information is received from a network device, where the second information is used by the second terminal device to receive a reflection signal from an A-IoT device.

In the present embodiment, the network device may transmit the second information to the second terminal device, and accordingly, the second terminal device may receive the second information, and the second information may be used by the second terminal device to receive the reflection signal from the A-IoT device, or in other words, the second terminal device may receive the reflection signal from the A-IoT device based on the second information.

In some embodiments, the method may be applicable to the communication scenario shown in FIG. 3. In this communication scenario, the network device may transmit the second information to the second terminal device through a Uu link with the second terminal device, and the second terminal device may receive the reflection signal from the A-IoT device based on the second information from the network device. In some embodiments, the network device may further transmit first information to the first terminal device through a Uu link with the first terminal device, the first information may be used by the first terminal device to transmit the first transmission content (e.g., may include one or more of a carrier, data, and a signal) to the A-IoT device, or in other words, the first terminal device may transmit the first transmission content to the A-IoT device based on the first information. Here, for an implementation method in which the first terminal device transmits the first transmission content to the A-IoT device based on the first information, reference may be made to the method shown in FIG. 4, which will not be described again here.

In some embodiments, the second information may include:
first indication information, which may be used for indicating a frequency for transmitting a carrier by a first terminal device; and/or
second indication information, which may be used for indicating a time for transmitting the carrier by the first terminal device.

Herein, a carrier (sinusoidal electromagnetic wave having a certain frequency but not carrying data and a signal) transmitted by the first terminal device can be used by the A-IoT device to transmit a reflection signal to the second terminal device. For example, in the communication scenario shown in FIG. 3, the first terminal device may transmit (provide) a carrier to the A-IoT device based on the first information, so that the A-IoT device may transmit a reflection signal to the second terminal device using the carrier provided by the first terminal device. In one possible case, the A-IoT device may modulate the carrier provided by the first terminal device so that the carrier carries data or signal(s), and then the A-IoT device may transmit the carrier carrying the data or signal(s) to the second terminal device by reflection, and in this case, the reflection signal transmitted by the A-IoT device is the carrier carrying the data or signal(s). In another possible case, the reflection signal transmitted by the A-IoT device may not carry data or signal(s), for example, the reflection signal may be used only for measurement.

In some embodiments, the first indication information may include (or indicate): one or more frequencies for transmitting the carrier by the first terminal device; and/or one or more indexes corresponding to the one or more frequencies for transmitting the carrier by the first terminal device.

In an example, the first indication information may include: one or more frequencies for transmitting the carrier by the first terminal device.

For example, the first indication information may include one frequency for transmitting the carrier by the first terminal device, and in this case, the second terminal device may receive the reflection signal from the A-IoT device at the frequency.

In another example, the first indication information may include a plurality of frequencies for transmitting the carrier by the first terminal device, and in this case, the second terminal device may receive a reflection signal from the A-IoT device at the plurality of frequencies.

In an example, the first indication information may include one or more indexes corresponding to the one or more frequencies for transmitting the carrier by the first terminal device.

For example, the first indication information may include an index corresponding to one frequency for transmitting the carrier by the first terminal device, and in this case, the second terminal device may determine, based on the index, one frequency for transmitting the carrier by the first terminal device, and then receive the reflection signal from the A-IoT device at the frequency.

For another example, the first indication information may include indexes corresponding to a plurality of frequencies for transmitting the carrier by the first terminal device. The plurality of frequencies may correspond to a same index, or the plurality of frequencies may be in one-to-one correspondence with the plurality of indexes. In this case, the second terminal device may determine, based on the indexes corresponding to the plurality of frequencies, the plurality of frequencies for transmitting the carrier by the first terminal device, and then receive the reflection signal from the A-IoT device at the frequencies.

In some embodiments, the correspondences between the one or more frequencies for transmitting the carrier by the first terminal device and the one or more indexes may be indicated by RRC signaling transmitted by the network device.

According to the method of the embodiment, the second terminal device may determine, based on the first indication information, one or more frequencies for transmitting the carrier by the first terminal device, and then receive a reflection signal from the A-IoT device at the one or more frequencies.

It can be understood that since the carrier transmitted by the first terminal device is used by the A-IoT device to transmit the reflection signal, or in other words the reflection signal transmitted by the A-IoT device is transmitted by reflecting the carrier transmitted by the first terminal device, the frequency at which the first terminal device transmits the carrier can be used as the frequency at which the second terminal device receives the reflection signal from the A-IoT device.

In some embodiments, the second indication information may include indication information for indicating one or more of the following, or in other words, the second indication information may indicate one or more of the following:
a moment when the first terminal device starts transmitting the carrier;
an index (for example, referred to as a first index) corresponding to the moment when the first terminal device starts transmitting the carrier;
a duration for which the first terminal device transmits the carrier;
a time-domain position of a first one of resources for transmitting the carrier by the first terminal device (namely, a time-domain position of a first one of resources for the first terminal device to transmit the carrier); and
a number of the resources for transmitting the carrier by the first terminal device (namely, a number of the resources for to first terminal device to transmit the carrier).

In some embodiments, the moment when the first terminal device starts transmitting the carrier is related to a second time gap and a time slot where the second information is located. For example, the second time gap is a time gap between the moment when the first terminal device starts transmitting the carrier and a start point or an end point of the time slot where the second information is located. Herein, the second time gap may be included in the second indication information, so that the second terminal device may determine the moment when the first terminal device starts transmitting the carrier based on the second time gap and the time slot where the second information is located. Further, the second terminal device may determine a moment to start receiving the reflection signal from the A-IoT device, based on the moment when the first terminal device starts transmitting the carrier. In one possible implementation, the moment when the first terminal device starts transmitting the carrier is the moment when the second terminal device starts receiving the reflection signal.

In some embodiments, the correspondence between the moment when the first terminal device starts transmitting the carrier and the first index may be indicated by RRC signaling transmitted by the network device.

In some embodiments, the second indication information may include indication information for indicating: the moment when the first terminal device starts transmitting the carrier, and the duration for which the first terminal device transmits the carrier. In this case, the moment when the first terminal device starts transmitting the carrier and the duration for which the first terminal device transmits the carrier may be indicated by joint coding. For example, the second indication information may include an SLIV, or the second indication information may be an SLIV. The SLIV may be used to jointly indicate the moment to start transmitting the carrier and the duration for transmission of the carrier, and may uniquely correspond to one start value (the moment when the first terminal device starts transmitting the carrier) and one length value (the duration for which the first terminal device transmits the carrier).

In some embodiments, the second indication information may include indication information for indicating: the time-domain position of the first one of resources for transmitting the carrier by the first terminal device (such as a start position of the first resource in the time domain), and the number of the resources for transmitting the carrier by the first terminal device. In this case, the time-domain position of the first one of resources for transmitting the carrier by the first terminal device and the number of the resources for transmitting the carrier by the first terminal device may be indicated by joint coding. For example, the second indication information may include an SLIV, or the second indication information may be an SLIV. The SLIV may be used to jointly indicate the time-domain position of the first one of resources for transmitting the carrier and the number of the resources for transmitting the carrier, and may uniquely correspond to a start value (the time-domain position of the first one of resources for transmitting the carrier by the first terminal device) and a length value (the number of the resources for transmitting the carrier by the first terminal device).

In the present embodiment, one resource may be a time unit, which may be, for example, a time range corresponding to one or more consecutive OFDM symbols, or may be one or more consecutive time slots, or may be one or more consecutive subframes.

In some embodiments, the second indication information may not include indication information for indicating the duration for which the first terminal device transmits the carrier, or in other words, the second indication information may not indicate the duration for which the first terminal device transmits the carrier. In some embodiments, the duration for which the first terminal device transmits the carrier may, for example, be configured by the network device, or may be predefined (such as defined in a standard). In an implementation, the duration for which the first terminal device transmits the carrier, which is configured by the network device or predefined, may be, for example, a duration corresponding to one transmission resource. In this way, if the duration for which the first terminal device transmits the carrier is not indicated in the second indication information, the second terminal device may consider the duration for which the first terminal device transmits the carrier to be the duration corresponding to one transmission resource.

In some embodiments, the second indication information may not include indication information for indicating the number of the resources for transmitting the carrier by the first terminal device, or in other words, the second indication information may not indicate the number of the resources for transmitting the carrier by the first terminal device. In some embodiments, the number of the resources for transmitting the carrier by the first terminal device may, for example, be configured by the network device, or may be predefined (such as defined in a standard). In an implementation, the number of the resources for transmitting the carrier by the first terminal device, which is configured by the network device or predefined, may be, for example, one. In this way, if the number of the resources for transmitting the carrier by the first terminal device is not indicated in the second indication information, the second terminal device may consider the number of the resources for transmitting the carrier by the first terminal device to be one.

According to the method of the embodiment, the second terminal device may determine, based on the second indication information, the time for transmitting the carrier by the first terminal device, and further, the second terminal device may determine the time for receiving the reflection signal from the A-IoT device, based on the time for transmitting the carrier by the first terminal device. In one possible implementation, since the carrier transmitted by the first terminal device is used by the A-IoT device to transmit the reflection signal, or in other words the reflection signal transmitted by the A-IoT device is transmitted by reflecting the carrier transmitted by the first terminal device, the time at which the first terminal device transmits the carrier can be used as the time at which the second terminal device receives the reflection signal.

In some embodiments, the second information may further be used by the second terminal device to receive one or more of a carrier, data and a signal transmitted by the first terminal device.

In some embodiments, the second information may be used by the second terminal device to receive the carrier transmitted by the first terminal device. For example, the second terminal device may determine, based on the first indication information, one or more frequencies for transmitting the carrier by the first terminal device, and may receive, at the one or more frequencies, the carrier transmitted by the first terminal device. For another example, the second terminal device may determine, based on the second indication information, a time for transmitting the carrier by the first terminal device, and may receive, at the time, the carrier transmitted by the first terminal device. That is, the first indication information and the second indication information may be used by the second terminal device to receive the reflection signal from the A-IoT device, and may be used by the second terminal device to receive the carrier transmitted by the first terminal device.

In some embodiments, the second information may be used by the second terminal device to receive the data or signal transmitted by the first terminal device. In this case, the second information may further include:
fourth indication information for indicating a frequency for transmitting the data or the signal by the first terminal device; and/or
fifth indication information for indicating a time for transmitting the data or the signal by the first terminal device.

In some embodiments, the fourth indication information may include (or indicate): one or more frequencies for transmitting the data or the signal by the first terminal device; and/or one or more indexes corresponding to the one or more frequencies for transmitting the data or the signal by the first terminal device.

In an example, the fourth indication information may include: one or more frequencies for transmitting the the data or the signal by the first terminal device.

For example, the fourth indication information may include one frequency for transmitting the data or the signal by the first terminal device, and in this case, the second terminal device may receive, at the frequency, the data or the signal transmitted by the first terminal device.

In another example, the fourth indication information may include a plurality of frequencies for transmitting the data or the signal by the first terminal device, and in this case, the second terminal device may receive, at the plurality of frequencies, the data or the signal transmitted by the first terminal device.

In an example, the fourth indication information may include one or more indexes corresponding to the one or more frequencies for transmitting the data or the signal by the first terminal device.

For example, the fourth indication information may include an index corresponding to one frequency for transmitting the data or the signal by the first terminal device, and in this case, the second terminal device may determine, based on the index, one frequency for transmitting the data or the signal by the first terminal device, and then receive, at the frequency, the data or the signal transmitted by the first terminal device.

For another example, the fourth indication information may include indexes corresponding to a plurality of frequencies for transmitting the data or the signal by the first terminal device. The plurality of frequencies may correspond to a same index, or the plurality of frequencies may be in one-to-one correspondence with the plurality of indexes. In this case, the second terminal device may determine, based on the indexes corresponding to the plurality of frequencies, the plurality of frequencies for transmitting the data or the signal by the first terminal device, and then receive, at the frequencies, the data or the signal transmitted by the first terminal device.

In some embodiments, the correspondences between the one or more frequencies for transmitting the data or the signal by the first terminal device and the one or more indexes may be indicated by RRC signaling transmitted by the network device.

According to the method of the embodiment, the second terminal device may determine, based on the fourth indication information, one or more frequencies for transmitting the data or the signal by the first terminal device, and then receive, at the one or more frequencies, the data or the signal transmitted by the first terminal device.

In some embodiments, the fifth indication information may include indication information for indicating one or more of the following, or in other words, the fifth indication information may indicate one or more of the following:
a moment when the first terminal device starts transmitting the data or the signal;
an index (for example, referred to as a fourth index) corresponding to the moment when the first terminal device starts transmitting the data or the signal;
a duration for which the first terminal device transmits the data or the signal;
a time-domain position of a first one of resources for transmitting the data or the signal by the first terminal device (namely, a time-domain position of a first one of resources for the first terminal device to transmit the data or the signal); and
a number of the resources for transmitting the data or the signal by the first terminal device (namely, a number of the resources for the first terminal device to transmit the data or the signal).

In some embodiments, the moment when the first terminal device starts transmitting the data or the signal is related to a third time gap and a time slot where the second information is located. For example, the third time gap is a time gap between the moment when the first terminal device starts transmitting the data or the signal and a start point or an end point of the time slot where the second information is located. Herein, the third time gap may be included in the fifth indication information, so that the second terminal device may determine the moment when the first terminal device starts transmitting the data or the signal based on the third time gap and the time slot where the second information is located, and then start, at the moment, receiving the data or the signal transmitted by the first terminal device.

In some embodiments, the correspondence between the moment when the first terminal device starts transmitting the the data or the signal and the fourth index may be indicated by RRC signaling transmitted by the network device.

In some embodiments, the fifth indication information may include indication information for indicating: the moment when the first terminal device starts transmitting the data or the signal, and the duration for which the first terminal device transmits the data or the signal. In this case, the moment when the first terminal device starts transmitting the data or the signal and the duration for which the first terminal device transmits the data or the signal may be indicated by joint coding. For example, the fifth indication information may include an SLIV, or the fifth indication information may be an SLIV. The SLIV may be used to jointly indicate the moment to start transmitting the data or the signal and the duration for transmission of the data or the signal, and may uniquely correspond to one start value (the moment when the first terminal device starts transmitting the data or the signal) and one length value (the duration for which the first terminal device transmits the data or the signal).

In some embodiments, the fifth indication information may include indication information for indicating: the time-domain position of the first one of resources for transmitting the data or the signal by the first terminal device (such as a start position of the first resource in the time domain), and the number of the resources for transmitting the data or the signal by the first terminal device. In this case, the time-domain position of the first one of resources for transmitting the data or the signal by the first terminal device and the number of the resources for transmitting the data or the signal by the first terminal device may be indicated by joint coding. For example, the fifth indication information may include an SLIV, or the fifth indication information may be an SLIV. The SLIV may be used to jointly indicate the time-domain position of the first one of resources for transmitting the data or the signal and the number of the resources for transmitting the data or the signal, and may uniquely correspond to a start value (the time-domain position of the first one of resources for transmitting the data or the signal by the first terminal device) and a length value (the number of the resources for transmitting the data or the signal by the first terminal device).

In some embodiments, the fifth indication information may not include indication information for indicating the duration for which the first terminal device transmits the data or the signal, or in other words, the fifth indication information may not indicate the duration for which the first terminal device transmits the data or the signal. In some embodiments, the duration for which the first terminal device transmits the data or the signal may, for example, be configured by the network device, or may be predefined (such as defined in a standard). In an implementation, the duration for which the first terminal device transmits the data or the signal, which is configured by the network device or predefined, may be, for example, a duration corresponding to one transmission resource. In this way, if the duration for which the first terminal device transmits the data or the signal is not indicated in the fifth indication information, the second terminal device may consider the duration for which the first terminal device transmits the data or the signal to be the duration corresponding to one transmission resource.

In some embodiments, the fifth indication information may not include indication information for indicating the number of the resources for transmitting the data or the signal by the first terminal device, or in other words, the fifth indication information may not indicate the number of the resources for transmitting the data or the signal by the first terminal device. In some embodiments, the number of the resources for transmitting the data or the signal by the first terminal device may, for example, be configured by the network device, or may be predefined (such as defined in a standard). In an implementation, the number of the resources for transmitting the data or the signal by the first terminal device, which is configured by the network device or predefined, may be, for example, one. In this way, if the number of the resources for transmitting the data or the signal by the first terminal device is not indicated in the fifth indication information, the second terminal device may consider the number of the resources for transmitting the data or the signal by the first terminal device to be one.

According to the method of the embodiment, the second terminal device may determine, based on the fifth indication information, the time for transmitting the data or the signal by the first terminal device, and then receive, at the time, the data or the signal transmitted by the first terminal device.

It is to be noted that when the first terminal device transmits one or more of the carrier, the data and the signal, the transmission may be omnidirectional transmission, so one or more of the carrier, the data and the signal transmitted by the first terminal device may be received by the second terminal device, and may also be received by the A-IoT device.

In some embodiments, the second information may include:
eleventh indication information, which may be used for indicating a frequency for receiving the reflection signal; and/or
twelfth indication information, which may be used for indicating a time for receiving the reflection signal.

In some embodiments, the eleventh indication information may include (or indicate): one or more frequencies for receiving the reflection signal; and/or one or more indexes corresponding to the one or more frequencies for receiving the reflection signal.

In an example, the eleventh indication information may include one or more frequencies for receiving the reflection signal.

For example, the eleventh indication information may include one frequency for receiving the reflection signal, and in this case, the second terminal device may receive the reflection signal from the A-IoT device at the frequency.

In another example, the eleventh indication information may include a plurality of frequencies for receiving the reflection signal, and in this case, the second terminal device may receive a reflection signal from the A-IoT device at the plurality of frequencies.

In an example, the eleventh indication information may include one or more indexes corresponding to the one or more frequencies for receiving the reflection signal.

For example, the eleventh indication information may include an index corresponding to one frequency for receiving the reflection signal, and in this case, the second terminal device may determine one frequency for receiving the reflection signal based on the index, and then receive the reflection signal from the A-IoT device at the frequency.

For another example, the fourth indication information may include index(es) corresponding to a plurality of frequencies for receiving the reflection signal. The plurality of frequencies may correspond to a same index, or the plurality of frequencies may be in one-to-one correspondence with the plurality of indexes. In this case, the second terminal device may determine, based on the indexes corresponding to the plurality of frequencies, the plurality of frequencies for receiving the reflection signal, and then receive the reflection signal from the A-IoT device at the frequencies.

In some embodiments, the correspondences between the one or more frequencies for receiving the reflection signal and the one or more indexes may be indicated by RRC signaling transmitted by the network device.

According to the method of the embodiment, the second terminal device may determine, based on the eleventh indication information, one or more frequencies for receiving the reflection signal, and then receive a reflection signal from the A-IoT device at the one or more frequencies.

In some embodiments, the twelfth indication information may include indication information for indicating one or more of the following, or in other words, the twelfth indication information may indicate one or more of the following:
a moment to start receiving the reflection signal;
an index (for example, referred as a tenth index) corresponding to the moment to start receiving the reflection signal;
a duration for reception of the reflection signal;
a time-domain position of a first one of resources for receiving the reflection signal (namely, a time-domain position of a first one of resources used for receiving the reflection signal); and
a number of the resources for receiving the reflection signal (namely, a number of the resources used for receiving the reflection signal).

In some embodiments, the moment to start receiving the reflection signal is related to a fifth time gap and a time slot where the second information is located. For example, the fifth time gap is a time gap between the moment to start receiving the reflection signal and a start point or an end point of the time slot where the second information is located. Herein, the fifth time gap may be included in the twelfth indication information, so that the second terminal device may determine the moment to start receiving the reflection signal, based on the fifth time gap and the time slot where the second information is located. Further, the second terminal device may start receiving the reflection signal from the A-IoT device at the moment

In some embodiments, the correspondence between the moment to start receiving the reflection signal and the tenth index may be indicated by RRC signaling transmitted by the network device.

In some embodiments, the twelfth indication information may include indication information for indicating: the moment to start receiving the reflection signal, and the duration for reception of the reflection signal. In this case, the moment to start receiving the reflection signal and the duration for reception of the reflection signal may be indicated by joint coding. For example, the twelfth indication information may include an SLIV, or the twelfth indication information may be an SLIV. The SLIV may be used to jointly indicate the moment to start receiving the reflection signal and the duration for reception of the reflection signal, and may uniquely correspond to one start value (the moment to start receiving the reflection signal) and one length value (the duration for reception of the reflection signal).

In some embodiments, the twelfth indication information may include indication information for indicating: the time-domain position of the first one of resources for receiving the reflection signal (such as a start position of the first resource in the time domain), and the number of the resources for receiving the reflection signal. In this case, the time-domain position of the first one of resources for receiving the reflection signal and the number of the resources for receiving the reflection signal may be indicated by joint coding. For example, the twelfth indication information may include an SLIV, or the twelfth indication information may be an SLIV. The SLIV may be used to jointly indicate the time-domain position of the first one of resources for receiving the reflection signal and the number of the resources for receiving the reflection signal, and may uniquely correspond to a start value (the time-domain position of the first one of resources for receiving the reflection signal) and a length value (the number of the resources for receiving the reflection signal).

In some embodiments, the twelfth indication information may not include indication information for indicating the duration for reception of the reflection signal, or in other words, the twelfth indication information may not indicate the duration for reception of the reflection signal. In some embodiments, the duration for reception of the reflection signal may, for example, be configured by the network device, or may be predefined (such as defined in a standard). In an implementation, the duration for reception of the reflection signal, which is configured by the network device or predefined, may be, for example, a duration corresponding to one transmission resource. In this way, if the duration for reception of the reflection signal is not indicated in the twelfth indication information, the second terminal device may consider the duration for reception of the reflection signal to be the duration corresponding to one transmission resource.

In some embodiments, the twelfth indication information may not include indication information for indicating the number of the resources for receiving the reflection signal, or in other words, the twelfth indication information may not indicate the number of the resources for receiving the reflection signal. In some embodiments, the number of the resources for receiving the reflection signal may, for example, be configured by the network device, or may be predefined (such as defined in a standard). In an implementation, the number of the resources for receiving the reflection signal, which is configured by the network device or predefined, may be, for example, one. In this way, if the number of the resources for receiving the reflection signal is not indicated in the twelfth indication information, the second terminal device may consider the number of the resources for receiving the reflection signal to be one.

According to the method of the embodiment, the second terminal device may determine, based on the twelfth indication information, a time for receiving the reflection signal, and then receive a reflection signal from the A-IoT device at the time.

In some embodiments, the second information may be further used by the second terminal device to receive the carrier transmitted by the first terminal device, wherein a frequency for receiving the carrier is the same as the frequency for receiving the reflection signal; a time for receiving the carrier is the same as the time for receiving the reflection signal.

For example, the second terminal device may determine, based on the eleventh indication information, the frequency for receiving the reflection signal, and the frequency may also be used by the second terminal device to receive a carrier transmitted by the first terminal device. For another example, the second terminal device may determine, based on the twelfth indication information, the time for receiving the reflection signal, and the time may also be used by the second terminal device to receive a carrier transmitted by the first terminal device. That is, the eleventh indication information and the twelfth indication information may be used by the second terminal device to receive the reflection signal from the A-IoT device, and may be used by the second terminal device to receive the carrier transmitted by the first terminal device.

In some embodiments, the second information may also be used by the second terminal device to receive the data or signal transmitted by the first terminal device. In this case, the second information may further include:
thirteenth indication information, which may be used for indicating a frequency for receiving the data or the signal; and/or
fourteenth indication information, which may be used for indicating a time for receiving the data or the signal.

In some embodiments, the thirteenth indication information may include (or indicate): one or more frequencies for receiving the data or the signal; and/or one or more indexes corresponding to the one or more frequencies for receiving the data or the signal.

In an example, the thirteenth indication information may include one or more frequencies for receiving the data or the signal.

For example, the thirteenth indication information may include one frequency for receiving the data or the signal, and in this case, the second terminal device may receive, at the frequency, the data or the signal transmitted by the first terminal device.

In another example, the thirteenth indication information may include a plurality of frequencies for receiving the data or the signal, and in this case, the second terminal device may receive, at the plurality of frequencies, the data or the signal transmitted by the first terminal device.

In an example, the thirteenth indication information may include one or more indexes corresponding to the one or more frequencies for receiving the data or the signal.

For example, the thirteenth indication information may include an index corresponding to one frequency for receiving the data or the signal, and in this case, the second terminal device may determine, based on the index, one frequency for receiving the data or the signal, and then receive, at the frequency, the data or the signal transmitted by the first terminal device.

For another example, the thirteenth indication information may include index(es) corresponding to a plurality of frequencies for receiving the data or the signal. The plurality of frequencies may correspond to a same index, or the plurality of frequencies may be in one-to-one correspondence with the plurality of indexes. In this case, the second terminal device may determine, based on the indexes corresponding to the plurality of frequencies, the plurality of frequencies for receiving the data or the signal, and then receive, at the frequencies, the data or the signal transmitted by the first terminal device.

In some embodiments, the correspondences between the one or more frequencies for receiving the data or the signal and the one or more indexes may be indicated by RRC signaling transmitted by the network device.

According to the method of the embodiment, the second terminal device may determine, based on the thirteenth indication information, one or more frequencies for receiving the data or the signal, and then receive, at the one or more frequencies, the data or the signal transmitted by the first terminal device.

In some embodiments, the fourteenth indication information may include indication information for indicating one or more of the following, or in other words, the fourteenth indication information may indicate one or more of the following:
a moment to start receiving the data or the signal;
an index (for example, referred as an eleventh index) corresponding to the moment to start receiving the data or the signal;
a duration for reception of the data or the signal;
a time-domain position of a first one of resources for receiving the data or the signal (namely, a time-domain position of a first one of resources used for receiving the data or the signal); and
a number of the resources for receiving the data or the signal (namely, a number of the resources used for receiving the data or the signal).

In some embodiments, the moment to start receiving the data or the signal is related to a sixth time gap and a time slot where the second information is located. For example, the sixth time gap is a time gap between the moment to start receiving the data or the signal and a start point or an end point of the time slot where the second information is located. Herein, the sixth time gap may be included in the fourteenth indication information, so that the second terminal device may determine the moment to start receiving the data or the signal based on the sixth time gap and the time slot where the second information is located, and then start, at the moment, receiving the data or the signal transmitted by the first terminal device.

In some embodiments, the correspondence between the moment to start receiving the data or the signal and the eleventh index may be indicated by RRC signaling transmitted by the network device.

In some embodiments, the fourteenth indication information may include indication information for indicating: the moment to start receiving the data or the signal, and the duration for reception of the data or the signal. In this case, the moment to start receiving the data or the signal and the duration for reception of the data or the signal may be indicated by joint coding. For example, the fourteenth indication information may include an SLIV, or the fourteenth indication information may be an SLIV. The SLIV may be used to jointly indicate the moment to start receiving the data or the signal and the duration for reception of the data or the signal, and may uniquely correspond to one start value (the moment to start receiving the data or the signal) and one length value (the duration for reception of the data or the signal).

In some embodiments, the fourteenth indication information may include indication information for indicating: the time-domain position of the first one of resources for receiving the data or the signal (such as a start position of the first resource in the time domain), and the number of the resources for receiving the data or the signal. In this case, the time-domain position of the first one of resources for receiving the data or the signal and the number of the resources for receiving the data or the signal may be indicated by joint coding. For example, the fourteenth indication information may include an SLIV, or the fourteenth indication information may be an SLIV. The SLIV may be used to jointly indicate the time-domain position of the first one of resources for receiving the data or the signal and the number of the resources for receiving the data or the signal, and may uniquely correspond to a start value (the time-domain position of the first one of resources for receiving the data or the signal) and a length value (the number of the resources for receiving the data or the signal).

In some embodiments, the fourteenth indication information may not include indication information for indicating the duration for reception of the data or the signal, or in other words, the fourteenth indication information may not indicate the duration for reception of the data or the signal. In some embodiments, the duration for reception of the data or the signal may, for example, be configured by the network device, or may be predefined (such as defined in a standard). In an implementation, the duration for reception of the data or the signal, which is configured by the network device or predefined, may be, for example, a duration corresponding to one transmission resource. In this way, if the duration for reception of the data or the signal is not indicated in the fourteenth indication information, the second terminal device may consider the duration for reception of the data or the signal to be the duration corresponding to one transmission resource.

In some embodiments, the fourteenth indication information may not include indication information for indicating the number of the resources for receiving the data or the signal, or in other words, the fourteenth indication information may not indicate the number of the resources for receiving the data or the signal. In some embodiments, the number of the resources for receiving the data or the signal may, for example, be configured by the network device, or may be predefined (such as defined in a standard). In an implementation, the number of the resources for receiving the data or the signal, which is configured by the network device or predefined, may be, for example, one. In this way, if the number of the resources for receiving the data or the signal is not indicated in the fourteenth indication information, the second terminal device may consider the number of the resources for receiving the data or the signal to be one.

According to the method of the embodiment, the second terminal device may determine, based on the fourteenth indication information, the time for receiving the data or the signal, and then receive, at the time, the data or the signal transmitted by the first terminal device.

In some embodiments, the second information may further include: fifteenth indication information for indicating a power for transmitting one or more of the carrier, the data and the signal by the first terminal device.

Exemplarily, the fifteenth indication information may include one or more of the following, or in other words, the fifteenth indication information may indicate one or more of the following:
a power for transmitting one or more of the carrier, the data and the signal by the first terminal;
a power range for transmission of one or more of the carrier, the data and the signal by the first terminal;
an index corresponding to the power for transmitting one or more of the carrier, the data and the signal by the first terminal (the correspondence may be indicated by the RRC signaling transmitted by the network device);
an index corresponding to the power range for transmission of one or more of the carrier, the data and the signal by the first terminal (the correspondence may be indicated by RRC signaling transmitted by the network device);
an adjustment value relative to a reference transmission power, the power for transmitting the one or more of the carrier, the data and the signal by the first terminal being related to the adjustment value.

According to the method of the present embodiment, the second terminal device may learn, based on the fifteenth indication information, the power for transmitting the one or more of the carrier, the data and the signal by the first terminal. In some embodiments, the power may be used by the second terminal device to cancel or reduce interference of the one or more of the carrier, data, signal on the reflection signal transmitted by the A-IoT device. For example, one or more of the carrier, the data and the signal transmitted by the first terminal device may be superimposed on the reflection signal transmitted by the A-IoT device, then in the case of knowing the power, the second terminal device may cancel, based on the power, one or more of the carrier waves, the data and the signal superimposed on the reflection signal.

In some embodiments, the second information may be DCI (e.g., referred to as third DCI).

In some embodiments, a number of bits of the third DCI may be the same as a number of bits of the second DCI currently configured for the second terminal device, and the third DCI and the second DCI may be scrambled by different RNTIs. The second DCI may be, for example, uplink DCI, downlink DCI or sidelink DCI.

In some embodiments, the number of bits of the third DCI may be configured by the network device. If all bit fields in the third DCI contain fewer bits than the number of bits configured by the network device, zeros may be padded at the end of the third DCI.

In some embodiments, the second information may be the same as the first information in the preceding embodiments, that is, the third DCI may be the same as the first DCI in the preceding embodiments, and in this case, the first DCI and the third DCI may be scrambled by an RNTI shared by the first terminal device and the second terminal device.

In some embodiments, the second information is different from the first information in the preceding embodiments, that is, the third DCI is different from the first DCI in the preceding embodiments. In this case, the third DCI and the first DCI may have the same format, and the network device may pad zeros at the end of one of the third DCI and the first DCI, which has a smaller number of bits, to ensure that the third DCI and the first DCI have the same number of bits. In some embodiments, the third DCI and the first DCI may be scrambled by different RNTIs.

In some embodiments, the second information may be configured grant.

In some embodiments, in a case where the second information is configured grant, the second information includes indication information for indicating one or more of:
a repetition period in the time domain of resources for transmitting a carrier by the first terminal device;
a repetition period in the time domain of resources for transmitting data or a signal by the first terminal device;
a repetition period in the time domain of resources for receiving the reflection signal (namely, a repetition period in the time domain of resources used for receiving the reflection signal); and
a repetition period in the time domain of resources for receiving the data or the signal transmitted by the first terminal device (namely, a repetition period in the time domain of resources used for receiving the data or the signal transmitted by the first terminal device).

Herein, the repetition period in the time domain of resources for transmitting a carrier by the first terminal device may be used by the second terminal device to receive the reflection signal from the A-IoT device, and in some embodiments, it may also be used by the second terminal device to receive the carrier transmitted by the first terminal device. The repetition period in the time domain of resources for transmitting data or a signal by the first terminal device may be used by the second terminal device to receive the data or the signal transmitted by the first terminal device. The repetition period in the time domain of resources for receiving the reflection signal (which is the same as the repetition period in the time domain of the resources for receiving the carrier) may be used by the second terminal device to receive the reflection signal from the A-IoT device, and in some embodiments, it may also be used by the second terminal device to receive the carrier transmitted by the first terminal device. The repetition period in the time domain of resources for receiving the data or the signal transmitted by the first terminal device may be used by the second terminal device to receive the data or the signal transmitted by the first terminal device.

According to the method of the embodiment, the second terminal device may receive the reflection signal from the A-IoT device based on the second information from the network device. That is, the network device may implement scheduling/control of communication between the second terminal device and the A-IoT device by transmitting the second information to the second terminal device.

The communication methods provided by the embodiments of the disclosure have been described above, and in order to facilitate understanding of the embodiments of the disclosure, possible implementations of the communication methods applicable to the embodiments of the disclosure are described below based on examples.

### First scheme

In the first scheme, the number of terminal devices (intermediate nodes) is 1. The terminal device may transmit one or more of a carrier, data and a signal to the A-IoT device according to a DCI (an example of first information) transmitted by a network device (such as a base station), or in other words, the DCI may be used by the terminal device to transmit one or more of the carrier, the data and the signal to the A-IoT device.

Exemplarily, according to a network configuration or a predefinition (such as a definition in a standard), the terminal device may perform transmission, for example, according to DCI transmitted by the network device, in one of the manners as follows.

In manner 1, the carrier is transmitted to the A-IoT device.

In manner 2, the data/signal is transmitted to the A-IoT device.

In manner 3, the carrier and the data/signal are transmitted to the A-IoT device. For example, in chronological order, the data/signal is transmitted first, and then the carrier is transmitted (referred to as manner 3-1). For another example, the carrier and the data/signal are transmitted at different frequencies (referred to as manner 3-2).

In manner 4, the terminal device determines whether to transmit the data/signal or the carrier.

Here, transmitting a carrier refers to transmitting a sinusoidal electromagnetic wave having a certain frequency but not carrying data and signal(s).

The manners above are described below.

### Manner 1

In the manner 1, the terminal device may transmit a carrier to the A-IoT device. In this case, DCI transmitted by the network device to the terminal device (hereinafter referred to as DCI-1-1) may indicate at least one or more of the following 11) to 14).

### 11) Frequency of the carrier (frequency for transmitting the carrier)

In an example, a frequency (such as an absolute frequency) of a carrier may be indicated (or included) in the DCI-1-1.

In some embodiments, one or more frequencies of the carrier may be indicated (or included) in the DCI-1-1. If a plurality of frequencies are indicated (or included), the terminal device may transmit a carrier at the plurality of frequencies.

In another example, index(es) corresponding to the one or more frequencies (such as absolute frequencies) of the carrier may be indicated (or included) in the DCI-1-1. That is, the one or more frequencies of the carrier may be indicated by indicating the index(es) corresponding to the one or more frequencies of the carrier. Herein, the frequency of the carrier corresponding to a certain index may be indicated by, for example, RRC signaling.

In some embodiments, one index may correspond to one or more frequencies. If one index corresponds to a plurality of frequencies, the terminal device may transmit a carrier at the plurality of frequencies corresponding to the index. One index corresponding to the plurality of frequencies can also be understood that the index corresponds to one frequency group (carrier frequency group), and the carrier frequency group may correspond to a plurality of carriers configured by RRC signaling.

In some embodiments, the network device may determine, based on a capability report from terminal device, a number of frequencies indicated (or included) in the DCI-1-1.

### 12) Moment to start transmitting the carrier, or a time position (time-domain position) of a transmission resource for transmitting the carrier

In an example, the DCI-1-1 may indicate (or include) a moment to start transmitting the carrier.

Here, the moment to start transmitting the carrier may be represent as, for example, an interval (time gap) between a time position to start transmitting the carrier and a start point or an end point of a time slot where the DCI-1-1 is located. The time position to start transmitting the carrier may be, for example, a start point of a certain time slot, or a start point of a certain OFDM symbol, or a start point of a certain subframe, and accordingly, a granularity of the interval may be a slot, an OFDM symbol, or a subframe.

In an example, the DCI-1-1 may indicate (or include) an index corresponding to the moment to start transmitting the carrier. That is, the moment to start transmitting the carrier may be indicated by the index corresponding to the moment to start transmitting the carrier. The correspondence between a certain index and the moment to start transmitting the carrier may be indicated, for example, by RRC signaling.

In yet another example, the DCI-1-1 may indicate (or include) a time position of a transmission resource for transmitting the carrier.

For example, the DCI-1-1 may indicate (or include) a time position of a first one of transmission resources for transmitting the carrier. For example, the transmission resource for transmitting the carrier may be a time unit for transmitting the carrier. The time unit may be, for example, a time range corresponding to one or more consecutive OFDM symbols, or may be one or more consecutive time slots, or may be one or more consecutive subframes.

### 13) Duration for transmission of the carrier, or a number of transmission resources for transmitting the carrier

The duration for transmission of the carrier may be represented by, for example, a number of consecutive uplink slots, or a number of consecutive uplink OFDM symbols, or a number of consecutive uplink subframes.

In some embodiments, the moment to start transmitting the carrier and the duration for transmission of the carrier may be indicated jointly. For example, the moment to start transmitting the carrier and the duration for transmission of the carrier may be indicated by an SLIV. Each SLIV uniquely corresponds to a start value (the moment to start transmitting the carrier) and a length value (the duration for transmission of the carrier).

In some embodiments, the time position of the transmission resource for transmitting the carrier (e.g., time position of a first one of transmission resources) and the number of transmission resources for transmitting the carrier may be indicated jointly. For example, the time position of the first one of transmission resources for transmitting the carrier and the number of transmission resources for transmitting the carrier may be indicated by an SLIV, and each SLIV uniquely corresponds to a start value (the time position of the first one of transmission resources) and a length value (the number of transmission resources).

In some embodiments, this information (the duration for transmission of the carrier, or the number of transmission resources for transmitting the carrier) may be absent. In the absence of this information, the duration for transmission of the carrier, or the number of transmission resources for transmitting the carrier may be configured by the network, or predefined (such as defined by a standard). In some embodiments, the duration for transmission of the carrier may be, for example, a duration corresponding to one transmission resource. In some embodiments, the number of transmission resources for transmitting the carrier may be, for example, one. That is, if the information is absent, the terminal device may consider the duration for transmission of the carrier to be the duration corresponding to one transmission resource. Alternatively, the terminal device may consider the number of transmission resources for transmitting the carrier to be one.

### 14) Power for transmitting the carrier

In an example, the DCI-1-1 may indicate (or include) a value or range of power for transmitting the carrier.

In another example, the value or range of power for transmitting the carrier may be indicated (or included) in the DCI-1-1. That is, the value or range of power for transmitting the carrier may be indicated by indicating an index corresponding to the value or range of power for transmitting the carrier. Herein, each index may correspond to a certain power value or power range configured by the RRC layer, or the power value or power range corresponding to each index may be configured by RRC signaling.

In yet another example, a Transmit Power Control (TPC) command may be indicated (or included) in the DCI-1-1. That is, the power for transmitting the carrier may be indicated by the TPC command.

Here, the TPC command may indicate an adjustment value with respect to one reference transmission power, and based on the adjustment value, the terminal device may determine the power for transmitting the carrier. The reference transmission power may be, for example, a transmission power used by the terminal device last time (e.g., the transmission power for transmitting the carrier, data or signal last time).

In some embodiments, the information (the power for transmitting the carrier) may be absence. In absence of this information, the power for transmitting the carrier used by the terminal device may be, for example, the same as a current uplink transmission power, or may be a maximum transmission power currently allowed.

In some embodiments, all of the information described above may be indicated (or included) in the DCI-1-1, that is, information 11) to 14) may be indicated (or included) in the DCI-1-1.

### Manner 2

In the manner 2, the terminal device may transmit a data/signal to the A-IoT device. In this case, DCI transmitted by the network device to the terminal device (hereinafter referred to as DCI-1-2) may indicate at least one or more of the following 21) to 25).

### 21) Frequency for transmitting the data/signal (that is, a carrier frequency for transmitting the data/signal)

In an example, a frequency (such as an absolute frequency) for transmitting the data/signal may be indicated (or included) in the DCI-1-2.

In some embodiments, one or more frequencies for transmitting the data/signal may be indicated (or included) in the DCI-1-2. If a plurality of frequencies are indicated (or included), the terminal device may transmit a carrier at the plurality of frequencies.

In another example, index(es) corresponding to the one or more frequencies (such as absolute frequencies) for transmitting the data/signal may be indicated (or included) in the DCI-1-2. That is, the one or more frequencies for transmitting the data/signal may be indicated by indicating the index(es) corresponding to the one or more frequencies for transmitting the data/signal. Herein, the frequency corresponding to a certain index may be indicated by, for example, RRC signaling.

In some embodiments, one index may correspond to one or more frequencies. If one index corresponds to a plurality of frequencies, the terminal device may transmit data/signal at the plurality of frequencies corresponding to the index. One index corresponding to the plurality of frequencies can also be understood that the index corresponds to one frequency group (carrier frequency group), and the carrier frequency group may correspond to a plurality of carriers configured by RRC signaling.

In some embodiments, the network device may determine, based on a capability report from terminal device, a number of frequencies indicated (or included) in the DCI-1-2.

### 22) Moment to start transmitting the data/signal, or a time position of a transmission resource for transmitting the data/signal

In an example, the DCI-1-2 may indicate (or include) a moment to start transmitting the data/signal.

Here, the moment to start transmitting the data/signal may be represent as, for example, an interval (time gap) between a time position to start transmitting the data/signal and a start point or an end point of a time slot where the DCI-1-2 is located. The time position to start transmitting the data/signal may be, for example, a start point of a certain time slot, or a start point of a certain OFDM symbol, or a start point of a certain subframe, and accordingly, a granularity of the interval may be a slot, an OFDM symbol, or a subframe.

In an example, the DCI-1-2 may indicate (or include) an index corresponding to the moment to start transmitting the data/signal. That is, the moment to start transmitting the data/signal may be indicated by the index corresponding to the moment to start transmitting the data/signal. The correspondence between a certain index and the moment to start transmitting the data/signal may be indicated, for example, by RRC signaling.

In yet another example, the DCI-1-2 may indicate (or include) a time position of a transmission resource for transmitting the data/signal.

For example, the DCI-1-2 may indicate (or include) a time position of a first one of transmission resources for transmitting the data/signal. For example, the transmission resource for transmitting the data/signal may be a time unit for transmitting the data/signal. The time unit may be, for example, a time range corresponding to one or more consecutive OFDM symbols, or may be one or more consecutive time slots, or may be one or more consecutive subframes.

### 23) Duration for transmission of the data/signal, or a number of transmission resources for transmitting the data/signal

The duration for transmission of the data/signal may be represented by, for example, a number of consecutive uplink slots, or a number of consecutive uplink OFDM symbols, or a number of consecutive uplink subframes.

In some embodiments, the moment to start transmitting the data/signal and the duration for transmission of the data/signal may be indicated jointly. For example, the moment to start transmitting the data/signal and the duration for transmission of the data/signal may be indicated through an SLIV, and each SLIV may uniquely correspond to one start value (the moment to start transmitting the data/signal) and one length value (the duration for transmission of the data/signal).

In some embodiments, the time position of the transmission resource for transmitting the data/signal (e.g., time position of a first one of transmission resources) and the number of transmission resources for transmitting the data/signal may be indicated jointly. For example, the time position of the first one of transmission resources for transmitting the data/signal and the number of transmission resources for transmitting the data/signal may be indicated by an SLIV, and each SLIV uniquely corresponds to a start value (the time position of the first one of transmission resources) and a length value (the number of transmission resources).

In some embodiments, this information (the duration for transmission of the data/signal, or the number of transmission resources for transmitting the data/signal) may be absent. In the absence of this information, the duration for transmission of the data/signal, or the number of transmission resources for transmitting the data/signal may be configured by the network, or predefined (such as defined by a standard). In some embodiments, the duration for transmission of the data/signal may be, for example, a duration corresponding to one transmission resource. In some embodiments, the number of transmission resources for transmitting the data/signal may be, for example, one. That is, if the information is absent, the terminal device may consider the duration for transmission of the data/signal to be the duration corresponding to one transmission resource. Alternatively, the terminal device may consider the number of transmission resources for transmitting the data/signal to be one.

### 24) Power for transmitting the data/signal

In an example, the DCI-1-2 may indicate (or include) a value or range of power for transmitting the data/signal.

In another example, the value or range of power for transmitting the data/signal may be indicated (or included) in the DCI-1-2. That is, the value or range of power for transmitting the data/signal may be indicated by indicating an index corresponding to the value or range of power for transmitting the data/signal.

Herein, each index may correspond to a certain power value or power range configured by the RRC layer, or the power value or power range corresponding to each index may be configured by RRC signaling.

In yet another example, a Transmit Power Control (TPC) command may be indicated (or included) in the DCI-1-2. That is, the power for transmitting the data/singal may be indicated by the TPC command.

Here, the TPC command may indicate an adjustment value relative to one reference transmission power, and based on the adjustment value, the terminal device may determine the power for transmitting the data/signal. The reference transmission power may be, for example, a transmission power used by the terminal device last time (e.g., the transmission power for transmitting the carrier, data or signal last time).

In some embodiments, this information (power for transmitting data/signal) may be absent. In absence of this information, the power for transmitting the data/signal used by the terminal device may be, for example, the same as a current uplink transmission power, or may be a maximum transmission power currently allowed.

### 25) IDs of one or more A-IoT devices

The terminal device may transmit data/signals to respective A-IoT devices based on the IDs of the one or more A-IoT devices.

In some embodiments, all of the information described above may be indicated (or included) in the DCI-1-2, that is, information 21) to 25) may be indicated (or included) in the DCI-1-2.

In some embodiments, except the IDs of the one or more A-IoT devices, all of the information described above may be indicated (or included) in the DCI-1-2, that is, information 21) to 24) may be indicated (or included) in the DCI-1-2. In this case, it is up to the terminal device (e.g., a higher layer of the terminal device) to determine to which one or more A-IoT devices the data/signals is sent.

### Manner 3-1

In the manner 3-1, in chronological order, the first terminal device may first transmit the data/signal to the A-IoT device, and then transmit the carrier to the A-IoT device. In this case, the DCI (referred to as DCI-1-3) transmitted by the network device to the terminal device may indicate (or include) at least information in the DCI-1-2 (e.g., one or more of the information 21) to 25)). Additionally, it may indicate (or include) at least one or more of the following information 311) to 314).

### 311) Frequency for transmitting the carrier (that is, the frequency for transmitting the carrier after the transmission of the A-IoT data/signal)

For the content or indication method of this information, reference can be made to the description of the information 11) in the manner 1, which will not be described again here.

In some embodiments, the information may be absence. In the absence of this information, the terminal device may consider that the frequency for transmitting the carrier is the same as the frequency for transmitting the data/signal indicated in DCI-1-3.

### 312) Moment to start transmitting the carrier, or time position of a transmission resource for transmitting the carrier

For the content or indication method of this information, reference can be made to the description of the information 12) in the manner 1, which will not be described again here.

In some embodiments, the information may be absence. In the absence of this information, the terminal device may transmit the carrier after a specific interval (time gap) after completing transmission of the data/signal, and the specific interval may be configured by the network or predefined (such as defined in a standard).

### 313) Duration for transmission of the carrier, or a number of transmission resources for transmitting the carrier

For the content or indication method of this information, reference can be made to the description of the information 13) in the manner 1, which will not be described again here.

In some embodiments, the information may be absence. In the absence of this information, the duration for transmission of the carrier, or the number of transmission resources for transmitting the carrier may be configured by the network, or predefined (such as defined by a standard). In some embodiments, the duration for transmission of the carrier may be, for example, a duration corresponding to one transmission resource. In some embodiments, the number of transmission resources for transmitting the carrier may be, for example, one.

### 314) Power for transmitting the carrier

In an example, the DCI-1-3 may indicate (or include) a value or range of power for transmitting the carrier.

In another example, the value or range of power for transmitting the carrier may be indicated (or included) in the DCI-1-3. That is, the value or range of power for transmitting the carrier may be indicated by indicating an index corresponding to the value or range of power for transmitting the carrier. Herein, each index may correspond to a certain power value or power range configured by the RRC layer, or the power value or power range corresponding to each index may be configured by RRC signaling.

In yet another example, a Transmit Power Control (TPC) command may be indicated (or included) in the DCI-1-3. That is, the power for transmitting the carrier may be indicated by the TPC command.

Here, the TPC command may indicate an adjustment value with respect to one reference transmission power, and based on the adjustment value, the terminal device may determine the power for transmitting the carrier. The reference transmission power may be, for example, the power for transmitting the data/signal indicated in the DCI-1-3.

In some embodiments, the information (the power for transmitting the carrier) may be absence. In absence of this information, the power for transmitting the carrier used by the terminal device may be, for example, the same as a current uplink transmission power, or may be a maximum transmission power currently allowed, or may be the same as the power for transmitting the data/signal indicated in the DCI-1-3.

### Manner 3-2

In the manner 3-2, the first terminal device may transmit the carrier and the data/signal to the A-IoT device at different frequencies. In this case, the DCI (hereinafter referred to as DCI-1-4) transmitted by the network device to the terminal device may indicate (or include) at least all or part of the information in the DCI-1-1, and/or all or part of the information in the DCI-1-2. Exemplarily, at least one or more of the following information 321) to 328) may be indicated (or included) in DCI-1-4.

### 321) Frequency of the carrier (frequency for transmitting the carrier)

For the content or indication method of this information, reference can be made to the description of the information 11) in the manner 1, which will not be described again here.

### 322) Moment to start transmitting the carrier, or time position of a transmission resource for transmitting the carrier

For the content or indication method of this information, reference can be made to the description of the information 12) in the manner 1.

In some embodiments, the moments to start transmitting the carrier or the time positions of the transmission resource for transmitting the carrier may be the same or different for different carriers; and if different, indications may be made separately for different carriers.

### 323) Duration for transmission of the carrier, or a number of transmission resources for transmitting the carrier

For the content or indication method of this information, reference can be made to the description of the information 13) in the manner 1.

In some embodiments, the durations for transmission of the carrier or numbers of transmission resources for transmitting the carrier may be the same or different for different carriers; and if different, indications may be made separately for different carriers.

### 324) Power for transmitting the carrier

For the content or indication method of this information, reference can be made to the description of the information 14) in the manner 1.

In some embodiments, powers for transmitting the carrier may be the same or different for different carriers; and if different, indications may be made separately for different carriers.

### 325) Frequency for transmitting the data/signal (that is, a carrier frequency for transmitting the data/signal)

For the content or indication method of this information, reference can be made to the description of the information 21) in the manner 2, which will not be described again here.

In the manner 3-2, the frequency for transmitting the data/signal is different from the frequency for transmitting the carrier.

### 326) Moment to start transmitting the data/signal, or a time position of a transmission resource for transmitting the data/signal

For the content or indication method of this information, reference can be made to the description of the information 22) in the manner 2.

In some embodiments, moments to start transmitting the data/signal or time positions of the transmission resource for transmitting the data/signal may be the same or different for different data/signals (data/signals carried on different carriers); and if different, indications may be made separately for different data/signals.

### 327) Duration for transmission of the data/signal, or a number of transmission resources for transmitting the data/signal

For the content or indication method of this information, reference can be made to the description of the information 23) in the manner 2.

In some embodiments, durations for transmission of the data/signal or numbers of transmission resources for transmitting the data/signal may be the same or different for different data/signals (data/signals carried on different carriers); and if different, indications may be made separately for different data/signals.

### 328) Power for transmitting the data/signal

For the content or indication method of this information, reference can be made to the description of the information 24) in the manner 2.

In some embodiments, powers for transmitting the data/signal may be the same or different for different data/signals (data/signals carried on different carriers); and if different, indications may be made separately for different data/signals.

In some embodiments, this information (power for transmitting data/signal) may be absent. In the absence of this information, the power for transmitting the data/signal used by the terminal device may be the same as the power for transmitting the carrier indicated in the DCI-1-4.

### Manner 4

In the manner, after receiving the DCI from the network device, the terminal device may determine whether to transmit the data/signal or to transmit the carrier, to the A-IoT device. In this case, DCI transmitted by the network device to the terminal device (hereinafter referred to as DCI-1-5) may indicate at least one or more of the following 41) to 44).

### 41) Frequency of the carrier

In a case where the terminal device determines to transmit the carrier to the A-IoT device, the frequency of the carrier may be the frequency for transmitting the carrier. In a case where the terminal device determines to transmit the data/signal to the A-IoT device, the frequency of the carrier may be the frequency for transmitting the data/signal (carrier frequency).

In an example, a frequency (such as an absolute frequency) of a carrier may be indicated (or included) in the DCI-1-5.

In some embodiments, one or more frequencies of the carrier may be indicated (or included) in the DCI-1-5. If a plurality of frequencies are indicated (or included), the terminal device may transmit a carrier or transmit data/signal at the plurality of frequencies.

In another example, index(es) corresponding to the one or more frequencies (such as absolute frequencies) of the carrier may be indicated (or included) in the DCI-1-5. That is, the one or more frequencies of the carrier may be indicated by indicating the index(es) corresponding to the one or more frequencies of the carrier. Herein, the frequency of the carrier corresponding to a certain index may be indicated by, for example, RRC signaling.

In some embodiments, one index may correspond to one or more frequencies. If one index corresponds to a plurality of frequencies, the terminal device may transmit a carrier or transmit data/signal at the plurality of frequencies corresponding to the index. One index corresponding to the plurality of frequencies can also be understood that the index corresponds to one frequency group (carrier frequency group), and the carrier frequency group may correspond to a plurality of carriers configured by RRC signaling.

In some embodiments, the network device may determine, based on a capability report from terminal device, a number of frequencies indicated (or included) in the DCI-1-5.

### 42) Moment to start transmitting, or time position of a transmission resource

In a case where the terminal determines to transmit the carrier to the A-IoT device, the moment to start transmitting may be a moment to start transmitting the carrier, and the time position of the transmission resource may be a time position of a transmission resource for transmitting the carrier. In a case where the terminal determines to transmit the data/signal to the A-IoT device, the moment to start transmitting may be a moment to start transmitting the data/carrier, and the time position of the transmission resource may be a time position of a transmission resource for transmitting the data/signal.

In an example, the DCI-1-5 may indicate (or include) a moment to start transmitting.

Here, the moment to start transmitting may be represent as, for example, an interval (time gap) between a time position to start transmitting and a start point or an end point of a time slot where the DCI-1-5 is located. The time position to start transmitting may be, for example, a start point of a certain time slot, or a start point of a certain OFDM symbol, or a start point of a certain subframe, and accordingly, a granularity of the interval may be a slot, an OFDM symbol, or a subframe.

In an example, the DCI-1-5 may indicate (or include) an index corresponding to the moment to start transmitting. That is, the moment to start transmitting may be indicated by the index corresponding to the moment to start transmitting. The correspondence between a certain index and the moment to start transmitting may be indicated, for example, by RRC signaling.

In yet another example, the DCI-1-5 may indicate (or include) a time position of a transmission resource.

For example, the DCI-1-5 may indicate (or include) a time position of a first one of transmission resources. Herein, for example, one transmission resource may be a time unit, which may be, for example, a time range corresponding to one or more consecutive OFDM symbols, or may be one or more consecutive time slots, or may be one or more consecutive subframes.

### 43) Transmission duration, or a number of transmission resources

In a case where the terminal determines to transmit the carrier to the A-IoT device, the transmission duration may be a duration for transmission of the carrier, and the number of transmission resources may be a number of transmission resources for transmitting the carrier. In a case where the terminal determines to transmit the data/signal to the A-IoT device, the transmission duration may be a duration for transmission of the data/signal, and the number of transmission resources may be a number of transmission resources for transmitting the data/signal.

The transmission duration may be represented by, for example, a number of consecutive uplink slots, or a number of consecutive uplink OFDM symbols, or a number of consecutive uplink subframes.

In some embodiments, the moment to start transmitting and the transmission duration may be indicated jointly. For example, the moment to start transmitting and the transmission duration may be indicated through an SLIV, and each SLIV may uniquely correspond to one start value (the moment to start transmitting) and one length value (the transmission duration).

In some embodiments, the time position of the transmission resource (e.g., time position of a first one of transmission resources) and the number of transmission resources may be indicated jointly. For example, the time position of the first one of transmission resources the carrier and the number of transmission resources may be indicated by an SLIV, and each SLIV uniquely corresponds to a start value (the time position of the first one of transmission resources) and a length value (the number of transmission resources).

In some embodiments, this information (the transmission duration, or the number of transmission resources) may be absent. In the absence of this information, the transmission duration, or the number of transmission resources may be configured by the network, or predefined (such as defined by a standard). In some embodiments, the transmission duration may be, for example, a duration corresponding to one transmission resource. In some embodiments, the number of transmission resources may be, for example, one. That is, if the information is absent, the terminal device may consider the transmission duration to be the duration corresponding to one transmission resource. Alternatively, the terminal device may consider the number of transmission resources to be one.

### 44) Transmit power

In a case where the terminal device determines to transmit the carrier to the A-IoT device, the transmit power may be a power for transmitting the carrier. In a case where the terminal device determines to transmit the data/signal to the A-IoT device, the transmit power may be a power for transmitting the data/signal.

In an example, the DCI-1-5 may indicate (or include) a power value or power range of the transmit power.

In another example, the power value or power range of the transmit power may be indicated (or included) in the DCI-1-5. That is, the power value or power range of the transmit power may be indicated by indicating an index corresponding to the power value or power range of the transmit power.

Herein, each index may correspond to a certain power value or power range configured by the RRC layer, or the power value or power range corresponding to each index may be configured by RRC signaling.

In yet another example, a Transmit Power Control (TPC) command may be indicated (or included) in the DCI-1-5. That is, the transmit power may be indicated by transmitting the TPC command.

Here, the TPC command may indicate an adjustment value with respect to one reference transmission power, based on which the terminal device may determine the transmit power. The reference transmission power may be, for example, a transmission power used by the terminal device last time (e.g., the transmission power for transmitting the carrier, data or signal last time).

In some embodiments, this information (transmit power) may be absent. In absence of this information, the transmit power used by the terminal device may be, for example, the same as a current uplink transmission power, or may be a maximum transmission power currently allowed.

In some embodiments, all of the information described above may be indicated (or included) in the DCI-1-5, that is, information 41) to 44) may be indicated (or included) in the DCI-1-2.

In some embodiments, it may be up to the terminal device (e.g., a higher layer of the terminal device) to determine to which A-IoT device or devices to transmit the carrier, or to which A-IoT device or devices to transmit the data/signals.

In some embodiments, one or more of the DCI-1-1 to DCI-1-5 above may correspond to an identical DCI format, the number of bits of the DCI format may be configured by a network device (such as a base station), and if the number of bits contained in all bit fields in the DCI format is less than the number of bits configured by the network device, zeros should be padded at the end of the DCI.

In some embodiments, to reduce the number of DCI blind detections performed by the terminal device, the number of bits of the DCI format may be set to be the same as a number of bits of an uplink, downlink or sidelink DCI format currently configured for the terminal device. For DCIs with the same number of bits, different Radio Network Temporary Identifiers (RNTIs) can be used for scrambling the DCIs to distinguish between individual DCIs.

### Second scheme

In the second scheme, the number of terminal devices (intermediate nodes) is more than 1. For example, the terminal devices may be classified into a first type of terminal devices and a second type of terminal devices. The first terminal device in the preceding embodiments may belong to, for example, the first type of terminal devices, and the second terminal device may belong to, for example, the second type of terminal devices. Herein, the first type of terminal devices and the second type of terminal devices may receive DCI from a network device (such as a base station), the first type of terminal devices may transmit one or more of a carrier, data and a signal to the A-IoT device according to the DCI from the network device; and the second type of terminal devices may receive a reflection signal from the A-IoT device according to the DCI from the network device, and/or receive one or more of the carrier, the data and the signal transmitted by the first type of terminal devices.

In the second scheme, the first type of terminal devices transmit one or more of the carrier, the data and the signal to the A-IoT device according to the DCI in the same manner as in the first scheme, which will not be described again here.

In the second scheme, the second type of terminal devices may receive a certain DCI transmitted by the network device, and receive a reflection signal of the A-IoT device according to an indication of the DCI.

In one possible implementation, the DCI received by the second type of terminal devices is the same as the DCI received by the first type of terminal devices. That is, the network device may transmit the same DCI to the first type of terminal devices and the second type of terminal devices, which may be scrambled by an RNTI shared by the two types of terminal devices. In some embodiments, the DCI may be transmitted within a common Physical Downlink Control Channel (PDCCH) search space configured by the terminal device.

In another possible implementation, the DCI received by the second type of terminal devices is different from the DCI received by the first type of terminal devices. In this case, the format of the DCI received by the second type of terminal devices may be the same as the format of the DCI received by the first type of terminal devices, and the network device may pad zeros at the end of one of the two DCIs with a smaller number of bits to ensure that the number of bits of the two DCIs is the same, but the two DCI are scrambled by different RNTIs. Exemplarily, in this case, the DCI received by the second type of terminal devices may indicate at least one or more of the following information 51) to 53).

### 51) Frequency of the carrier

The frequency of the carrier may include: a frequency for receiving the reflection signal of the A-IoT device, and/or, a frequency for receiving one or more of the carrier, the data and the signal transmitted by the first type of terminal devices. Herein, the frequency for receiving the reflection signal of the A-IoT device is namely a frequency for receiving the carrier transmitted by the first type of terminal devices.

In an example, a frequency (such as an absolute frequency) of a carrier may be indicated (or included) in the DCI. In some embodiments, one or more frequencies of the carrier may be indicated (or included) in the DCI.

In another example, index(es) corresponding to the one or more frequencies (such as absolute frequencies) of the carrier may be indicated (or included) in the DCI. That is, the one or more frequencies of the carrier may be indicated by indicating the index(es) corresponding to the one or more frequencies of the carrier. Herein, the frequency of the carrier corresponding to a certain index may be indicated by, for example, RRC signaling. In some embodiments, one index may correspond to one or more frequencies.

### 52) Moment to start receiving

The moment to start receiving may include: a moment to start receiving a reflection signal of the A-IoT device, and/or, a moment to start receiving one or more of the carrier, the data and the signal transmitted by the first type of terminal devices. Here, the moment to start receiving the reflection signal of the A-IoT device may be the same as the moment to start receiving the carrier transmitted by the first type of terminal devices.

In an example, the DCI may indicate (or include) a moment to start receiving.

In an example, the DCI may indicate (or include) an index corresponding to the moment to start receiving. That is, the moment to start receiving may be indicated by the index corresponding to the moment to start receiving.

In yet another example, the DCI may indicate (or include) a time position of a resource for receiving, such as a time position of a first one of resources for receiving.

### 53) Reception duration

The reception duration may include: a duration for receiving a reflection signal of the A-IoT device, and/or, a duration for receiving one or more of the carrier, the data and the signal transmitted by the first type of terminal devices. Here, the duration for receiving the reflection signal of the A-IoT device may be the same as the duration for receiving the carrier transmitted by the first type of terminal devices.

In some embodiments, the moment to start receiving and the reception duration may be indicated jointly. For example, the moment to start receiving and the reception duration may be indicated through an SLIV, and each SLIV may uniquely correspond to one start value (the moment to start receiving) and one length value (the reception duration).

In the second scheme, the second type of terminal devices may receive one or more of the carrier, the data and the signal transmitted by the first type of terminal devices in order to eliminate or reduce interference of the one or more of the carrier, the data and the signal transmitted by the first type of terminal devices on the reflected signal of the A-IoT device.

### Third scheme

In the third scheme, the number of terminal devices (intermediate nodes) is 1. The terminal device may transmit one or more of a carrier, data and a signal to the A-IoT device according to a configured grant (an example of first information) transmitted by a network device (such as a base station), or in other words, the configured grant may be used by the terminal device to transmit one or more of the carrier, the data and the signal to the A-IoT device.

Exemplarily, according to a network configuration or a predefinition (such as a definition in a standard), the terminal device may perform transmission, for example, according to the configured grant transmitted by the network device, in one of the manners as follows.

In manner 5, the carrier is transmitted to the A-IoT device.

In manner 6, the data/signal is transmitted to the A-IoT device.

In manner 7, the carrier and the data/signal are transmitted to the A-IoT device. For example, in chronological order, the data/signal is transmitted first, and then the carrier is transmitted (referred to as manner 7-1). For another example, the carrier and the data/signal are transmitted at different frequencies (referred to as manner 7-2).

In manner 8, the terminal device determines whether to transmit the data/signal or the carrier.

Here, transmitting a carrier refers to transmitting a sinusoidal electromagnetic wave having a certain frequency but not carrying data and signal(s).

In some embodiments, for the manner 5, the configured grant transmitted by the network device may indicate (or include) all or part of the information in the DCI-1-1. Additionally, the configured grant may further indicate (or include) the repetition period of the transmission resources (transmission resources for transmitting the carrier).

In some embodiments, for the manner 6, the configured grant transmitted by the network device may indicate (or include) all or part of the information in the DCI-1-2. Additionally, the configured grant may further indicate (or include) the repetition period of the transmission resources (transmission resources for transmitting the data/signal).

In some embodiments, for the manner 7-1, the configured grant transmitted by the network device may indicate (or include) all or part of the information in the DCI-1-3. Additionally, the configured grant may further indicate (or include) the repetition period of the transmission resources (transmission resources for transmitting the carrier, and/or, transmission resources for transmitting the data/signal).

In some embodiments, for the manner 7-2, the configured grant transmitted by the network device may indicate (or include) all or part of the information in the DCI-1-4. Additionally, the configured grant may further indicate (or include) the repetition period of the transmission resources (transmission resources for transmitting the carrier, and/or, transmission resources for transmitting the data/signal).

In some embodiments, for the manner 8, the configured grant transmitted by the network device may indicate (or include) all or part of the information in the DCI-1-5. Additionally, the configured grant may further indicate (or include) the repetition period of the transmission resources, and whether the transmission resources are used to transmit the data/signal or to transmit the carrier is determined by the terminal device.

For ease of understanding, the following provides an illustrative description using the manner 8 as an example.

In the manner 8, after receiving the configured grant from the network device, the terminal device may determine whether to transmit the data/signal or to transmit the carrier, to the A-IoT device. In this case, the configured grant transmitted by the network device to the terminal device may indicate at least one or more of the following information 61) to 65).

### 61) Frequency of the carrier

In a case where the terminal device determines to transmit the carrier to the A-IoT device, the frequency of the carrier may be the frequency for transmitting the carrier. In a case where the terminal device determines to transmit the data/signal to the A-IoT device, the frequency of the carrier may be the frequency for transmitting the data/signal (carrier frequency).

For the content or indication method of this information, reference can be made to the description of the information 41) in the manner 4, which will not be described again here.

### 62) Moment to start transmitting, or time position of a transmission resource

In a case where the terminal determines to transmit the carrier to the A-IoT device, the moment to start transmitting may be a moment to start transmitting the carrier, and the time position of the transmission resource may be a time position of a transmission resource for transmitting the carrier. In a case where the terminal determines to transmit the data/signal to the A-IoT device, the moment to start transmitting may be a moment to start transmitting the data/carrier, and the time position of the transmission resource may be a time position of a transmission resource for transmitting the data/signal.

For the content or indication method of this information, reference can be made to the description of the information 42) in the manner 4, which will not be described again here.

### 63) Transmission duration, or a number of transmission resources

In a case where the terminal determines to transmit the carrier to the A-IoT device, the transmission duration may be a duration for transmission of the carrier, and the number of transmission resources may be a number of transmission resources for transmitting the carrier. In a case where the terminal determines to transmit the data/signal to the A-IoT device, the transmission duration may be a duration for transmission of the data/signal, and the number of transmission resources may be a number of transmission resources for transmitting the data/signal.

For the content or indication method of this information, reference can be made to the description of the information 43) in the manner 4, which will not be described again here.

### 64) Repetition period of transmission resources (that is, the repetition period of the transmission resources in the time domain)

In a case where the terminal device determines to transmit the carrier to the A-IoT device, the repetition period of the transmission resources may be a repetition period of transmission resources for transmitting the carrier. In a case where the terminal device determines to transmit the data/signal to the A-IoT device, the repetition period of the transmission resources may be a repetition period of transmission resources for transmitting the data/signal.

### 65) Transmit power

In a case where the terminal device determines to transmit the carrier to the A-IoT device, the transmit power may be a power for transmitting the carrier. In a case where the terminal device determines to transmit the data/signal to the A-IoT device, the transmit power may be a power for transmitting the data/signal.

For the content or indication method of this information, reference can be made to the description of the information 44) in the manner 4, which will not be described again here.

### Fourth scheme

In the fourth scheme, the number of terminal devices (intermediate nodes) is more than 1. For example, the terminal devices may be classified into a first type of terminal devices and a second type of terminal devices. The first terminal device in the preceding embodiments may belong to, for example, the first type of terminal devices, and the second terminal device may belong to, for example, the second type of terminal devices. Herein, the first type of terminal devices and the second type of terminal devices may receive a configured grant from a network device (such as a base station), the first type of terminal devices may transmit one or more of a carrier, data and a signal to the A-IoT device according to the configured grant from the network device; and the second type of terminal devices may receive a reflection signal from the A-IoT device according to the configured grant from the network device, and/or receive one or more of the carrier, the data and the signal transmitted by the first type of terminal devices.

In the fourth scheme, the first type of terminal devices transmit one or more of the carrier, the data and the signal to the A-IoT device according to the configured grant in the same manner as in the third scheme, which will not be described again here.

In the fourth scheme, the second type of terminal devices may receive a certain configured grant transmitted by the network device, and receive a reflection signal of the A-IoT device according to an indication of the configured grant.

In one possible implementation, the configured grant received by the second type of terminal devices is the same as the configured grant received by the first type of terminal devices. That is, the network device may transmit the same configured grant to the first type of terminal devices and the second type of terminal devices.

In another possible implementation, the configured grant received by the second type of terminal devices is different from the configured grant received by the first type of terminal devices. In this case, the configured grant received by the second type of terminal devices may, for example, indicating at least one or more of the following information 71) to 73).

### 71) Frequency of the carrier

For the content or indication method of this information, reference can be made to the description of the information 51) in the second scheme, which will not be described again here.

### 72) Moment to start receiving

For the content or indication method of this information, reference can be made to the description of the information 52) in the second scheme, which will not be described again here.

### 73) Reception duration

For the content or indication method of this information, reference can be made to the description of the information 53) in the second scheme, which will not be described again here.

### 74) Repetition period of reception resources

The repetition period of reception resources may include: a repetition period of reception resources for receiving the reflection signal of the A-IoT device, and/or, a repetition period of reception resources for receiving one or more of the carrier, the data and the signal transmitted by the first type of terminal devices. Here, the repetition period of reception resources for receiving the reflection signal of the A-IoT device may be the same as the repetition period of reception resources for receiving the carrier transmitted by the first type of terminal devices.

According to the method of the embodiment, it is possible to implement efficient scheduling and control of the A-IoT link, that is, it is possible to implement scheduling/control of communication between the terminal device and the A-IoT device.

The preferred embodiments of the disclosure have been described in detail above with reference to the accompanying drawings, but the disclosure is not limited to the specific details in the above-described embodiments. Within the scope of the technical concept of the disclosure, various simple modifications can be made to the technical solutions of the disclosure, and these simple modifications all fall within the scope of protection of the disclosure. For example, various specific technical features described in the above-described detailed description can be combined in any suitable manner without contradiction, and various possible combinations will not be described separately in the disclosure in order to avoid unnecessary repetition. For example, various embodiments of the disclosure may be combined arbitrarily, and as long as they do not violate the idea of the disclosure, they should also be regarded as the disclosure of the disclosure. For another example, on the premise that there is no conflict, each embodiment described in the disclosure and/or the technical features in each embodiment can be arbitrarily combined with the prior art, and the technical solution obtained after the combination should also fall within the scope of protection of the disclosure.

It should be further understood that in various method embodiments of the disclosure, sizes of serial numbers of the above processes do not mean a sequence of execution, and the sequence of execution of each process should be determined by its function and internal logic, and should not constitute any limitation on implementation processes of the embodiments of the disclosure. In addition, in the embodiments of the disclosure, the terms "downlink", "uplink" and "sidelink" are used to indicate the transmission direction of signals or data. Herein, "downlink" is used to indicate that the transmission direction of signals or data is a first direction transmitted from a station to a UE of the cell, "uplink" is used to indicate that the transmission direction of signals or data is a second direction transmitted from the UE of the cell to the station, and "sidelink" is used to indicate that the transmission direction of signals or data is a third direction transmitted from UE 1 to UE 2. For example, "downlink signal" indicates that the transmission direction of the signal is the first direction. In addition, in the embodiments of the disclosure, the term "and/or" is merely an association relationship describing associated objects, indicating that there may be three kinds of relationships. Specifically, A and/or B may represent three cases in which A is present alone, A and B are present at the same time, and B is present alone. In addition, the character "/" in the disclosure generally indicates that the relationship between the related objects is "or".

Based on the foregoing embodiments, embodiments of the disclosure provide corresponding communication apparatuses.

FIG. 6 is a first schematic structural diagram of a communication apparatus according to an embodiment of the disclosure, which is applied to a first terminal device. As shown in FIG. 6, a communication apparatus 600 (hereinafter simply referred to as the apparatus 600) includes a first receiving unit 601.

The first receiving unit 601 is configured to receive first information from a network device, wherein the first information is used by the apparatus 600 to transmit a first transmission content to an Ambient Internet of Things (A-IoT) device, the first transmission content including one or more of: a carrier, data, and a signal.

In some embodiments, the first transmission content includes the cattier, and the first information includes one or more of: first indication information for indicating a frequency for transmitting the carrier; second indication information for indicating a time for transmitting the carrier; and third indication information for indicating a power for transmitting the carrier.

In some embodiments, the first transmission content includes the data or the signal, and the first information includes one or more of: fourth indication information for indicating a frequency for transmitting the data or the signal; fifth indication information for indicating a time for transmitting the data or the signal; sixth indication information for indicating a power for transmitting the data or the signal; and an identifier of the A-IoT device.

In some embodiments, the first transmission content further includes the cattier, and the first information further includes one or more of: first indication information for indicating a frequency for transmitting the carrier; second indication information for indicating a time for transmitting the carrier; and third indication information for indicating a power for transmitting the carrier.

In some embodiments, the time for transmitting the data or the signal is prior to the time for transmitting the carrier; in a case where the first information includes the fourth indication information and does not include the first indication information, the frequency for transmitting the carrier is the same as the frequency for transmitting the data or the signal; in a case where the first information includes the fifth indication information and does not include the second indication information, a time gap between the time for transmitting the carrier and the time for transmitting the data or the signal is a first time gap, the first time gap being predefined, or configured by the network device; in a case where the first information includes the sixth indication information and does not include the third indication information, the power for transmitting the carrier is the same as the power for transmitting the data or the signal.

In some embodiments, the first transmission content further includes the carrier, and the time for transmitting the data or the signal is prior to a time for transmitting the carrier, wherein a frequency for transmitting the carrier is the same as the frequency for transmitting the data or the signal; a time gap between a time for transmitting the carrier and the time for transmitting the data or the signal is a first time gap, the first time gap being predefined, or configured by the network device; a power for transmitting the carrier is the same as the power for transmitting the data or the signal.

In some embodiments, the frequency for transmitting the data or the signal is different from the frequency for transmitting the carrier, in a case where the first information includes the second indication information and does not include the fifth indication information, the time for transmitting the data or the signal is the same as the time for transmitting the carrier; in a case where the first information includes the fifth indication information and does not include the second indication information, the time for transmitting the carrier is the same as the time for transmitting the data or the signal; in a case where the first information includes the third indication information and does not include the sixth indication information, the power for transmitting the data or the signal is the same as the power for transmitting the carrier; in a case where the first information includes the sixth indication information and does not include the third indication information, the power for transmitting the carrier is the same as the power for transmitting the data or the signal.

In some embodiments, the first indication information includes one or more of: one or more frequencies for transmitting the carrier; and/or, one or more indexes corresponding to the one or more frequencies for transmitting the carrier.

In some embodiments, the second indication information includes indication information for indicating one or more of: a moment to start transmitting the carrier; an index corresponding to the moment to start transmitting the carrier; a duration for transmission of the carrier; a time-domain position of a first one of resources for transmitting the carrier; and a number of the resources for transmitting the carrier.

In some embodiments, in a case where the second indication information includes indication information for indicating the moment to start transmitting the carrier and the duration, the moment to start transmitting the carrier and the duration are indicated by joint coding; in a case where the second indication information includes indication information for indicating the time-domain position of the first resource and the number of the resources, the time-domain position of the first resource and the number of the resources are indicated by joint coding.

In some embodiments, the moment to start transmitting the carrier is related to a second time gap and a time slot where the first information is located, the second time gap being included in the second indication information.

In some embodiments, the third indication information includes one or more of: the power for transmitting the carrier; a power range for transmission of the carrier; an index corresponding to the power for transmitting the carrier; an index corresponding to the power range for transmission of the carrier; and a first adjustment value relative to a reference transmission power, the power for transmitting the carrier being related to the first adjustment value.

In some embodiments, the fourth indication information includes: one or more frequencies for transmitting the data or the signal; and/or, one or more indexes corresponding to the one or more frequencies for transmitting the data or the signal.

In some embodiments, the fifth indication information includes indication information for indicating one or more of: a moment to start transmitting the data or the signal; an index corresponding to the moment to start transmitting the data or the signal; a duration for transmission of the data or the signal; a time-domain position of a first one of resources for transmitting the data or the signal; and a number of the resources for transmitting the data or the signal.

In some embodiments, in a case where the fifth indication information includes indication information for indicating the moment to start transmitting the data or the signal and the duration, the moment to start transmitting the data or the signal and the duration are indicated by joint coding; in a case where the fifth indication information includes indication information for indicating the time-domain position of the first one of resources and the number of the resources, the time-domain position of the first one of resources and the number of the resources are indicated by joint coding.

In some embodiments, the moment to start transmitting the data or the signal is related to a third time gap and a time slot where the first information is located, the third time gap being included in the fifth indication information.

In some embodiments, the sixth indication information includes one or more of: the power for transmitting the data or the signal; a power range for transmission of the data or the signal; an index corresponding to the power for transmitting the data or the signal; an index corresponding to the power range for transmission of the data or the signal; and a second adjustment value relative to a reference transmission power, the power for transmitting the data or the signal being related to the second adjustment value.

In some embodiments, the first transmission content is determined by the apparatus 600, and the first information includes one or more of: seventh indication information for indicating a frequency for transmitting the first transmission content; eighth indication information for indicating a time for transmitting the first transmission content; and ninth indication information for indicating a power for transmitting the first transmission content.

In some embodiments, the seventh indication information includes: one or more frequencies for transmitting the first transmission content; and/or, one or more indexes corresponding to the one or more frequencies for transmitting the first transmission content.

In some embodiments, the eighth indication information includes indication information for indicating one or more of: a moment to start transmitting the first transmission content; an index corresponding to the moment to start transmitting the first transmission content; a duration for transmission of the first transmission content; a time-domain position of a first one of resources for transmitting the first transmission content; and a number of the resources for transmitting the first transmission content.

In some embodiments, in a case where the eighth indication information includes indication information for indicating the moment to start transmitting the first transmission content and the duration, the moment to start transmitting the first transmission content and the duration are indicated by joint coding; in a case where the eighth indication information includes indication information for indicating the time-domain position of the first resource and the number of the resources, the time-domain position of the first resource and the number of the resources are indicated by joint coding.

In some embodiments, the moment to start transmitting the first transmission content is related to a fourth time gap and a time slot where the first information is located, the fourth time gap being included in the eighth indication information.

In some embodiments, the ninth indication information includes one or more of: the power for transmitting the first transmission content; a power range for transmission of the first transmission content; an index corresponding to the power for transmitting the first transmission content; an index corresponding to the power range for transmission of the first transmission content; and a third adjustment value relative to a reference transmission power, the power for transmitting the first transmission content being related to the third adjustment value.

In some embodiments, the first information is first Downlink Control Information (DCI), a number of bits of the first DCI is the same as a number of bits of second DCI currently configured for the apparatus 600, and the first DCI and the second DCI are scrambled by different Radio Network Temporary Identifiers (RNTIs); and the second DCI is uplink DCI, downlink DCI or sidelink DCI.

In some embodiments, the first information is configured grant, and the first information further includes tenth indication information, the tenth indication information being used to indicate a repetition period in the time domain of resources for transmitting the first transmission content.

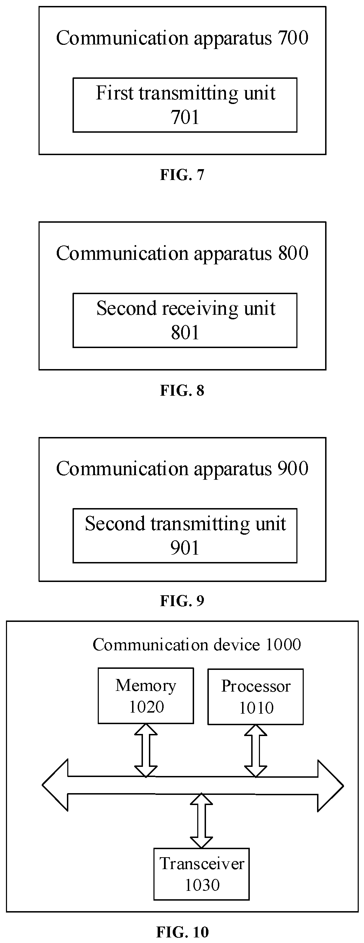

FIG. 7 is a second schematic structural diagram of a communication apparatus according to an embodiment of the disclosure, which is applied to a network device. As shown in FIG. 7, a communication apparatus 700 (hereinafter simply referred to as the apparatus 700) includes a first transmitting unit 701.

The first transmitting unit 701 is configured to transmit first information to a first terminal device, wherein the first information is used by the first terminal device to transmit a first transmission content to an Ambient Internet of Things (A-IoT) device, the first transmission content including one or more of: a carrier, data, and a signal.

In some embodiments, the first transmission content includes the cattier, and the first information includes one or more of: first indication information for indicating a frequency for transmitting the carrier; second indication information for indicating a time for transmitting the carrier; and third indication information for indicating a power for transmitting the carrier.

In some embodiments, the first transmission content includes the data or the signal, and the first information includes one or more of: fourth indication information for indicating a frequency for transmitting the data or the signal; fifth indication information for indicating a time for transmitting the data or the signal; sixth indication information for indicating a power for transmitting the data or the signal; and an identifier of the A-IoT device.

In some embodiments, the first transmission content further includes the cattier, and the first information further includes one or more of: first indication information for indicating a frequency for transmitting the carrier; second indication information for indicating a time for transmitting the carrier; and third indication information for indicating a power for transmitting the carrier.

In some embodiments, the time for transmitting the data or the signal is prior to the time for transmitting the carrier; in a case where the first information includes the fourth indication information and does not include the first indication information, the frequency for transmitting the carrier is the same as the frequency for transmitting the data or the signal; in a case where the first information includes the fifth indication information and does not include the second indication information, a time gap between the time for transmitting the carrier and the time for transmitting the data or the signal is a first time gap, the first time gap being predefined, or configured by the apparatus 700; in a case where the first information includes the sixth indication information and does not include the third indication information, the power for transmitting the carrier is the same as the power for transmitting the data or the signal.

In some embodiments, the first transmission content further includes the carrier, and the time for transmitting the data or the signal is prior to a time for transmitting the carrier, wherein a frequency for transmitting the carrier is the same as the frequency for transmitting the data or the signal; a time gap between a time for transmitting the carrier and the time for transmitting the data or the signal is a first time gap, the first time gap being predefined, or configured by the apparatus 700; a power for transmitting the carrier is the same as the power for transmitting the data or the signal.

In some embodiments, the frequency for transmitting the data or the signal is different from the frequency for transmitting the carrier, in a case where the first information includes the second indication information and does not include the fifth indication information, the time for transmitting the data or the signal is the same as the time for transmitting the carrier; in a case where the first information includes the fifth indication information and does not include the second indication information, the time for transmitting the carrier is the same as the time for transmitting the data or the signal; in a case where the first information includes the third indication information and does not include the sixth indication information, the power for transmitting the data or the signal is the same as the power for transmitting the carrier; in a case where the first information includes the sixth indication information and does not include the third indication information, the power for transmitting the carrier is the same as the power for transmitting the data or the signal.

In some embodiments, the first indication information includes one or more of: one or more frequencies for transmitting the carrier; and/or, one or more indexes corresponding to the one or more frequencies for transmitting the carrier.

In some embodiments, the second indication information includes indication information for indicating one or more of: a moment to start transmitting the carrier; an index corresponding to the moment to start transmitting the carrier; a duration for transmission of the carrier; a time-domain position of a first one of resources for transmitting the carrier; and a number of the resources for transmitting the carrier.

In some embodiments, in a case where the second indication information includes indication information for indicating the moment to start transmitting the carrier and the duration, the moment to start transmitting the carrier and the duration are indicated by joint coding; in a case where the second indication information includes indication information for indicating the time-domain position of the first resource and the number of the resources, the time-domain position of the first resource and the number of the resources are indicated by joint coding.

In some embodiments, the moment to start transmitting the carrier is related to a second time gap and a time slot where the first information is located, the second time gap being included in the second indication information.

In some embodiments, the third indication information includes one or more of: the power for transmitting the carrier; a power range for transmission of the carrier; an index corresponding to the power for transmitting the carrier; an index corresponding to the power range for transmission of the carrier; and a first adjustment value relative to a reference transmission power, the power for transmitting the carrier being related to the first adjustment value.

In some embodiments, the fourth indication information includes: one or more frequencies for transmitting the data or the signal; and/or, one or more indexes corresponding to the one or more frequencies for transmitting the data or the signal.

In some embodiments, the fifth indication information includes indication information for indicating one or more of: a moment to start transmitting the data or the signal; an index corresponding to the moment to start transmitting the data or the signal; a duration for transmission of the data or the signal; a time-domain position of a first one of resources for transmitting the data or the signal; and a number of the resources for transmitting the data or the signal.

In some embodiments, in a case where the fifth indication information includes indication information for indicating the moment to start transmitting the data or the signal and the duration, the moment to start transmitting the data or the signal and the duration are indicated by joint coding; in a case where the fifth indication information includes indication information for indicating the time-domain position of the first one of resources and the number of the resources, the time-domain position of the first one of resources and the number of the resources are indicated by joint coding.

In some embodiments, the moment to start transmitting the data or the signal is related to a third time gap and a time slot where the first information is located, the third time gap being included in the fifth indication information.

In some embodiments, the sixth indication information includes one or more of: the power for transmitting the data or the signal; a power range for transmission of the data or the signal; an index corresponding to the power for transmitting the data or the signal; an index corresponding to the power range for transmission of the data or the signal; and a second adjustment value relative to a reference transmission power, the power for transmitting the data or the signal being related to the second adjustment value.

In some embodiments, the first transmission content is determined by the first terminal device 600, and the first information includes one or more of: seventh indication information for indicating a frequency for transmitting the first transmission content; eighth indication information for indicating a time for transmitting the first transmission content; and ninth indication information for indicating a power for transmitting the first transmission content.

In some embodiments, the seventh indication information includes: one or more frequencies for transmitting the first transmission content; and/or, one or more indexes corresponding to the one or more frequencies for transmitting the first transmission content.

In some embodiments, the eighth indication information includes indication information for indicating one or more of: a moment to start transmitting the first transmission content; an index corresponding to the moment to start transmitting the first transmission content; a duration for transmission of the first transmission content; a time-domain position of a first one of resources for transmitting the first transmission content; and a number of the resources for transmitting the first transmission content.

In some embodiments, in a case where the eighth indication information includes indication information for indicating the moment to start transmitting the first transmission content and the duration, the moment to start transmitting the first transmission content and the duration are indicated by joint coding; in a case where the eighth indication information includes indication information for indicating the time-domain position of the first resource and the number of the resources, the time-domain position of the first resource and the number of the resources are indicated by joint coding.

In some embodiments, the moment to start transmitting the first transmission content is related to a fourth time gap and a time slot where the first information is located, the fourth time gap being included in the eighth indication information.

In some embodiments, the ninth indication information includes one or more of: the power for transmitting the first transmission content; a power range for transmission of the first transmission content; an index corresponding to the power for transmitting the first transmission content; an index corresponding to the power range for transmission of the first transmission content; and a third adjustment value relative to a reference transmission power, the power for transmitting the first transmission content being related to the third adjustment value.

In some embodiments, the first information is first Downlink Control Information (DCI), a number of bits of the first DCI is the same as a number of bits of second DCI currently configured for the first terminal device, and the first DCI and the second DCI are scrambled by different Radio Network Temporary Identifiers (RNTIs); and the second DCI is uplink DCI, downlink DCI or sidelink DCI.

In some embodiments, the first information is configured grant, and the first information further includes tenth indication information, the tenth indication information being used to indicate a repetition period in the time domain of resources for transmitting the first transmission content.

FIG. 8 is a third schematic structural diagram of a communication apparatus according to an embodiment of the disclosure, which is applied to second terminal device. As shown in FIG. 8, a communication apparatus 800 (hereinafter simply referred to as the apparatus 800) includes a second receiving unit 801.

The second receiving unit 801 is configured to receive second information from a network device 801, wherein the second information is used by the apparatus 800 to receive a reflection signal from an Ambient Internet of Things (A-IoT) device.

In some embodiments, the second information includes: first indication information for indicating a frequency for transmitting a carrier by a first terminal device; and/or second indication information for indicating a time for transmitting the carrier by the first terminal device; and the carrier is used by the A-IoT device to transmit the reflection signal to the apparatus 800.

In some embodiments, the first indication information includes: one or more frequencies for transmitting the carrier by the first terminal device; and/or one or more indexes corresponding to the one or more frequencies for transmitting the carrier by the first terminal device.

In some embodiments, the second indication information includes indication information for indicating one or more of: a moment when the first terminal device starts transmitting the carrier; an index corresponding to the moment when the first terminal device starts transmitting the carrier; a duration for which the first terminal device transmits the carrier; a time-domain position of a first one of resources for transmitting the carrier by the first terminal device; and a number of the resources for transmitting the carrier by the first terminal device.

In some embodiments, in a case where the second indication information includes indication information for indicating the moment to start transmitting the carrier and the duration for transmission of the carrier, the moment to start transmitting the carrier and the duration for transmission of the carrier are indicated by joint coding; in a case where the second indication information includes indication information for indicating the time-domain position of the first one of resources for transmitting the carrier and the number of the resources for transmitting the carrier, the time-domain position of the first one of resources for transmitting the carrier and the number of the resources for transmitting the carrier are indicated by joint coding.

In some embodiments, the moment when the first terminal device starts transmitting the carrier is related to a second time gap and a time slot where the second information is located, the second time gap being included in the second indication information.

In some embodiments, the second information is further used by the apparatus 800 to receive one or more of the carrier, data and a signal transmitted by the first terminal device, and the second information further includes: fourth indication information for indicating a frequency for transmitting the data or the signal by the first terminal device; and/or fifth indication information for indicating a time for transmitting the data or the signal by the first terminal device.

In some embodiments, the fourth indication information includes: one or more frequencies for transmitting the data or the signal by the first terminal device; and/or one or more indexes corresponding to the one or more frequencies for transmitting the data or the signal by the first terminal device.

In some embodiments, the fifth indication information includes indication information for indicating one or more of: a moment when the first terminal device starts transmitting the data or the signal; an index corresponding to the moment when the first terminal device starts transmitting the data or the signal; a duration for which the first terminal device transmits the data or the signal; a time-domain position of a first one of resources for transmitting the data or the signal by the first terminal device; and a number of the resources for transmitting the data or the signal by the first terminal device.

In some embodiments, in a case where the fifth indication information includes indication information for indicating the moment to start transmitting the data or the signal and the duration for transmission of the data or the signal, the moment to start transmitting the data or the signal and the duration for transmission of the data or the signal are indicated by joint coding; in a case where the fifth indication information includes indication information for indicating the time-domain position of the first one of resources for transmitting the data or the signal and the number of the resources for transmitting the data or the signal, the time-domain position of the first one of resources for transmitting the data or the signal and the number of the resources for transmitting the data or the signal are indicated by joint coding.

In some embodiments, the moment when the first terminal device starts transmitting the data or the signal is related to a third time gap and a time slot where the second information is located, the third time gap being included in the fifth indication information.

In some embodiments, the second information includes: eleventh indication information for indicating a frequency for receiving the reflection signal; and/or twelfth indication information for indicating a time for receiving the reflection signal.

In some embodiments, the eleventh indication information includes: one or more frequencies for receiving the reflection signal; and/or one or more indexes corresponding to the one or more frequencies for receiving the reflection signal.

In some embodiments, the twelfth indication information includes indication information for indicating one or more of: a moment to start receiving the reflection signal; an index corresponding to the moment to start receiving the reflection signal; a duration for reception of the reflection signal; a time-domain position of a first one of resources for receiving the reflection signal; and a number of the resources for receiving the reflection signal.

In some embodiments, in a case where the twelfth indication information includes indication information for indicating the moment to start receiving the reflection signal and the duration for reception of the reflection signal, the moment to start receiving the reflection signal and the duration for reception of the reflection signal are indicated by joint coding; in a case where the twelfth indication information includes indication information for indicating the time-domain position of the first one of the resources for receiving the reflection signal and the number of the resources for receiving the reflection signal, the time-domain position of the first one of the resources for receiving the reflection signal and the number of the resources for receiving the reflection signal are indicated by joint coding.

In some embodiments, the moment to start receiving the reflection signal is related to a fifth time gap and a time slot where the second information is located, the fifth time gap being included in the twelfth indication information.

In some embodiments, the second information is further used by the apparatus 800 to receive the carrier transmitted by the first terminal device, wherein a frequency for receiving the carrier is the same as the frequency for receiving the reflection signal; a time for receiving the carrier is the same as the time for receiving the reflection signal; the carrier is used by the A-IoT device to transmit the reflection signal to the apparatus 800.

In some embodiments, the second information is further used by the apparatus 800 to receive data or a signal transmitted by the first terminal device, and the second information further includes: thirteenth indication information for indicating a frequency for receiving the data or the signal; and/or fourteenth indication information for indicating a time for receiving the data or the signal.

In some embodiments, the thirteenth indication information includes: one or more frequencies for receiving the data or the signal; and/or one or more indexes corresponding to the one or more frequencies for receiving the data or the signal.

In some embodiments, the fourteenth indication information includes indication information for indicating one or more of: a moment to start receiving the data or the signal; an index corresponding to the moment to start receiving the data or the signal; a duration for reception of the data or the signal; a time-domain position of a first one of resources for receiving the data or the signal; and a number of the resources for receiving the data or the signal.

In some embodiments, in a case where the fourteenth indication information includes indication information for indicating the moment to start receiving the data or the signal and the duration for reception of the data or the signal, the moment to start receiving the data or the signal and the duration for reception of the data or the signal are indicated by joint coding; in a case where the fourteenth indication information includes indication information for indicating the time-domain position of the first one of the resources for receiving the data or the signal and the number of the resources for receiving the data or the signal, the time-domain position of the first one of the resources for receiving the data or the signal and the number of the resources for receiving the data or the signal are indicated by joint coding.

In some embodiments, the moment to start receiving the data or the signal is related to a sixth time gap and a time slot where the second information is located, the sixth time gap being included in the fourteenth indication information.

In some embodiments, the second information further includes: fifteenth indication information for indicating a power for transmitting one or more of the carrier, the data and the signal by the first terminal device.

In some embodiments, the second information is third Downlink Control Information (DCI), a number of bits of the third DCI is the same as a number of bits of second DCI currently configured for the second terminal device, and the third DCI and the second DCI are scrambled by different Radio Network Temporary Identifiers (RNTIs); and the second DCI is uplink DCI, downlink DCI or sidelink DCI.

In some embodiments, the second information is configured grant, and the second information includes indication information for indicating one or more of: a repetition period in the time domain of resources for transmitting a carrier by the first terminal device, the carrier is used by the A-IoT device to transmit the reflection signal to the apparatus 800; a repetition period in the time domain of resources for transmitting data or a signal by the first terminal device; a repetition period in the time domain of resources for receiving the reflection signal, a repetition period in the time domain of resources for receiving the carrier is the same as the repetition period in the time domain of the resources for receiving the reflection signal; and a repetition period in the time domain of resources for receiving the data or the signal transmitted by the first terminal device.

FIG. 9 is a fourth schematic structural diagram of a communication apparatus according to an embodiment of the disclosure, which is applied to a network device. As shown in FIG. 9, a communication apparatus 900 (hereinafter simply referred to as the apparatus 900) includes a second transmitting unit 901.

The second transmitting unit 901 is configured to transmit second information to a second terminal device, wherein the second information is used by the second terminal device to receive a reflection signal from an Ambient Internet of Things (A-IoT) device.

In some embodiments, the second information includes: first indication information for indicating a frequency for transmitting a carrier by a first terminal device; and/or second indication information for indicating a time for transmitting the carrier by the first terminal device; and the carrier is used by the A-IoT device to transmit the reflection signal to the second terminal device.

In some embodiments, the first indication information includes: one or more frequencies for transmitting the carrier by the first terminal device; and/or one or more indexes corresponding to the one or more frequencies for transmitting the carrier by the first terminal device.

In some embodiments, the second indication information includes indication information for indicating one or more of: a moment when the first terminal device starts transmitting the carrier; an index corresponding to the moment when the first terminal device starts transmitting the carrier; a duration for which the first terminal device transmits the carrier; a time-domain position of a first one of resources for transmitting the carrier by the first terminal device; and a number of the resources for transmitting the carrier by the first terminal device.

In some embodiments, in a case where the second indication information includes indication information for indicating the moment to start transmitting the carrier and the duration for transmission of the carrier, the moment to start transmitting the carrier and the duration for transmission of the carrier are indicated by joint coding; in a case where the second indication information includes indication information for indicating the time-domain position of the first one of resources for transmitting the carrier and the number of the resources for transmitting the carrier, the time-domain position of the first one of resources for transmitting the carrier and the number of the resources for transmitting the carrier are indicated by joint coding.

In some embodiments, the moment when the first terminal device starts transmitting the carrier is related to a second time gap and a time slot where the second information is located, the second time gap being included in the second indication information.

In some embodiments, the second information is further used by the second terminal device to receive one or more of the carrier, data and a signal transmitted by the first terminal device, and the second information further includes: fourth indication information for indicating a frequency for transmitting the data or the signal by the first terminal device; and/or fifth indication information for indicating a time for transmitting the data or the signal by the first terminal device.

In some embodiments, the fourth indication information includes: one or more frequencies for transmitting the data or the signal by the first terminal device; and/or one or more indexes corresponding to the one or more frequencies for transmitting the data or the signal by the first terminal device.

In some embodiments, the fifth indication information includes indication information for indicating one or more of: a moment when the first terminal device starts transmitting the data or the signal; an index corresponding to the moment when the first terminal device starts transmitting the data or the signal; a duration for which the first terminal device transmits the data or the signal; a time-domain position of a first one of resources for transmitting the data or the signal by the first terminal device; and a number of the resources for transmitting the data or the signal by the first terminal device.

In some embodiments, in a case where the fifth indication information includes indication information for indicating the moment to start transmitting the data or the signal and the duration for transmission of the data or the signal, the moment to start transmitting the data or the signal and the duration for transmission of the data or the signal are indicated by joint coding; in a case where the fifth indication information includes indication information for indicating the time-domain position of the first one of resources for transmitting the data or the signal and the number of the resources for transmitting the data or the signal, the time-domain position of the first one of resources for transmitting the data or the signal and the number of the resources for transmitting the data or the signal are indicated by joint coding.

In some embodiments, the moment when the first terminal device starts transmitting the data or the signal is related to a third time gap and a time slot where the second information is located, the third time gap being included in the fifth indication information.

In some embodiments, the second information includes: eleventh indication information for indicating a frequency for receiving the reflection signal; and/or twelfth indication information for indicating a time for receiving the reflection signal.

In some embodiments, the eleventh indication information includes: one or more frequencies for receiving the reflection signal; and/or one or more indexes corresponding to the one or more frequencies for receiving the reflection signal.

In some embodiments, the twelfth indication information includes indication information for indicating one or more of: a moment to start receiving the reflection signal; an index corresponding to the moment to start receiving the reflection signal; a duration for reception of the reflection signal; a time-domain position of a first one of resources for receiving the reflection signal; and a number of the resources for receiving the reflection signal.

In some embodiments, in a case where the twelfth indication information includes indication information for indicating the moment to start receiving the reflection signal and the duration for reception of the reflection signal, the moment to start receiving the reflection signal and the duration for reception of the reflection signal are indicated by joint coding; in a case where the twelfth indication information includes indication information for indicating the time-domain position of the first one of the resources for receiving the reflection signal and the number of the resources for receiving the reflection signal, the time-domain position of the first one of the resources for receiving the reflection signal and the number of the resources for receiving the reflection signal are indicated by joint coding.

In some embodiments, the moment to start receiving the reflection signal is related to a fifth time gap and a time slot where the second information is located, the fifth time gap being included in the twelfth indication information.

In some embodiments, the second information is further used by the second terminal device to receive the carrier transmitted by the first terminal device, wherein a frequency for receiving the carrier is the same as the frequency for receiving the reflection signal; a time for receiving the carrier is the same as the time for receiving the reflection signal; the carrier is used by the A-IoT device to transmit the reflection signal to the second terminal device.

In some embodiments, the second information is further used by the second terminal device to receive data or a signal transmitted by the first terminal device, and the second information further includes: thirteenth indication information for indicating a frequency for receiving the data or the signal; and/or fourteenth indication information for indicating a time for receiving the data or the signal.

In some embodiments, the thirteenth indication information includes: one or more frequencies for receiving the data or the signal; and/or one or more indexes corresponding to the one or more frequencies for receiving the data or the signal.

In some embodiments, the fourteenth indication information includes indication information for indicating one or more of: a moment to start receiving the data or the signal; an index corresponding to the moment to start receiving the data or the signal; a duration for reception of the data or the signal; a time-domain position of a first one of resources for receiving the data or the signal; and a number of the resources for receiving the data or the signal.

In some embodiments, in a case where the fourteenth indication information includes indication information for indicating the moment to start receiving the data or the signal and the duration for reception of the data or the signal, the moment to start receiving the data or the signal and the duration for reception of the data or the signal are indicated by joint coding; in a case where the fourteenth indication information includes indication information for indicating the time-domain position of the first one of the resources for receiving the data or the signal and the number of the resources for receiving the data or the signal, the time-domain position of the first one of the resources for receiving the data or the signal and the number of the resources for receiving the data or the signal are indicated by joint coding.

In some embodiments, the moment to start receiving the data or the signal is related to a sixth time gap and a time slot where the second information is located, the sixth time gap being included in the fourteenth indication information.

In some embodiments, the second information further includes:
fifteenth indication information for indicating a power for transmitting one or more of the carrier, the data and the signal by the first terminal device.

In some embodiments, the second information is third Downlink Control Information (DCI), a number of bits of the third DCI is the same as a number of bits of second DCI currently configured for the second terminal device, and the third DCI and the second DCI are scrambled by different Radio Network Temporary Identifiers (RNTIs); and the second DCI is uplink DCI, downlink DCI or sidelink DCI.

In some embodiments, the second information is configured grant, and the second information includes indication information for indicating one or more of: a repetition period in the time domain of resources for transmitting a carrier by the first terminal device, the carrier is used by the A-IoT device to transmit the reflection signal to the second terminal device; a repetition period in the time domain of resources for transmitting data or a signal by the first terminal device; a repetition period in the time domain of resources for receiving the reflection signal, a repetition period in the time domain of resources for receiving the carrier is the same as the repetition period in the time domain of the resources for receiving the reflection signal; and a repetition period in the time domain of resources for receiving the data or the signal transmitted by the first terminal device.

Those skilled in the art should understand that the related description of the above-described communication apparatuses according to the embodiments of the disclosure can be understood with reference to the related description of the communication methods according to the embodiments of the disclosure.

FIG. 10 is a schematic structural diagram of a communication device 1000 according to an embodiment of the disclosure. The communication device may be a terminal device (for example, the first terminal device or the second terminal device), or may also be a network device. The communication device 1000 illustrated in FIG. 10 includes a processor 1010 that can invoke and run a computer program from a memory to perform the method in the embodiments of the disclosure.

Optionally, as shown in FIG. 10, the communication device 1000 may further include a memory 1020. The processor 1010 may invoke and run a computer program from the memory 1020 to perform the method in the embodiments of the disclosure.

The memory 1020 can be a separate device independent of the processor 1010, or it can be integrated within the processor 1010.

Optionally, as shown in FIG. 10, the communication device 1000 may further include a transceiver 1030, and the processor 1010 may control the transceiver 1030 to communicate with other devices, specifically, may transmit information or data to other devices, or receive information or data transmitted by other devices.

Transceiver 1030 may include a transmitter and a receiver. The transceiver 1030 may further include antennas, and the number of antennas may be one or more.

Optionally, the communication device 1000 may specifically be the network device of the embodiments of the disclosure, and the communication device 1000 may perform corresponding procedures performed by the network device in each method of the embodiments of the disclosure, which will not be repeated here for the sake of brevity.

Optionally, the communication device 1000 may specifically be the terminal device (for example, the first terminal device or the second terminal device) of the embodiments of the disclosure, and the communication device 1000 may perform corresponding procedures performed by the terminal device (for example, the first terminal device or the second terminal device) in each method of the embodiments of the disclosure, which will not be repeated here for the sake of brevity.

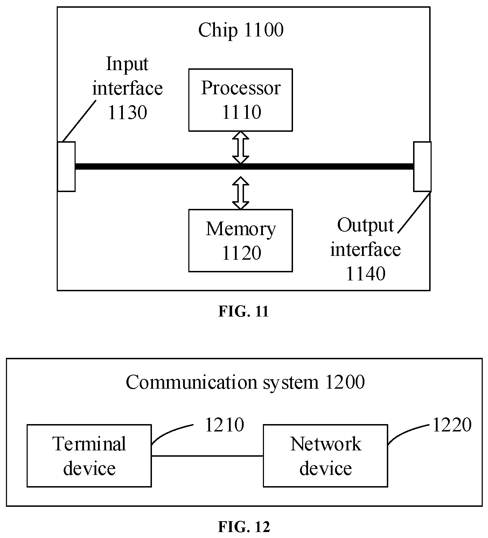

FIG. 11 is a schematic structural diagram of a chip according to an embodiment of the disclosure. The chip 1100 shown in FIG. 11 includes a processor 1110 that can invoke and run a computer program from a memory to perform the method in the embodiments of the disclosure.

Optionally, as shown in FIG. 11, the chip 1100 may further include a memory 1120. The processor 1110 may invoke and run a computer program from the memory 1120 to perform the method in the embodiments of the disclosure.

The memory 1120 can be a separate device independent of the processor 1110, or it can be integrated within the processor 1110.

Optionally, the chip 1100 may further include an input interface 1130. The processor 1110 may control the input interface 1130 to communicate with other devices or chips, specifically, may acquire information or data transmitted by other devices or chips.

Optionally, the chip 1100 may further include an output interface 1140. The processor 1110 may control the output interface 1140 to communicate with other devices or chips, specifically, may output information or data to other devices or chips.

Optionally, the chip can be applied to the network device in the embodiments of the disclosure, and the chip can perform corresponding procedures performed by the network device in each method of the embodiments of the disclosure. For brevity, details thereof are not repeated here.

Optionally, the chip can be applied to the terminal device (for example, the first terminal device; for another example, the second terminal device) in the embodiments of the disclosure, and the chip may perform the corresponding procedures performed by the terminal device (for example, the first terminal device; for another example, the second terminal device) in various methods described in the embodiments of the disclosure. For brevity, details thereof are not repeated here.

It should be understood that the chip mentioned in the embodiments of the disclosure may also be referred to as system-level chip, system chip, chip system, or System-on-Chip (SoC), among other terms.

Embodiments of the disclosure also provide a computer storage medium storing one or more programs, and the one or more programs can be executed by one or more processors to implement the method in the embodiments of the disclosure.

FIG. 12 is a schematic block diagram of a communication system 1200 according to an embodiment of the disclosure. As shown in FIG. 12, the communication system 1200 includes a terminal device 1210 and a network device 1220.

The terminal 1210 may be used to implement the corresponding functions implemented by the terminal device (for example, the first terminal device or the second terminal device) in the above-described method, and the network device 1220 may be used to implement the corresponding functions implemented by the network device in the above-described method. For brevity, details thereof are not repeated here.

It should be understood that the processor of the embodiments of the disclosure may be an integrated circuit chip having signal processing capabilities. In the implementation process, the steps of the above-described method embodiments may be performed by integrated logic circuits of hardware in the processor or instructions in the form of software. The processor may be a general purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the disclosure may be implemented or executed. The general-purpose processor may be a microprocessor, or the processor may be any conventional processor or the like. The steps of the method disclosed in the embodiments of the disclosure may be directly embodied as execution by a hardware decoding processor, or execution by hardware and software modules in the decoding processor. The software module may be located in a mature storage medium in the art, such as random access memory, flash memory, read-only memory, programmable read-only memory, electrically erasable and writable programmable memory, or register, etc. The storage medium is located in the memory, and the processor reads the information in the memory, and performs the steps of the above methods in combination with its hardware.

It can be understood that the memory in the embodiments of the disclosure may be either volatile memory or non-volatile memory, or may include both volatile and non-volatile memories. The non-volatile memory can be Read-Only Memory (ROM), Programmable ROM (PROM), Erasable Programmable ROM (EPROM), Electrically Erasable Programmable ROM (EEPROM), or Flash memory. The volatile memory can be Random Access Memory (RAM), which serves as external high-speed cache. By way of illustration, but not by way of limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM). It should be noted that the memory of the systems and methods described herein is intended to include, but is not limited to, these and any other suitable type of memory.

It should be understood that the above memory is illustrative but not limiting, for example, the memory in the embodiments of the disclosure may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), Direct Rambus Random Access Memory (DR RAM), and so on. In other words, the memory in the embodiments of the application is intended to include, but is not limited to, these and any other suitable types of memory.

An embodiment of the disclosure further provides a computer-readable storage medium for storing a computer program.

Optionally, the computer-readable storage medium can be applied to the network device in the embodiments of the disclosure, and the computer program enables the computer to perform corresponding procedures performed by the network device in various methods described in the embodiments of the disclosure. For brevity, details thereof are not repeated here.

Optionally, the computer-readable storage medium can be applied to the terminal devices (for example, the first terminal device; for another example, the second terminal device) in the embodiments of the disclosure, and the computer program enables the computer to perform corresponding procedures performed by the terminal devices (or example, the first terminal device; for another example, the second terminal device) in various methods described in the embodiments of the disclosure. For brevity, details thereof are not repeated here.

An embodiment of the disclosure further provides a computer program product including computer program instructions.

Optionally, the computer program product can be applied to the network device in the embodiments of the disclosure, and the computer program instructions enable the computer to perform the corresponding procedures performed by the network device in various methods described in the embodiments of the disclosure. For brevity, details thereof are not repeated here.

Optionally, the computer program product can be applied to the terminal devices (for example, the first terminal device; for another example, the second terminal device) in the embodiments of the disclosure, and the computer program instructions enable the computer to perform the corresponding procedures performed by the terminal devices (for example, the first terminal device; for another example, the second terminal device) in various methods described in the embodiments of the disclosure. For brevity, details thereof are not repeated here.

An embodiment of the disclosure further provides a computer program.

Optionally, the computer program can be applied to the network device in the embodiments of the disclosure, and the computer program, when run on a computer, enables the computer to perform corresponding procedures performed by the network device in various methods described in the embodiments of the disclosure. For brevity, details thereof are not repeated here.

Optionally, the computer program can be applied to the terminal devices (for example, the first terminal device; for another example, the second terminal device) in the embodiments of the disclosure, and when run on a computer, the computer program enables the computer to perform the corresponding procedures performed by the terminal devices (for example, the first terminal device; for another example, the second terminal device) in various methods described in the embodiments of the disclosure. For brevity, details thereof are not repeated here.

Those of ordinary skill in the art will appreciate that the units and algorithmic steps of the various examples described in the embodiments disclosed herein can be implemented in electronic hardware, in computer software, or in a combination of computer software and electronic hardware. Whether these functions are performed in hardware or software depends on the specific application and design constraints of the technical solution. Those skilled in the art may use different methods for implementing the described functions for each particular application, but such implementations should not be considered as going beyond the scope of the disclosure.

Those skilled in the art can clearly understand that for convenience and conciseness of the description, for the specific working processes of the systems, devices, and units described above, reference may be made to the corresponding processes in the aforementioned method embodiments, which will not be repeatedly described herein.

In the several embodiments provided in the disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the disclosure.

In addition, functional units in various embodiments of the disclosure may be integrated into one processing unit, or each of the units may be physically separated, or two or more units may be integrated into one unit.

When the aforementioned functions are implemented in the form of software functional units and sold or used as independent products, the software functional units can be stored in a computer-readable storage medium. Based on this understanding, the core or contributory part of the technical solution of the disclosure with respect to the prior part, or portions thereof, can be embodied in the form of a software product. This computer software product is stored in a storage medium and includes several instructions that enable a computer device (which can be a personal computer, server, network device, etc.) to perform all or part of the steps described in the various embodiments of the disclosure. The storage medium includes various media capable of storing program codes, such as USB flash drive, mobile hard disk, Read-Only Memory (ROM), Random Access Memory (RAM), magnetic disk or an optical disk.

What described above are only the specific implementations of the disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, applied to a first terminal device, the method comprising:
receiving first information from a network device, wherein the first information is used by the first terminal device to transmit a first transmission content to an Ambient Internet of Things (A-IoT) device, the first transmission content comprising one or more of: a carrier, data, and a signal.

2. The method of claim 1, wherein the first transmission content comprises the cattier, and the first information comprises one or more of:
first indication information for indicating a frequency for transmitting the carrier;
second indication information for indicating a time for transmitting the carrier; and
third indication information for indicating a power for transmitting the carrier.

3. The method of claim 1, wherein the first transmission content comprises the data or the signal, and the first information comprises one or more of:
fourth indication information for indicating a frequency for transmitting the data or the signal;
fifth indication information for indicating a time for transmitting the data or the signal;
sixth indication information for indicating a power for transmitting the data or the signal; and
an identifier of the A-IoT device.

4. The method of claim 3, wherein the first transmission content further comprises the cattier, and the first information further comprises one or more of:
first indication information for indicating a frequency for transmitting the carrier;
second indication information for indicating a time for transmitting the carrier; and
third indication information for indicating a power for transmitting the carrier.

5. The method of claim 4, wherein the time for transmitting the data or the signal is prior to the time for transmitting the carrier;
in a case where the first information comprises the fourth indication information and does not comprise the first indication information, the frequency for transmitting the carrier is the same as the frequency for transmitting the data or the signal;
in a case where the first information comprises the fifth indication information and does not comprise the second indication information, a time gap between the time for transmitting the carrier and the time for transmitting the data or the signal is a first time gap, the first time gap being predefined, or configured by the network device;
in a case where the first information comprises the sixth indication information and does not comprise the third indication information, the power for transmitting the carrier is the same as the power for transmitting the data or the signal.

6. The method of claim 3, wherein
the first transmission content further comprises the carrier, and the time for transmitting the data or the signal is prior to a time for transmitting the carrier,
wherein a frequency for transmitting the carrier is the same as the frequency for transmitting the data or the signal;
a time gap between a time for transmitting the carrier and the time for transmitting the data or the signal is a first time gap, the first time gap being predefined, or configured by the network device;
a power for transmitting the carrier is the same as the power for transmitting the data or the signal.

7. The method of claim 4, wherein the frequency for transmitting the data or the signal is different from the frequency for transmitting the carrier,
in a case where the first information includes the second indication information and does not include the fifth indication information, the time for transmitting the data or the signal is the same as the time for transmitting the carrier;
in a case where the first information comprises the fifth indication information and does not comprise the second indication information, the time for transmitting the carrier is the same as the time for transmitting the data or the signal;
in a case where the first information includes the third indication information and does not include the sixth indication information, the power for transmitting the data or the signal is the same as the power for transmitting the carrier;
in a case where the first information comprises the sixth indication information and does not comprise the third indication information, the power for transmitting the carrier is the same as the power for transmitting the data or the signal.

8. The method of claim 2, 4, 5 or 7, wherein the first indication information comprises one or more of:
one or more frequencies for transmitting the carrier; and/or,
one or more indexes corresponding to the one or more frequencies for transmitting the carrier.

9. The method of claim 2, 4, 5, 7 or 8, wherein the second indication information comprises indication information for indicating one or more of:
a moment to start transmitting the carrier;
an index corresponding to the moment to start transmitting the carrier;
a duration for transmission of the carrier;
a time-domain position of a first one of resources for transmitting the carrier; and
a number of the resources for transmitting the carrier.

10. The method of claim 9, wherein
in a case where the second indication information includes indication information for indicating the moment to start transmitting the carrier and the duration, the moment to start transmitting the carrier and the duration are indicated by joint coding;
in a case where the second indication information includes indication information for indicating the time-domain position of the first resource and the number of the resources, the time-domain position of the first resource and the number of the resources are indicated by joint coding.

11. The method of claim 9 or 10, wherein
the moment to start transmitting the carrier is related to a second time gap and a time slot where the first information is located, the second time gap being comprised in the second indication information.

12. The method of any one of claims 2, 4, 5 and 7 to 11, wherein the third indication information comprises one or more of:
the power for transmitting the carrier;
a power range for transmission of the carrier;
an index corresponding to the power for transmitting the carrier;
an index corresponding to the power range for transmission of the carrier; and
a first adjustment value relative to a reference transmission power, the power for transmitting the carrier being related to the first adjustment value.

13. The method of any one of claims 3 to 7, wherein the fourth indication information comprises:
one or more frequencies for transmitting the data or the signal; and/or,
one or more indexes corresponding to the one or more frequencies for transmitting the data or the signal.

14. The method of any one of claims 3 to 7 and 13, wherein the fifth indication information comprises indication information for indicating one or more of:
a moment to start transmitting the data or the signal;
an index corresponding to the moment to start transmitting the data or the signal;
a duration for transmission of the data or the signal;
a time-domain position of a first one of resources for transmitting the data or the signal; and
a number of the resources for transmitting the data or the signal.

15. The method of claim 14, wherein
in a case where the fifth indication information includes indication information for indicating the moment to start transmitting the data or the signal and the duration, the moment to start transmitting the data or the signal and the duration are indicated by joint coding;
in a case where the fifth indication information includes indication information for indicating the time-domain position of the first resource and the number of the resources, the time-domain position of the first resource and the number of the resources are indicated by joint coding.

16. The method of claim 14 or 15, wherein
the moment to start transmitting the data or the signal is related to a third time gap and a time slot where the first information is located, the third time gap being comprised in the fifth indication information.

17. The method of any one of claims 3 to 7 and 13 to 16, wherein the sixth indication information comprises one or more of:
the power for transmitting the data or the signal;
a power range for transmission of the data or the signal;
an index corresponding to the power for transmitting the data or the signal;
an index corresponding to the power range for transmission of the data or the signal; and
a second adjustment value relative to a reference transmission power, the power for transmitting the data or the signal being related to the second adjustment value.

18. The method of claim 1, wherein the first transmission content is determined by the first terminal device, and the first information comprises one or more of:
seventh indication information for indicating a frequency for transmitting the first transmission content;
eighth indication information for indicating a time for transmitting the first transmission content; and
ninth indication information for indicating a power for transmitting the first transmission content.

19. The method of claim 18, wherein the seventh indication information comprises:
one or more frequencies for transmitting the first transmission content; and/or,
one or more indexes corresponding to the one or more frequencies for transmitting the first transmission content.

20. The method of claim 18 or 19, wherein the eighth indication information comprises indication information for indicating one or more of:
a moment to start transmitting the first transmission content;
an index corresponding to the moment to start transmitting the first transmission content;
a duration for transmission of the first transmission content;
a time-domain position of a first one of resources for transmitting the first transmission content; and
a number of the resources for transmitting the first transmission content.

21. The method of claim 20, wherein
in a case where the eighth indication information includes indication information for indicating the moment to start transmitting the first transmission content and the duration, the moment to start transmitting the first transmission content and the duration are indicated by joint coding;
in a case where the eighth indication information includes indication information for indicating the time-domain position of the first resource and the number of the resources, the time-domain position of the first resource and the number of the resources are indicated by joint coding.

22. The method of claim 20 or 21, wherein
the moment to start transmitting the first transmission content is related to a fourth time gap and a time slot where the first information is located, the fourth time gap being comprised in the eighth indication information.

23. The method of any one of claims 18 to 22, wherein the ninth indication information comprises one or more of:
the power for transmitting the first transmission content;
a power range for transmission of the first transmission content;
an index corresponding to the power for transmitting the first transmission content;
an index corresponding to the power range for transmission of the first transmission content; and
a third adjustment value relative to a reference transmission power, the power for transmitting the first transmission content being related to the third adjustment value.

24. The method of any one of claims 1 to 23, wherein
the first information is first Downlink Control Information (DCI), a number of bits of the first DCI is the same as a number of bits of second DCI currently configured for the first terminal device, and the first DCI and the second DCI are scrambled by different Radio Network Temporary Identifiers (RNTIs); and the second DCI is uplink DCI, downlink DCI or sidelink DCI.

25. The method of any one of claims 1 to 23, wherein
the first information is configured grant, and the first information further comprises tenth indication information, the tenth indication information being used to indicate a repetition period in the time domain of resources for transmitting the first transmission content.

26. A communication method, applied to a network device, the method comprising:
transmitting first information to a first terminal device, wherein the first information is used by the first terminal device to transmit a first transmission content to an Ambient Internet of Things (A-IoT) device, the first transmission content comprising one or more of: a carrier, data, and a signal.

27. The method of claim 26, wherein the first transmission content comprises the cattier, and the first information comprises one or more of:
first indication information for indicating a frequency for transmitting the carrier;
second indication information for indicating a time for transmitting the carrier; and
third indication information for indicating a power for transmitting the carrier.

28. The method of claim 26, wherein the first transmission content comprises the data or the signal, and the first information comprises one or more of:
fourth indication information for indicating a frequency for transmitting the data or the signal;
fifth indication information for indicating a time for transmitting the data or the signal; and
sixth indication information for indicating a power for transmitting the data or the signal; and
an identifier of the A-IoT device.

29. The method of claim 28, wherein the first transmission content further comprises the cattier, and the first information further comprises one or more of:
first indication information for indicating a frequency for transmitting the carrier;
second indication information for indicating a time for transmitting the carrier; and
third indication information for indicating a power for transmitting the carrier.

30. The method of claim 29, wherein the time for transmitting the data or the signal is prior to the time for transmitting the carrier;
in a case where the first information comprises the fourth indication information and does not comprise the first indication information, the frequency for transmitting the carrier is the same as the frequency for transmitting the data or the signal;
in a case where the first information comprises the fifth indication information and does not comprise the second indication information, a time gap between the time for transmitting the carrier and the time for transmitting the data or the signal is a first time gap, the first time gap being predefined, or configured by the network device;
in a case where the first information comprises the sixth indication information and does not comprise the third indication information, the power for transmitting the carrier is the same as the power for transmitting the data or the signal.

31. The method of claim 28, wherein
the first transmission content further comprises the carrier, and the time for transmitting the data or the signal is prior to a time for transmitting the carrier,
wherein a frequency for transmitting the carrier is the same as the frequency for transmitting the data or the signal;
a time gap between a time for transmitting the carrier and the time for transmitting the data or the signal is a first time gap, the first time gap being predefined, or configured by the network device;
a power for transmitting the carrier is the same as the power for transmitting the data or the signal.

32. The method of claim 29, wherein the frequency for transmitting the data or the signal is different from the frequency for transmitting the carrier,
in a case where the first information includes the second indication information and does not include the fifth indication information, the time for transmitting the data or the signal is the same as the time for transmitting the carrier;
in a case where the first information comprises the fifth indication information and does not comprise the second indication information, the time for transmitting the carrier is the same as the time for transmitting the data or the signal;
in a case where the first information includes the third indication information and does not include the sixth indication information, the power for transmitting the data or the signal is the same as the power for transmitting the carrier;
in a case where the first information comprises the sixth indication information and does not comprise the third indication information, the power for transmitting the carrier is the same as the power for transmitting the data or the signal.

33. The method of claim 27, 29, 30 or 32, wherein the first indication information comprises one or more of:
one or more frequencies for transmitting the carrier; and/or,
one or more indexes corresponding to the one or more frequencies for transmitting the carrier.

34. The method of claim 27, 29, 30, 32 or 33, wherein the second indication information comprises indication information for indicating one or more of:
a moment to start transmitting the carrier;
an index corresponding to the moment to start transmitting the carrier;
a duration for transmission of the carrier;
a time-domain position of a first one of resources for transmitting the carrier; and
a number of the resources for transmitting the carrier.

35. The method of claim 34, wherein
in a case where the second indication information includes indication information for indicating the moment to start transmitting the carrier and the duration, the moment to start transmitting the carrier and the duration are indicated by joint coding;
in a case where the second indication information includes indication information for indicating the time-domain position of the first resource and the number of the resources, the time-domain position of the first resource and the number of the resources are indicated by joint coding.

36. The method of claim 34 or 35, wherein
the moment to start transmitting the carrier is related to a second time gap and a time slot where the first information is located, the second time gap being comprised in the second indication information.

37. The method of any one of claims 27, 29, 30 and 32 to 36, wherein the third indication information comprises one or more of:
the power for transmitting the carrier;
a power range for transmission of the carrier;
an index corresponding to the power for transmitting the carrier;
an index corresponding to the power range for transmission of the carrier; and
a first adjustment value relative to a reference transmission power, the power for transmitting the carrier being related to the first adjustment value.

38. The method of any one of claims 28 to 32, wherein the fourth indication information comprises:
one or more frequencies for transmitting the data or the signal; and/or,
one or more indexes corresponding to the one or more frequencies for transmitting the data or the signal.

39. The method of any one of claims 28 to 32 and 38, wherein the fifth indication information comprises indication information for indicating one or more of:
a moment to start transmitting the data or the signal;
an index corresponding to the moment to start transmitting the data or the signal;
a duration for transmission of the data or the signal;
a time-domain position of a first one of resources for transmitting the data or the signal; and
a number of the resources for transmitting the data or the signal.

40. The method of claim 39, wherein
in a case where the fifth indication information includes indication information for indicating the moment to start transmitting the data or the signal and the duration, the moment to start transmitting the data or the signal and the duration are indicated by joint coding;
in a case where the fifth indication information includes indication information for indicating the time-domain position of the first resource and the number of the resources, the time-domain position of the first resource and the number of the resources are indicated by joint coding.

41. The method of claim 39 or 40, wherein
the moment to start transmitting the data or the signal is related to a third time gap and a time slot where the first information is located, the third time gap being comprised in the fifth indication information.

42. The method of any one of claims 28 to 32 and 38 to 41, wherein the sixth indication information comprises one or more of:
the power for transmitting the data or the signal;
a power range for transmission of the data or the signal;
an index corresponding to the power for transmitting the data or the signal;
an index corresponding to the power range for transmission of the data or the signal; and
a second adjustment value relative to a reference transmission power, the power for transmitting the data or the signal being related to the second adjustment value.

43. The method of claim 26, wherein the first transmission content is determined by the first terminal device, and the first information comprises one or more of:
seventh indication information for indicating a frequency for transmitting the first transmission content;
eighth indication information for indicating a time for transmitting the first transmission content; and
ninth indication information for indicating a power for transmitting the first transmission content.

44. The method of claim 43, wherein the seventh indication information comprises:
one or more frequencies for transmitting the first transmission content; and/or,
one or more indexes corresponding to the one or more frequencies for transmitting the first transmission content.

45. The method of claim 43 or 44, wherein the eighth indication information comprises indication information for indicating one or more of:
a moment to start transmitting the first transmission content;
an index corresponding to the moment to start transmitting the first transmission content;
a duration for transmission of the first transmission content;
a time-domain position of a first one of resources for transmitting the first transmission content; and
a number of the resources for transmitting the first transmission content.

46. The method of claim 45, wherein
in a case where the eighth indication information includes indication information for indicating the moment to start transmitting the first transmission content and the duration, the moment to start transmitting the first transmission content and the duration are indicated by joint coding;
in a case where the eighth indication information includes indication information for indicating the time-domain position of the first resource and the number of the resources, the time-domain position of the first resource and the number of the resources are indicated by joint coding.

47. The method of claim 45 or 46, wherein
the moment to start transmitting the first transmission content is related to a fourth time gap and a time slot where the first information is located, the fourth time gap being comprised in the eighth indication information.

48. The method of any one of claims 43 to 47, wherein the ninth indication information comprises one or more of:
the power for transmitting the first transmission content;
a power range for transmission of the first transmission content;
an index corresponding to the power for transmitting the first transmission content;
an index corresponding to the power range for transmission of the first transmission content; and
a third adjustment value relative to a reference transmission power, the power for transmitting the first transmission content being related to the third adjustment value.

49. The method of any one of claims 26 to 48, wherein
the first information is first Downlink Control Information (DCI), a number of bits of the first DCI is the same as a number of bits of second DCI currently configured for the first terminal device, and the first DCI and the second DCI are scrambled by different Radio Network Temporary Identifiers (RNTIs); and the second DCI is uplink DCI, downlink DCI or sidelink DCI.

50. The method of any one of claims 26 to 48, wherein
the first information is configured grant, and the first information further comprises tenth indication information, the tenth indication information being used to indicate a repetition period in the time domain of resources for transmitting the first transmission content.

51. A communication method, applied to a second terminal device, the method comprising:
receiving second information from a network device, wherein the second information is used by the second terminal device to receive a reflection signal from an Ambient Internet of Things (A-IoT) device.

52. The method of claim 51, wherein the second information comprises:
first indication information for indicating a frequency for transmitting a carrier by a first terminal device; and/or
second indication information for indicating a time for transmitting the carrier by the first terminal device,
the carrier is used by the A-IoT device to transmit the reflection signal to the second terminal device.

53. The method of claim 52, wherein the first indication information comprises:
one or more frequencies for transmitting the carrier by the first terminal device; and/or
one or more indexes corresponding to the one or more frequencies for transmitting the carrier by the first terminal device.

54. The method of claim 52 or 53, wherein the second indication information comprises indication information for indicating one or more of:
a moment when the first terminal device starts transmitting the carrier;
an index corresponding to the moment when the first terminal device starts transmitting the carrier;
a duration for which the first terminal device transmits the carrier;
a time-domain position of a first one of resources for transmitting the carrier by the first terminal device; and
a number of the resources for transmitting the carrier by the first terminal device.

55. The method of claim 54, wherein
in a case where the second indication information includes indication information for indicating the moment to start transmitting the carrier and the duration for transmission of the carrier, the moment to start transmitting the carrier and the duration for transmission of the carrier are indicated by joint coding;
in a case where the second indication information includes indication information for indicating the time-domain position of the first one of resources for transmitting the carrier and the number of the resources for transmitting the carrier, the time-domain position of the first one of resources for transmitting the carrier and the number of the resources for transmitting the carrier are indicated by joint coding.

56. The method of claim 54 or 55, wherein
the moment when the first terminal device starts transmitting the carrier is related to a second time gap and a time slot where the second information is located, the second time gap being comprised in the second indication information.

57. The method of any one of claims 52 to 56, wherein the second information is further used by the second terminal device to receive one or more of the carrier, data and a signal transmitted by the first terminal device, and the second information further comprises:
fourth indication information for indicating a frequency for transmitting the data or the signal by the first terminal device; and/or
fifth indication information for indicating a time for transmitting the data or the signal by the first terminal device.

58. The method of claim 57, wherein the fourth indication information comprises:
one or more frequencies for transmitting the data or the signal by the first terminal device; and/or
one or more indexes corresponding to the one or more frequencies for transmitting the data or the signal by the first terminal device.

59. The method of claim 57 or 58, wherein the fifth indication information comprises indication information for indicating one or more of:
a moment when the first terminal device starts transmitting the data or the signal;
an index corresponding to the moment when the first terminal device starts transmitting the data or the signal;
a duration for which the first terminal device transmits the data or the signal;
a time-domain position of a first one of resources for transmitting the data or the signal by the first terminal device; and
a number of the resources for transmitting the data or the signal by the first terminal device.

60. The method of claim 59, wherein
in a case where the fifth indication information includes indication information for indicating the moment to start transmitting the data or the signal and the duration for transmission of the data or the signal, the moment to start transmitting the data or the signal and the duration for transmission of the data or the signal are indicated by joint coding;
in a case where the fifth indication information includes indication information for indicating the time-domain position of the first one of resources for transmitting the data or the signal and the number of the resources for transmitting the data or the signal, the time-domain position of the first one of resources for transmitting the data or the signal and the number of the resources for transmitting the data or the signal are indicated by joint coding.

61. The method of claim 59 or 60, wherein
the moment when the first terminal device starts transmitting the data or the signal is related to a third time gap and a time slot where the second information is located, the third time gap being comprised in the fifth indication information.

62. The method of claim 51, wherein the second information comprises:
eleventh indication information for indicating a frequency for receiving the reflection signal; and/or
twelfth indication information for indicating a time for receiving the reflection signal.

63. The method of claim 62, wherein the eleventh indication information comprises:
one or more frequencies for receiving the reflection signal; and/or
one or more indexes corresponding to the one or more frequencies for receiving the reflection signal.

64. The method of claim 62 or 63, wherein the twelfth indication information comprises indication information for indicating one or more of:
a moment to start receiving the reflection signal;
an index corresponding to the moment to start receiving the reflection signal;
a duration for reception of the reflection signal;
a time-domain position of a first one of resources for receiving the reflection signal; and
a number of the resources for receiving the reflection signal.

65. The method of claim 64, wherein
in a case where the twelfth indication information includes indication information for indicating the moment to start receiving the reflection signal and the duration for reception of the reflection signal, the moment to start receiving the reflection signal and the duration for reception of the reflection signal are indicated by joint coding;
in a case where the twelfth indication information includes indication information for indicating the time-domain position of the first one of the resources for receiving the reflection signal and the number of the resources for receiving the reflection signal, the time-domain position of the first one of the resources for receiving the reflection signal and the number of the resources for receiving the reflection signal are indicated by joint coding.

66. The method of claim 64 or 65, wherein
the moment to start receiving the reflection signal is related to a fifth time gap and a time slot where the second information is located, the fifth time gap being comprised in the twelfth indication information.

67. The method of any one of claims 62 to 66, wherein
the second information is further used by the second terminal device to receive the carrier transmitted by the first terminal device,
wherein a frequency for receiving the carrier is the same as the frequency for receiving the reflection signal;
a time for receiving the carrier is the same as the time for receiving the reflection signal;
the carrier is used by the A-IoT device to transmit the reflection signal to the second terminal device.

68. The method of any one of claims 62 to 67, wherein the second information is further used by the second terminal device to receive data or a signal transmitted by the first terminal device, and the second information further comprises:
thirteenth indication information for indicating a frequency for receiving the data or the signal; and/or
fourteenth indication information for indicating a time for receiving the data or the signal.

69. The method of claim 68, wherein the thirteenth indication information comprises:
one or more frequencies for receiving the data or the signal; and/or
one or more indexes corresponding to the one or more frequencies for receiving the data or the signal.

70. The method of claim 68 or 69, wherein the fourteenth indication information comprises indication information for indicating one or more of:
a moment to start receiving the data or the signal;
an index corresponding to the moment to start receiving the data or the signal;
a duration for reception of the data or the signal;
a time-domain position of a first one of resources for receiving the data or the signal; and
a number of the resources for receiving the data or the signal.

71. The method of claim 70, wherein
in a case where the fourteenth indication information includes indication information for indicating the moment to start receiving the data or the signal and the duration for reception of the data or the signal, the moment to start receiving the data or the signal and the duration for reception of the data or the signal are indicated by joint coding;
in a case where the fourteenth indication information includes indication information for indicating the time-domain position of the first one of the resources for receiving the data or the signal and the number of the resources for receiving the data or the signal, the time-domain position of the first one of the resources for receiving the data or the signal and the number of the resources for receiving the data or the signal are indicated by joint coding.

72. The method of claim 70 or 71, wherein
the moment to start receiving the data or the signal is related to a sixth time gap and a time slot where the second information is located, the sixth time gap being comprised in the fourteenth indication information.

73. The method of any one of claims 57 to 61 and 67 to 72, wherein the second information further comprises:
fifteenth indication information for indicating a power for transmitting one or more of the carrier, the data and the signal by the first terminal device.

74. The method of any one of claims 51 to 73, wherein
the second information is third Downlink Control Information (DCI), a number of bits of the third DCI is the same as a number of bits of second DCI currently configured for the second terminal device, and the third DCI and the second DCI are scrambled by different Radio Network Temporary Identifiers (RNTIs); and the second DCI is uplink DCI, downlink DCI or sidelink DCI.

75. The method of any one of claims 51 to 73, wherein
the second information is configured grant, and the second information includes indication information for indicating one or more of:
a repetition period in the time domain of resources for transmitting a carrier by the first terminal device, the carrier is used by the A-IoT device to transmit the reflection signal to the second terminal device;
a repetition period in the time domain of resources for transmitting data or a signal by the first terminal device;
a repetition period in the time domain of resources for receiving the reflection signal, a repetition period in the time domain of resources for receiving the carrier is the same as the repetition period in the time domain of the resources for receiving the reflection signal; and
a repetition period in the time domain of resources for receiving the data or the signal transmitted by the first terminal device.

76. A communication method, applied to a network device, the method comprising:
transmitting second information to a second terminal device, wherein the second information is used by the second terminal device to receive a reflection signal from an Ambient Internet of Things (A-IoT) device.

77. The method of claim 76, wherein the second information comprises:
first indication information for indicating a frequency for transmitting a carrier by a first terminal device; and/or
second indication information for indicating a time for transmitting the carrier by the first terminal device,
the carrier is used by the A-IoT device to transmit the reflection signal to the second terminal device.

78. The method of claim 77, wherein the first indication information comprises:
one or more frequencies for transmitting the carrier by the first terminal device; and/or
one or more indexes corresponding to the one or more frequencies for transmitting the carrier by the first terminal device.

79. The method of claim 77 or 78, wherein the second indication information comprises indication information for indicating one or more of:
a moment when the first terminal device starts transmitting the carrier;
an index corresponding to the moment when the first terminal device starts transmitting the carrier;
a duration for which the first terminal device transmits the carrier;
a time-domain position of a first one of resources for transmitting the carrier by the first terminal device; and
a number of the resources for transmitting the carrier by the first terminal device.

80. The method of claim 79, wherein
in a case where the second indication information includes indication information for indicating the moment to start transmitting the carrier and the duration for transmission of the carrier, the moment to start transmitting the carrier and the duration for transmission of the carrier are indicated by joint coding;
in a case where the second indication information includes indication information for indicating the time-domain position of the first one of resources for transmitting the carrier and the number of the resources for transmitting the carrier, the time-domain position of the first one of resources for transmitting the carrier and the number of the resources for transmitting the carrier are indicated by joint coding.

81. The method of claim 79 or 80, wherein
the moment when the first terminal device starts transmitting the carrier is related to a second time gap and a time slot where the second information is located, the second time gap being comprised in the second indication information.

82. The method of any one of claims 77 to 81, wherein the second information is further used by the second terminal device to receive one or more of the carrier, data and a signal transmitted by the first terminal device, and the second information further comprises:
fourth indication information for indicating a frequency for transmitting the data or the signal by the first terminal device; and/or
fifth indication information for indicating a time for transmitting the data or the signal by the first terminal device.

83. The method of claim 82, wherein the fourth indication information comprises:
one or more frequencies for transmitting the data or the signal by the first terminal device; and/or
one or more indexes corresponding to the one or more frequencies for transmitting the data or the signal by the first terminal device.

84. The method of claim 82 or 83, wherein the fifth indication information comprises indication information for indicating one or more of:
a moment when the first terminal device starts transmitting the data or the signal;
an index corresponding to the moment when the first terminal device starts transmitting the data or the signal;
a duration for which the first terminal device transmits the data or the signal;
a time-domain position of a first one of resources for transmitting the data or the signal by the first terminal device; and
a number of the resources for transmitting the data or the signal by the first terminal device.

85. The method of claim 84, wherein
in a case where the fifth indication information includes indication information for indicating the moment to start transmitting the data or the signal and the duration for transmission of the data or the signal, the moment to start transmitting the data or the signal and the duration for transmission of the data or the signal are indicated by joint coding;
in a case where the fifth indication information includes indication information for indicating the time-domain position of the first one of resources for transmitting the data or the signal and the number of the resources for transmitting the data or the signal, the time-domain position of the first one of resources for transmitting the data or the signal and the number of the resources for transmitting the data or the signal are indicated by joint coding.

86. The method of claim 84 or 85, wherein
the moment when the first terminal device starts transmitting the data or the signal is related to a third time gap and a time slot where the second information is located, the third time gap being comprised in the fifth indication information.

87. The method of claim 76, wherein the second information comprises:
eleventh indication information for indicating a frequency for receiving the reflection signal; and/or
twelfth indication information for indicating a time for receiving the reflection signal.

88. The method of claim 87, wherein the eleventh indication information comprises:
one or more frequencies for receiving the reflection signal; and/or
one or more indexes corresponding to the one or more frequencies for receiving the reflection signal.

89. The method of claim 87 or 88, wherein the twelfth indication information comprises indication information for indicating one or more of:
a moment to start receiving the reflection signal;
an index corresponding to the moment to start receiving the reflection signal;
a duration for reception of the reflection signal;
a time-domain position of a first one of resources for receiving the reflection signal; and
a number of the resources for receiving the reflection signal.

90. The method of claim 89, wherein
in a case where the twelfth indication information includes indication information for indicating the moment to start receiving the reflection signal and the duration for reception of the reflection signal, the moment to start receiving the reflection signal and the duration for reception of the reflection signal are indicated by joint coding;
in a case where the twelfth indication information includes indication information for indicating the time-domain position of the first one of the resources for receiving the reflection signal and the number of the resources for receiving the reflection signal, the time-domain position of the first one of the resources for receiving the reflection signal and the number of the resources for receiving the reflection signal are indicated by joint coding.

91. The method of claim 89 or 90, wherein
the moment to start receiving the reflection signal is related to a fifth time gap and a time slot where the second information is located, the fifth time gap being comprised in the twelfth indication information.

92. The method of any one of claims 87 to 91, wherein
the second information is further used by the second terminal device to receive the carrier transmitted by the first terminal device,
wherein a frequency for receiving the carrier is the same as the frequency for receiving the reflection signal;
a time for receiving the carrier is the same as the time for receiving the reflection signal;
the carrier is used by the A-IoT device to transmit the reflection signal to the second terminal device.

93. The method of any one of claims 87 to 92, wherein the second information is further used by the second terminal device to receive data or a signal transmitted by the first terminal device, and the second information further comprises:
thirteenth indication information for indicating a frequency for receiving the data or the signal; and/or
fourteenth indication information for indicating a time for receiving the data or the signal.

94. The method of claim 93, wherein the thirteenth indication information comprises:
one or more frequencies for receiving the data or the signal; and/or
one or more indexes corresponding to the one or more frequencies for receiving the data or the signal.

95. The method of claim 93 or 94, wherein the fourteenth indication information comprises indication information for indicating one or more of:
a moment to start receiving the data or the signal;
an index corresponding to the moment to start receiving the data or the signal;
a duration for reception of the data or the signal;
a time-domain position of a first one of resources for receiving the data or the signal; and
a number of the resources for receiving the data or the signal.

96. The method of claim 95, wherein
in a case where the fourteenth indication information includes indication information for indicating the moment to start receiving the data or the signal and the duration for reception of the data or the signal, the moment to start receiving the data or the signal and the duration for reception of the data or the signal are indicated by joint coding;
in a case where the fourteenth indication information includes indication information for indicating the time-domain position of the first one of the resources for receiving the data or the signal and the number of the resources for receiving the data or the signal, the time-domain position of the first one of the resources for receiving the data or the signal and the number of the resources for receiving the data or the signal are indicated by joint coding.

97. The method of claim 95 or 96, wherein
the moment to start receiving the data or the signal is related to a sixth time gap and a time slot where the second information is located, the sixth time gap being comprised in the fourteenth indication information.

98. The method of any one of claims 82 to 86 and 92 to 97, wherein the second information further comprises:
fifteenth indication information for indicating a power for transmitting one or more of the carrier, the data and the signal by the first terminal device.

99. The method of any one of claims 76 to 98, wherein
the second information is third Downlink Control Information (DCI), a number of bits of the third DCI is the same as a number of bits of second DCI currently configured for the second terminal device, and the third DCI and the second DCI are scrambled by different Radio Network Temporary Identifiers (RNTIs); and the second DCI is uplink DCI, downlink DCI or sidelink DCI.

100. The method of any one of claims 76 to 98, wherein
the second information is configured grant, and the second information includes indication information for indicating one or more of:
a repetition period in the time domain of resources for transmitting a carrier by the first terminal device, the carrier is used by the A-IoT device to transmit the reflection signal to the second terminal device;
a repetition period in the time domain of resources for transmitting data or a signal by the first terminal device;
a repetition period in the time domain of resources for receiving the reflection signal, a repetition period in the time domain of resources for receiving the carrier is the same as the repetition period in the time domain of the resources for receiving the reflection signal; and
a repetition period in the time domain of resources for receiving the data or the signal transmitted by the first terminal device.

101. A communication apparatus, comprising:
a first receiving unit, configured to receive first information from a network device, wherein the first information is used by the apparatus to transmit a first transmission content to an Ambient Internet of Things (A-IoT) device, the first transmission content comprising one or more of: a carrier, data, and a signal.

102. A communication apparatus, comprising:
a first transmitting unit configured to transmit first information to a first terminal device, wherein the first information is used by the first terminal device to transmit a first transmission content to an Ambient Internet of Things (A-IoT) device, the first transmission content comprising one or more of: a carrier, data, and a signal.

103. A communication apparatus, comprising:
a second receiving unit configured to receive second information from a network device, wherein the second information is used by the apparatus to receive a reflection signal from an Ambient Internet of Things (A-IoT) device.

104. A communication apparatus, comprising:
a second transmitting unit configured to transmit second information to a second terminal device, wherein the second information is used by the second terminal device to receive a reflection signal from an Ambient Internet of Things (A-IoT) device.

105. A communication device, comprising:
a memory configured to store a computer program;
a processor, connected to the memory, configured to invoke and execute the computer program from the memory to perform the method of any one of claims 1 to 25, or the method of any one of claims 26 to 50, or the method of any one of claims 51 to 75, or the method of any one of claims 76 to 100; and
a transceiver configured to receive and send signals in the process of sending and receiving information to or from another device.

106. A chip, comprising:
a processor, configured to invoke and execute a computer program from a memory to cause a device on which the chip is mounted to perform the method of any one of claims 1 to 25, or the method of any one of claims 26 to 50, or the method of any one of claims 51 to 75, or the method of any one of claims 76 to 100; and
a transceiver, configured to receive and send signals in the process of sending and receiving information to or from the device or chip.

107. A computer-readable storage medium for storing a computer program that causes a computer to perform the method of any one of claims 1 to 25, or the method of any one of claims 26 to 50, or the method of any one of claims 51 to 75, or the method of any one of claims 76 to 100.
